# EUROPEAN PATENT SPECIFICATION

(11) **EP 2 966 918 B1**
(45) Date of publication and mention of the grant of the patent: **27.12.2017**
(21) Application number: 13880223.6
(22) Date of filing: 26.07.2013
(51) Int. Cl.: H04W 72/12, H04W 52/02, H04W 52/28, H04W 72/04, H04W 74/08

(54) **METHOD FOR CONTROLLING REQUEST ON UPLINK AUTHORIZATION RESOURCE, USER EQUIPMENT AND BASE STATION**
VERFAHREN ZUR STEUERUNG DER ANFRAGE FÜR EINE UPLINK-AUTORISIERUNGSRESSOURCE, BENUTZERVORRICHTUNG UND BASISSTATION
PROCÉDÉ DE COMMANDE DE REQUÊTE DE RESSOURCE D'AUTORISATION DE LIAISON MONTANTE, ÉQUIPEMENT UTILISATEUR ET STATION DE BASE

(30) Priority: 29.03.2013 WO PCT/CN2013/073454
(43) Date of publication of application: 13.01.2016
(73) Proprietor: Huawei Technologies Co., Ltd., Longgang District Shenzhen, Guangdong 518129 (CN)
(72) Inventor: HU, Zhenxing, Shenzhen Guangdong 518129 (CN); QUAN, Wei, Shenzhen Guangdong 518129 (CN); ZHANG, Jian, Shenzhen Guangdong 518129 (CN)
(74) Representative: Pfenning, Meinig & Partner mbB
(86) International application number: PCT/CN2013/080201
(87) International publication number: WO 2014/153907

(56) References cited:
- EP-A2- 2 114 102
- WO-A1-2011/136716
- WO-A2-97/50267
- CN-A- 102 413 152
- CN-A- 102 523 559
- CN-A- 102 638 880
- GB-A- 2 315 386
- US-A1- 2005 182 826
- US-A1- 2006 009 250
- US-A1- 2012 239 812

## Description

### TECHNICAL FIELD

The present invention relates to communications technologies, and in particular, to a method for controlling an uplink grant resource request, user equipment, and a base station.

### BACKGROUND

In a current long term evolution (Long Term Evolution, LTE) communications system, if user equipment (User Equipment, UE) in a connected state has uplink data to send but has no uplink grant, the user equipment needs to trigger sending of a schedule request (Schedule Request, SR) or random access to apply for an uplink grant.

With development of wireless communications, wireless communications is applied to more scenarios. Services in some application scenarios, such as an intelligent meter reading service or instant messaging services, are not sensitive to time delays, and generally use a user datagram protocol (User Datagram Protocol, UDP) bearer; besides, small data packets, for example, data packets smaller than 1000 bytes, are generated frequently. If a UE in such services performs an operation in a same way as a current UE, that is, the UE triggers sending of an SR or triggers a random access operation upon data arrival, the UE can hardly enter a inactive state, which results in high power consumption. For example, to save electricity, a discontinuous reception (discontinuous reception, DRX) function is configured on a UE in a connected state. When the DRX function is configured on the UE, the UE may be in an active time or an inactive time. When the UE is in an inactive time, the UE turns off a transceiving module and does not send or receive data, thereby achieving the purpose of saving electricity. However, in the foregoing services that frequently generate small data packets, due to frequent arrival of data packets, especially, frequent arrival of small data packets, sending of an SR or random access is triggered frequently, and consequently the UE cannot enter an inactive time, leading to high power consumption.

EP2114102A2 provides a method for performing cell reselection in a mobile communication system, which calculates the cell reselection values of the serving cell and the adjacent cells according to the cell reselection parameters broadcast by the base station when the Access Class barring check fails.

US2012/239812A1 provides a method for batching resource requests in a portable computing device having a plurality of resources, the method comprising: instantiating a plurality of nodes, each node having at least one of the plurality of resources, the plurality of resources defined by a directed acyclic graph, wherein each node of the directed acyclic graph represents an encapsulation of functionality of one or more of the plurality of resources, each edge of the directed acyclic graph represents a client request, and adjacent nodes of the directed acyclic graph represent resource dependencies; and providing a transaction of resource requests indicating two or more resources of the plurality of resources defined by the directed acyclic graph.

GB2315386A provides a method of controlling the traffic flow in a cellular radio system, in which the traffic load on each base station of the system continuously monitored and a parameter adapted to control the access of new mobile stations to a given base station is varied continuously with the load in that base station.

US2006/0009250A1 provides an apparatus and method for determining access power in a mobile communication system.

### SUMMARY

In view of this, embodiments of the present invention provide a method for controlling an uplink grant resource request, user equipment, and a base station, so as to achieve the purpose of saving electricity used by UE.

According to a first aspect, an embodiment of the present invention provides a method for controlling an uplink grant resource request, including:
acquiring, by user equipment, UE, control information, wherein the control information is used for instructing to reduce a quantity of times of processing an uplink grant resource request, and the uplink grant resource request includes a schedule request, SR, and the control information include a scheduled time; and
   starting, by the UE, a timer according to the scheduled time, when the UE determines that the UE has to-be-transmitted uplink data, or when the UE determines that a logical channel of the UE has to-be-transmitted uplink data,
wherein the logical channel is a logical channel configured with the control information or a logical channel in a logical channel group configured with the control information; and
when the timer expires, triggering the uplink grant resource request, or when the timer does not expire, skipping triggering the uplink grant resource request.With reference to the first aspect, in a first possible implementation manner of the first aspect, the control information is an indication to reduce a quantity of times of processing the uplink grant resource request; and
the controlling, by the UE according to the control information, a procedure of processing the uplink grant resource request includes:
   if the UE is in an inactive time, determining, by the UE according to the indication, not to trigger the uplink grant resource request, or if the UE is in an active time, determining, by the UE according to the indication, to trigger the uplink grant resource request; or,
   if the UE is in an inactive time, ending, by the UE according to the indication, a sending decision processing procedure of the uplink grant resource request, where the sending decision processing procedure is in a current transmission time interval TTI, or if the UE is in an active time, continuing, by the UE according to the indication, the sending decision processing procedure of the uplink grant resource request, where the sending decision processing procedure is in a current TTI; or
   if a logical channel that triggers buffer status reporting BSR is a logical channel configured with the control information or a logical channel in a logical channel group configured with the control information, and if the UE is in an inactive time, setting, by the UE, a SR that has been triggered by the BSR to be invalid in a current TTI; or if the UE is in an active time, setting, by the UE, a SR that has been triggered by the BSR to be valid in a current TTI.

With reference to the first possible implementation manner of the first aspect, in a second possible implementation manner of the first aspect, the indication is a scheduled time, and
the determining, by the UE according to the indication, not to trigger the uplink grant resource request if the UE is in an inactive time, or determining, by the UE according to the indication, to trigger the uplink grant resource request if the UE is in an active time includes:
if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer according to the scheduled time; and
before the timer expires, if the UE determines that the UE is in an inactive time, determining, by the UE, not to trigger the uplink grant resource request, or if the UE determines that the UE is in an active time, determining, by the UE, to trigger the uplink grant resource request, and when the timer expires, determining, by the UE, to trigger the uplink grant resource request; or,
the uplink grant resource request is the uplink grant resource request that is implemented by sending an SR, the indication is a period repetition coefficient, and
the determining, by the UE according to the indication, not to trigger the uplink grant resource request if the UE is in an inactive time, or determining, by the UE according to the indication, to trigger the uplink grant resource request if the UE is in an active time includes:
   if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer, where a scheduled time of the timer is the period repetition coefficient multiplied by an SR period; and
   before the timer expires, if the UE determines that the UE is in an inactive time, determining, by the UE, not to trigger the uplink grant resource request that is implemented by sending an SR, or if the UE determines that the UE is in an active time, determining, by the UE, to trigger the uplink grant resource request that is implemented by sending an SR; and when the timer expires, determining, by the UE, to trigger the uplink grant resource request.

With reference to the first possible implementation manner of the first aspect, in a third possible implementation manner of the first aspect, the indication is a scheduled time, and
before the determining, by the UE according to the indication, not to trigger the uplink grant resource request if the UE is in an inactive time, or determining, by the UE according to the indication, to trigger the uplink grant resource request if the UE is in an active time, the method further includes:
determining, by the UE, that the UE has to-be-transmitted uplink data, or determining, by the UE, that a logical channel of the UE has to-be-transmitted uplink data, where the logical channel is a logical channel configured with the control information or a logical channel in a logical channel group configured with the control information, and determining, by the UE, that a data amount of the uplink data is less than the data amount threshold.

With reference to the first possible implementation manner of the first aspect, in a fourth possible implementation manner of the first aspect, the indication is a scheduled time, and
the ending, by the UE according to the indication, a sending decision processing procedure of the uplink grant resource request if the UE is in an inactive time, where the sending decision processing procedure is in a current TTI, or continuing, by the UE according to the indication, a sending decision processing procedure of the uplink grant resource request if the UE is in an active time, where the sending decision processing procedure is in a current TTI, includes:
if an SR counter is equal to 0, starting a timer according to the scheduled time; and before the timer expires, if the UE is in an inactive time, ending, by the UE, the sending decision processing procedure of the uplink grant resource request that is implemented by means of an SR, where the sending decision processing procedure is in the current TTI, or if the UE is in an active time, continuing, by the UE, the sending decision processing procedure of the uplink grant resource request that is implemented by means of an SR, where the sending decision processing procedure is in the current TTI; and when the timer expires, continuing, by the UE, the sending decision processing procedure of the uplink grant resource request that is implemented by means of an SR, where the sending decision processing procedure is in the current TTI.

With reference to the first possible implementation manner of the first aspect, in a fifth possible implementation manner of the first aspect, the uplink grant resource request is the uplink grant resource request that is implemented by sending an SR, the indication is a period repetition coefficient, and
the ending, by the UE according to the indication, a sending decision processing procedure of the uplink grant resource request if the UE is in an inactive time, where the sending decision processing procedure is in a current transmission time interval TTI, or continuing, by the UE according to the indication, a sending decision processing procedure of the uplink grant resource request if the UE is in an active time, where the sending decision processing procedure is in a TTI, includes:
starting from a TTI in which the SR is triggered, in TTIs whose quantity is the period repetition coefficient multiplied by an SR period, if the UE is in an inactive time, ending, by the UE, the sending decision processing procedure of the uplink grant resource request that is implemented by means of an SR, where the sending decision processing procedure is in the current TTI, or if the UE is in an active time, continuing, by the UE, the sending decision processing procedure of the uplink grant resource request that is implemented by means of an SR, where the sending decision processing procedure is in the current TTI.

With reference to the first aspect, in a sixth possible implementation manner of the first aspect, the control information is an indication to reduce a quantity of times of processing the uplink grant resource request; and
the controlling, by the UE according to the control information, a procedure of processing the uplink grant resource request includes:
if the UE determines that an on-duration timer of the UE is not running, determining, by the UE according to the indication, not to trigger the uplink grant resource request, or if the UE determines that an on-duration timer of the UE is running, determining, by the UE according to the indication, to trigger the uplink grant resource request; or
if the UE determines that an on-duration timer of the UE is not running, ending, by the UE according to the indication, a sending decision processing procedure of the uplink grant resource request, where the sending decision processing procedure is in a current transmission time interval TTI, or if the UE determines that an on-duration timer of the UE is running, continuing, by the UE according to the indication, a sending decision processing procedure of the uplink grant resource request, where the sending decision processing procedure is in a current transmission time interval TTI; or
if the UE determines that an on-duration timer of the UE is not running and if a logical channel that triggers buffer status reporting BSR is a logical channel configured with the control information or a logical channel that triggers BSR is a logical channel in a logical channel group configured with the control information, setting, by the UE, a SR that has been triggered by the BSR to be invalid in a current transmission time interval TTI, or if the UE determines that an on-duration timer of the UE is running and if a logical channel that triggers buffer status reporting BSR is a logical channel configured with the control information or a logical channel that triggers, BSR is a logical channel in a logical channel group configured with the control information, setting, by the UE, a SR that has been triggered by the BSR to be valid in a current TTI.

With reference to the sixth possible implementation manner of the first aspect, in a seventh possible implementation manner of the first aspect, the indication is a scheduled time, and
the determining, by the UE according to the indication, not to trigger the uplink grant resource request if the UE determines that an on-duration timer of the UE is not running, or determining, by the UE according to the indication, to trigger the uplink grant resource request if the UE determines that an on-duration timer of the UE is running includes:
if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer according to the scheduled time; and
before the timer expires, if the UE determines that the on-duration timer of the UE is not running, determining, by the UE, not to trigger the uplink grant resource request that is implemented by sending an SR, or if the UE determines that the on-duration timer of the UE is running, determining, by the UE, to trigger the uplink grant resource request that is implemented by sending an SR; and when the timer expires, determining, by the UE, to trigger the uplink grant resource request that is implemented by sending an SR; or,
the uplink grant resource request is the uplink grant resource request that is implemented by sending an SR, the indication is a period repetition coefficient, and
the determining, by the UE according to the indication, not to trigger the uplink grant resource request if the UE determines that an on-duration timer of the UE is not running, or determining, by the UE according to the indication, to trigger the uplink grant resource request if the UE determines that an on-duration timer of the UE is running includes:
   if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer, where a scheduled time of the timer is the period repetition coefficient multiplied by an SR period; and
   before the timer expires, if the UE determines that the on-duration timer of the UE is not running, determining, by the UE, not to trigger the uplink grant resource request that is implemented by sending an SR, or if the UE determines that the on-duration timer of the UE is running, determining, by the UE, to trigger the uplink grant resource request that is implemented by sending an SR; and when the timer expires, determining, by the UE, to trigger the uplink grant resource request that is implemented by sending an SR.

With reference to the sixth possible implementation manner of the first aspect, in an eighth possible implementation manner of the first aspect, the indication is a data amount threshold; and
before the determining, by the UE according to the indication, not to trigger the uplink grant resource request if the UE is in an inactive time, or determining, by the UE according to the indication, to trigger the uplink grant resource request if the UE is in an active time, the method further includes:
determining, by the UE, that the UE has to-be-transmitted uplink data, or determining, by the UE, that a logical channel of the UE has to-be-transmitted uplink data, where the logical channel is a logical channel configured with the control information or a logical channel in a logical channel group configured with the control information, and determining, by the UE, that a data amount of the uplink data is less than the data amount threshold.

With reference to the sixth possible implementation manner of the first aspect, in a ninth possible implementation manner of the first aspect, the indication is a scheduled time; and
the ending, by the UE according to the indication, a sending decision processing procedure of the uplink grant resource request if the UE determines that an on-duration timer of the UE is not running, where the sending decision processing procedure is in a current transmission time interval TTI, or continuing, by the UE according to the indication, a sending decision processing procedure of the uplink grant resource request if the UE determines that an on-duration timer of the UE is running, where the sending decision processing procedure is in a current transmission time interval TTI, includes:
if an SR counter is equal to 0, starting a timer according to the scheduled time; and
before the timer expires, if the UE determines that the on-duration timer of the UE is not running, ending, by the UE, the sending decision processing procedure of the uplink grant resource request that is implemented by means of an SR, where the sending decision processing procedure is in the current TTI, or if the UE determines that the on-duration timer of the UE is running, continuing, by the UE, the sending decision processing procedure of the uplink grant resource request that is implemented by means of an SR, where the sending decision processing procedure is in the current TTI; and when the timer expires, continuing, by the UE, the sending decision processing procedure of the uplink grant resource request that is implemented by means of an SR, where the sending decision processing procedure is in the current TTI.

With reference to the sixth possible implementation manner of the first aspect, in a tenth possible implementation manner of the first aspect, the uplink grant resource request is the uplink grant resource request that is implemented by sending an SR, the indication is a period repetition coefficient, and
the ending, by the UE according to the indication, a sending decision processing procedure of the uplink grant resource request if the UE determines that an on-duration timer of the UE is not running, where the sending decision processing procedure is in a current transmission time interval TTI, or continuing, by the UE according to the indication, a sending decision processing procedure of the uplink grant resource request if the UE determines that an on-duration timer of the UE is running, where the sending decision processing procedure is in a current transmission time interval TTI, includes:
starting from a TTI in which the SR is triggered, in TTIs whose quantity is the period repetition coefficient multiplied by an SR period, if the UE determines that the on-duration timer of the UE is not running, ending, by the UE, the sending decision processing procedure that is in the current TTI and implemented by means of an SR, or if the UE determines that the on-duration timer of the UE is running, continuing, by the UE, the sending decision processing procedure that is in the current TTI and implemented by means of an SR.

With reference to the first aspect, in an eleventh possible implementation manner of the first aspect, the control information is a scheduled time, and
the controlling, by the UE according to the control information, a procedure of processing the uplink grant resource request includes:
if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer according to the scheduled time; and
if the timer expires, triggering the uplink grant resource request, or if the timer does not expire, skipping triggering the uplink grant resource request; or,
the uplink grant resource request is the uplink grant resource request that is implemented by sending an SR, the control information is a scheduled time, and
the controlling, by the UE according to the control information, a procedure of processing the uplink grant resource request includes:
starting from a TTI in which the SR is triggered, in any TTI among TTIs whose quantity is the period repetition coefficient multiplied by an SR period, continuing, by the UE, a sending decision processing procedure that is in the any TTI and implemented by means of an SR, and in other TTIs, ending, by the UE, sending decision processing procedures that are in the other TTIs and implemented by means of an SR, where the other TTIs are TTIs, except the any TTI, among the TTIs whose quantity is the period repetition coefficient multiplied by the SR period starting from the TTI in which the SR is triggered; or,
the uplink grant resource request is the uplink grant resource request that is implemented by sending an SR, the control information is a period repetition coefficient, and
the controlling, by the UE according to the control information, a procedure of processing the uplink grant resource request includes:
   if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer, where a scheduled time of the timer is the period repetition coefficient multiplied by an SR period; and before the timer expires, determining, by the UE, not to trigger the uplink grant resource request that is implemented by sending an SR, and when the timer expires, determining, by the UE, to trigger the uplink grant resource request that is implemented by sending an SR; or,
   the control information is a scheduled time; and
the controlling, by the UE according to the control information, a procedure of processing the uplink grant resource request includes:
   if an SR counter is equal to 0, starting, by the UE, a timer according to the scheduled time; and before the timer expires, ending, by the UE, a sending decision processing procedure of the uplink resource request that is implemented by means of an SR, where the sending decision processing procedure is in a current transmission time interval TTI, and when the timer expires, continuing, by the UE, the sending decision processing procedure of the uplink resource request that is implemented by means of an SR, where the sending decision processing procedure is in the current TTI; or,
   the control information is a scheduled time; and
the controlling, by the UE according to the control information, a procedure of processing the uplink grant resource request includes:
   if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, and if a current TTI is a TTI in which BSR triggers the SR, starting, by the UE, a timer according to the scheduled time, before the timer expires, setting, by the UE, the SR to be an invalid SR in the current TTI, and when the timer expires, setting, by the UE, the SR to be a valid SR in the current TTI; or,
   the control information is a period repetition coefficient, and
the controlling, by the UE according to the control information, a procedure of processing the uplink grant resource request includes:
   if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, and if a current TTI is a TTI in which BSR triggers the SR, starting, by the UE, a timer, where a scheduled time of the timer is the period repetition coefficient multiplied by an SR period, before the timer expires, setting, by the UE, the SR to be an invalid SR in the current TTI, and when the timer expires, setting, by the UE, the SR to be a valid SR in the current TTI; or,
   the control information is a period repetition coefficient, and
the controlling, by the UE according to the control information, a procedure of processing the uplink grant resource request includes:
   if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting from a TTI in which the SR is triggered, in any TTI among TTIs whose quantity is the period repetition coefficient multiplied by an SR period, setting, by the UE, the SR triggered by BSR in the any TTI to be valid, and in other TTIs, setting, by the UE, the SR triggered by BSR in the other TTIs to be invalid, where the other TTIs are TTIs, except the any TTI, among the TTIs whose quantity is the period repetition coefficient multiplied by the SR period starting from the TTI in which the SR is triggered.

With reference to the first aspect, in an twelfth possible implementation manner of the first aspect, the control information is data amount threshold; and
the controlling, by the UE according to the control information, a procedure of processing the uplink grant resource request includes:
if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, and
if the UE determines that a data amount of the uplink data is not less than the data amount threshold, triggering, by the UE, the uplink grant resource request, or if the UE determines that a data amount of the uplink data is less than the data amount threshold, skipping, by the UE, triggering the uplink grant resource request.

With reference to the first aspect, in a thirteenth possible implementation manner of the first aspect, the control information is an indication to reduce a quantity of times of processing the uplink grant resource request; and
the controlling, by the UE according to the control information, a procedure of processing the uplink grant resource request includes:
skipping, by the UE according to the indication, triggering the uplink grant resource request; or
ending, by the UE according to the indication, a decision processing procedure of the uplink grant resource request; or
if a logical channel that triggers buffer status reporting BSR is a logical channel configured with the control information or a logical channel that triggers BSR is a logical channel in a logical channel group configured with the control information, setting, by the UE, a SR that has been triggered by the BSR to be invalid in a current transmission time interval TTI.

With reference to any possible implementation manner of the first to thirteenth possible implementation manners of the first aspect, in a fourteenth possible implementation manner of the first aspect, after the UE sets the SR to be invalid, the method further includes
skipping, by the UE, determining whether to notify a physical layer to send the SR or whether to enter a random access process on the invalid SR; or
if the on-duration timer of the UE is not running, skipping, by the UE, determining whether to notify a physical layer to send the SR or whether to enter a random access process on the invalid SR, or if the on-duration timer of the UE is running, determining, by the UE, whether to notify a physical layer to send the SR or whether to enter a random access process on the invalid SR; or
if the UE is in an inactive time, skip determining whether to notify a physical layer to send the SR or whether to enter a random access process on the invalid SR, or if the UE is in an active time, determine whether to notify a physical layer to send the SR or whether to enter a random access process on the invalid SR.

With reference to the first aspect, in a fifteenth possible implementation manner of the first aspect, the uplink grant resource request is the uplink grant resource request that is implemented by sending the SR, the control information is a period repetition coefficient and the period repetition coefficient is for one logical channel or one logical channel group; and
the controlling, by the UE according to the control information, a procedure of processing the uplink grant resource request includes:
determining, by the UE, an SR resource available for sending the SR, where the SR is triggered by the logical channel or the logical channel group, and a period of the SR resource is an SR period currently configured by a base station for the UE multiplied by the period repetition coefficient; and
sending, by the UE on the resource for sending the SR, the SR to the base station.

With reference to any possible implementation manner of the first to fifteenth possible implementation manners of the first aspect, in a sixteenth possible implementation manner of the first aspect, the acquiring, by UE, control information includes:
acquiring, by the UE, the control information that is configured in advance; or
acquiring, by the UE, the control information from an Open Mobile Alliance device management procedure; or
receiving, by the UE, an attach accept message from a mobile management entity MME, and acquiring the control information from the attach accept message; or
receiving, by the UE, a radio resource control RRC connection reconfiguration message from the base station, and acquiring the control information from the RRC connection reconfiguration message; or
acquiring, by the UE, the control information by receiving a broadcast message from the base station; or
acquiring, by the UE, the control information by receiving a paging message from the base station.

With reference to the sixteenth possible implementation manner of the first aspect, in a seventeenth possible implementation manner of the first aspect, the receiving, by the UE, a radio resource control RRC connection reconfiguration message from the base station, and acquiring the control information from the RRC connection reconfiguration message includes:
sending, by the UE, an RRC connection request message or an RRC connection setup complete message to the base station, where the RRC connection request message or the RRC connection setup complete message carries a preset type indication; and receiving, by the UE, the RRC connection reconfiguration message sent by the base station, and acquiring the control information from the RRC connection reconfiguration message, where the control information is control information corresponding to the preset type indication, and the preset type indication is used for indicating at least one of the following: a terminal type is a preset terminal type, and a service type is a preset service type; or
the receiving, by the UE, a radio resource control RRC connection reconfiguration message from the base station, and acquiring the control information from the RRC connection reconfiguration message includes:
   sending, by the UE in an attachment process or a service request process, a preset type indication to the MME, so that the MME sends the preset type indication to the base station; and receiving, by the UE, the RRC connection reconfiguration message sent by the base station, and acquiring the control information from the RRC connection reconfiguration message, where the control information is control information corresponding to the preset type indication, and the preset type indication is used for indicating at least one of the following: a terminal type is a preset terminal type, and a service type is a preset service type; or
the receiving, by the UE, an attach accept message from a mobile management entity MME, and acquiring the control information from the attach accept message includes:
   sending, by the UE in an attachment process or a service request process, a preset type indication to the MME; and receiving, by the UE, the attach accept message sent by the MME to the UE, and acquiring the control information from the attach accept message, where the control information is control information corresponding to the preset type indication, and the preset type indication is used for indicating at least one of the following: a terminal type is a preset terminal type, and a service type is a preset service type.

With reference to the first aspect, in an eighteenth possible implementation manner of the first aspect, the control information is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE; and
the controlling, by the UE according to the control information, a procedure of processing the uplink grant resource request includes:
acquiring, by the UE, the available physical random access channel, where the available physical random access channel is a physical random access channel whose number mod the period of the available physical random access channel is equal to the offset value, where the number is obtained by numbering, in chronological order or first based on frequencies and then in chronological order, physical random access channels that are configured, in a system message broadcast by the base station, for the UE or the logical channel or logical channel group of the UE; and
initiating, by the UE or the logical channel or logical channel group of the UE, the random access process on the available physical random access channel, to request the uplink grant resource.

With reference to the eighteenth possible implementation manner of the first aspect, in a nineteenth possible implementation manner of the first aspect, the control information further includes a preamble; and
the initiating, by the UE or the logical channel or logical channel group of the UE, the random access process on the available physical random access channel includes:
sending, by the UE or the logical channel or logical channel group of the UE, the preamble on the available physical random access channel, to initiate the random access process.

With reference to the eighteenth or nineteenth possible implementation manner of the first aspect, in a twentieth possible implementation manner of the first aspect, after the sending, by the UE or the logical channel or logical channel group of the UE, the preamble on the available physical random access channel, the method further includes:
if a random access response fails and a quantity of times the UE sends the preamble does not reach a maximum quantity of sending times, initiating, by the UE or the logical channel or logical channel group of the UE, the random access process on the available physical random access channel, to request the uplink grant resource; or initiating, by the UE or the logical channel or logical channel group of the UE, the random access process on a physical random access channel among the physical random access channels that are configured, in the system message broadcast by the base station, for the UE or the logical channel or logical channel group of the UE, so as to request the uplink grant resource.

According to a second aspect, an embodiment of the present invention provides a method for controlling an uplink grant resource request, including:
configuring, by a base station, control information for user equipment, UE, wherein the control information is used for instructing to reduce a quantity of times of processing an uplink grant resource request, and the uplink grant resource request includes a schedule request, SR and the control information include a scheduled time; and
sending, by the base station, the control information to the UE, so that the UE starts a timer according to the scheduled time, when the UE determines that the UE has to-be-transmitted uplink data, or when the UE determines that a logical channel of the UE has to-be-transmitted uplink data,
wherein the logical channel is a logical channel configured with the control information or a logical channel in a logical channel group configured with the control information; and
when the timer expires, the UE triggers the uplink grant resource request, or when the timer does not expire, the UE skips triggering the uplink grant resource request..

With reference to the second aspect, in a first possible implementation manner of the second aspect, the sending, by the base station, the control information to the UE includes:
sending, by the base station, a radio resource control RRC connection reconfiguration message to the UE, where the RRC connection reconfiguration message carries the control information; or
sending, by the base station, a broadcast message, where the broadcast message carries the control information; or
sending, by the base station, a paging message, where the paging message carries the control information.

With reference to the first possible implementation manner of the second aspect, in a second possible implementation manner of the second aspect, before the configuring, by a base station, control information for UE, the method further includes:
receiving, by the base station, an RRC connection request message or an RRC connection setup complete message that is sent by the UE and carries a preset type indication, where the preset type indication is used for indicating at least one of the following: a terminal type is a preset terminal type, and a service type is a preset service type; and
the configuring, by a base station, control information for UE includes: configuring, by the base station for the UE, the control information corresponding to the preset type indication.

With reference to the second aspect or the first possible implementation manner thereof, in a third possible implementation manner of the second aspect, before the configuring, by a base station, control information for UE, the method further includes:
receiving, by the base station, a preset type indication sent by a mobile management entity MME, where the preset type indication is used for indicating at least one of the following: a terminal type is a preset terminal type, and a service type is a preset service type; and
the configuring, by a base station, control information for UE includes: configuring, by the base station for the UE, the control information corresponding to the preset type indication.

With reference to the second aspect, in a fourth possible implementation manner of the second aspect, the control information configured by the base station for the UE is control information of at least one of a UE level, a logical channel level, and a logical channel group level.

With reference to the fourth possible implementation manner of the second aspect, in a fifth possible implementation manner of the second aspect, the sending, by the base station, the control information to the UE includes:
if the control information is control information at the UE level, sending, by the base station to the UE, an RRC connection reconfiguration message in which the control information is padded in a time sequence arrangement request configuration information element; or
if the control information is control information at the logical channel level, sending, by the base station to the UE, an RRC connection reconfiguration message in which the control information is padded in a logical channel configuration information element; or
if the control information is control information at the logical channel group level, sending, by the base station to the UE, an RRC connection reconfiguration message in which the control information is padded in a logical channel group configuration information element.

With reference to the second aspect or any possible implementation manner of the first to fourth possible implementation manners thereof, in a sixth possible implementation manner of the second aspect, the control information configured by the base station for the UE is at least one of a scheduled time, a period repetition coefficient, a data amount threshold, and an indication to reduce a quantity of times of processing the uplink grant resource request.

With reference to the second aspect, in a seventh possible implementation manner of the second aspect, the control information configured by the base station for the UE is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE.

With reference to the seventh possible implementation manner of the second aspect, in an eighth possible implementation manner of the second aspect, the control information further includes a preamble.

According to a third aspect, an embodiment of the present invention provides a method for controlling an uplink grant resource request, including:
acquiring, by a mobile management entity MME, a terminal type of user equipment UE or a service type used by the UE; and
if the terminal type is a preset terminal type, or the service type is a preset service type, sending, by the MME, a preset type indication to a base station, so that the base station sends control information to the UE, where the preset type indication is used for indicating at least one of the following: the terminal type is the preset terminal type, and the service type is the preset service type, the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

With reference to the third aspect, in a first possible implementation manner of the third aspect, the acquiring, by an MME, a terminal type of user equipment UE or a service type used by the UE includes:
acquiring, by the MME, the terminal type of the UE by receiving a message that is sent by the UE in an attachment process; or
acquiring, by the MME, the terminal type of the UE from a home subscriber server HSS in an authentication process of an attachment process; or
acquiring, by the MME by receiving a message that is sent by the UE in a service request process, the terminal type of the UE or the service type used by the UE.

According to a fourth aspect, an embodiment of the present invention provides a method for controlling an uplink grant resource request, including:
acquiring, by a mobile management entity MME, a terminal type of user equipment UE or a service type used by the UE; and
when the terminal type is a preset terminal type, or the service type is a preset service type, sending, by the MME to the UE, an attach accept message carrying control information, so that the UE controls, according to the control information, a procedure of processing the uplink grant resource request, where the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

With reference to the fourth aspect, in a first possible implementation manner of the fourth aspect, the acquiring, by an MME, a terminal type of user equipment UE or a service type used by the UE includes:
acquiring, by the MME, the terminal type of the UE by receiving a message that is sent by the UE in an attachment process; or
acquiring, by the MME, the terminal type of the UE from a home subscriber server HSS in an authentication process of an attachment process; or
acquiring, by the MME by receiving a message that is sent by the UE in a service request process, the terminal type of the UE or the service type used by the UE.

According to a fifth aspect, an embodiment of the present invention provides user equipment, including:
a control information acquiring module, configured to acquire control information, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process; and
a request control module, configured to control, according to the control information acquired by the control information acquiring module, a procedure of processing the uplink grant resource request.

With reference to the fifth aspect, in a first possible implementation manner of the fifth aspect, the control information acquired by the information acquiring module is an indication to reduce a quantity of times of processing the uplink grant resource request; and the request control module includes any one of the following submodules:
a first trigger control submodule, configured to: if the user equipment UE is in an inactive time, determine, according to the indication, not to trigger the uplink grant resource request, or if the UE is in an active time, determine, according to the indication, to trigger the uplink grant resource request;
a first decision control submodule, configured to: if the UE is in an inactive time, end, according to the indication, a sending decision processing procedure of the uplink grant resource request, where the sending decision processing procedure is in a current transmission time interval TTI, or if the UE is in an active time, continue, according to the indication, a sending decision processing procedure of the uplink grant resource request, where the sending decision processing procedure is in a current TTI; and
a first SR control submodule, configured to: if a logical channel that triggers buffer status reporting BSR is a logical channel configured with the control information or if a logical channel that triggers BSR is a logical channel that triggers BSR is a logical channel in a logical channel group configured with the control information, and if the UE is in an inactive time, set a SR that has been triggered by the BSR to be invalid in a current TTI; or if the UE is in an active time, set a SR that has been triggered by the BSR to be valid in a current TTI.

With reference to the first possible implementation manner of the fifth aspect, in a second possible implementation manner of the fifth aspect, the indication acquired by the control information acquiring module is a scheduled time; and
the first trigger control submodule includes:
a first timer start submodule, configured to: if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, start a timer according to the scheduled time; and
a first timed trigger control submodule, configured to: before the timer started by the first timer start submodule expires, if it is determined that the UE is in an inactive time, determine not to trigger the uplink grant resource request, or if it is determined that the UE is in an active time, determine to trigger the uplink grant resource request, and when the timer expires, determines to trigger the uplink grant resource request; or,
the uplink grant resource request is the uplink grant resource request that is implemented by sending an SR, the indication acquired by the control information acquiring module is a period repetition coefficient, and the first trigger control submodule includes:
   a second timer start submodule, configured to: if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and
   a second timed trigger control submodule, configured to: before the timer started by the second timer start submodule expires, if it is determined that the UE is in an inactive time, determine not to trigger the uplink grant resource request, or if it is determined that the UE is in an active time, determine to trigger the uplink grant resource request; and when the timer expires, determines to trigger the uplink grant resource request.

With reference to the first possible implementation manner of the fifth aspect, in a third possible implementation manner of the fifth aspect, the indication acquired by the control information acquiring module is a data amount threshold; and
the user equipment further includes:
an available data determining module, configured to: before the first trigger control submodule determines, according to the indication, not to trigger the uplink grant resource request if the UE is in an inactive time or determines, according to the indication, to trigger the uplink grant resource request if the UE is in an active time, determine that the UE has to-be-transmitted uplink data or determine that a logical channel of the UE has to-be-transmitted uplink data, where the logical channel is a logical channel configured with the control information or a logical channel in a logical channel group configured with the control information, and determine that a data amount of the uplink data is less than the data amount threshold.

With reference to the first possible implementation manner of the fifth aspect, in a fourth possible implementation manner of the fifth aspect, the indication acquired by the control information acquiring module is a scheduled time; and
the first decision control submodule is specifically configured to: if an SR counter is equal to 0, start a timer according to the scheduled time; and before the timer expires, if the UE is in an inactive time, end the sending decision processing procedure of the uplink grant resource request that is implemented by means of an SR, where the sending decision processing procedure is in the current TTI, or if the UE is in an active time, continue the sending decision processing procedure of the uplink grant resource request that is implemented by means of an SR, where the sending decision processing procedure is in the current TTI; and when the timer expires, continues the sending decision processing procedure of the uplink grant resource request that is implemented by means of an SR, where the sending decision processing procedure is in the current TTI.

With reference to the first possible implementation manner of the fifth aspect, in a fifth possible implementation manner of the fifth aspect, the uplink grant resource request is the uplink grant resource request that is implemented by sending an SR, the indication acquired by the control information acquiring module is a period repetition coefficient, and
the first decision control submodule is specifically configured to: starting from a TTI in which the SR is triggered, in TTIs whose quantity is the period repetition coefficient multiplied by an SR period, if the UE is in an inactive time, end the sending decision processing procedure of the uplink grant resource request that is implemented by means of an SR, where the sending decision processing procedure is in the current TTI, or if the UE is in an active time, continue the sending decision processing procedure of the uplink grant resource request that is implemented by means of an SR, where the sending decision processing procedure is in the current TTI.

With reference to the fifth aspect, in a sixth possible implementation manner of the fifth aspect, the control information acquired by the control information acquiring module is an indication to reduce a quantity of times of processing the uplink grant resource request; and
the request control module includes:
a second trigger control submodule, configured to: if it is determined that an on-duration timer of the UE is not running, determine, according to the indication, not to trigger the uplink grant resource request, or if it is determined that an on-duration timer of the UE is running, determine, according to the indication, to trigger the uplink grant resource request; or
a second decision control submodule, configured to: if it is determined that an on-duration timer of the UE is not running, end, according to the indication, a sending decision processing procedure of the uplink grant resource request, where the sending decision processing procedure is in a current transmission time interval TTI, or if it is determined that an on-duration timer of the UE is running, continue, according to the indication, a sending decision processing procedure of the uplink grant resource request, where the sending decision processing procedure is in a current transmission time interval TTI; or
a second SR control submodule, configured to: if it is determined that an on-duration timer of the UE is not running and if a logical channel that triggers buffer status reporting BSR is a logical channel configured with the control information or a logical channel that triggers BSR is a logical channel in a logical channel group configured with the control information, set a SR that has been triggered by the BSR to be invalid in a current transmission time interval TTI, or if it is determined that an on-duration timer of the UE is running and if a logical channel that triggers buffer status reporting BSR is a logical channel configured with the control information or a logical channel that triggers BSR is a logical channel in a logical channel group configured with the control information, set a SR that has been triggered by the BSR to be valid in a current TTI.

With reference to the sixth possible implementation manner of the fifth aspect, in a seventh possible implementation manner of the fifth aspect, the indication acquired by the control information acquiring module is a scheduled time, and the second trigger control submodule is specifically configured to: if the UE has to-be-transmitted uplink data, or if a logical channel has to-be-transmitted uplink data, where the logical channel is a logical channel configured with the control information or a logical channel in a logical channel group configured with the control information, start a timer according to the scheduled time; and before the started timer expires, if it is determined that an on-duration timer of the UE is not running, determine not to trigger the uplink grant resource request that is implemented by sending an SR, or if it is determined that an on-duration timer of the UE is running, determine to trigger the uplink grant resource request that is implemented by sending an SR; and when the timer expires, determines to trigger the uplink grant resource request that is implemented by sending an SR; or,
the uplink grant resource request is the uplink grant resource request that is implemented by sending an SR, the indication acquired by the control information acquiring module is a period repetition coefficient, and the second decision control submodule is specifically configured to: if the UE has to-be-transmitted uplink data or if the UE determines that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and before the timer started by the fourth timer start submodule expires, if it is determined that an on-duration timer of the UE is not running, determine not to trigger the uplink grant resource request that is implemented by sending an SR, or if it is determined that an on-duration timer of the UE is running, determine to trigger the uplink grant resource request that is implemented by sending an SR; and when the timer expires, determines to trigger the uplink grant resource request that is implemented by sending an SR.

With reference to the sixth possible implementation manner of the fifth aspect, in an eighth possible implementation manner of the fifth aspect, the indication acquired by the control information acquiring module is a data amount threshold; and
the user equipment further includes:
a second available data determining module, configured to: before the second trigger control submodule determines, according to the indication, not to trigger the uplink grant resource request if the UE is in an inactive time or determines, according to the indication, to trigger the uplink grant resource request if the UE is in an active time, determine that the UE has to-be-transmitted uplink data or that a logical channel has to-be-transmitted uplink data, where the logical channel is a logical channel configured with the control information or a logical channel in a logical channel group configured with the control information, and determine that a data amount of the uplink data is less than the data amount threshold.

With reference to the sixth possible implementation manner of the fifth aspect, in a ninth possible implementation manner of the fifth aspect, the indication acquired by the control information acquiring module is a scheduled time; and
the second decision control submodule is specifically configured to:
if an SR counter is equal to 0, start a timer according to the scheduled time; and
before the timer expires, if it is determined that the on-duration timer of the UE is not running, end the sending decision processing procedure of the uplink grant resource request that is implemented by means of an SR, where the sending decision processing procedure is in the current TTI, or if it is determined that the on-duration timer of the UE is running, continue the sending decision processing procedure of the uplink grant resource request that is implemented by means of an SR, where the sending decision processing procedure is in the current TTI; and when the timer expires, continue the sending decision processing procedure of the uplink grant resource request that is implemented by means of an SR, where the sending decision processing procedure is in the current TTI.

With reference to the sixth possible implementation manner of the fifth aspect, in a tenth possible implementation manner of the fifth aspect, the uplink grant resource request is the uplink grant resource request that is implemented by sending an SR, the indication acquired by the control information acquiring module is a period repetition coefficient, and the second decision control submodule is specifically configured to:
starting from a TTI in which the SR is triggered, in TTIs whose quantity is the period repetition coefficient multiplied by an SR period, if it is determined that the on-duration timer of the UE is not running, end the sending decision processing procedure that is in the current TTI and implemented by means of an SR, or if it is determined that the on-duration timer of the UE is running, continue the sending decision processing procedure that is in the current TTI and implemented by means of an SR.

With reference to the fifth aspect, in an eleventh possible implementation manner of the fifth aspect, the control information acquired by the control information acquiring module is a scheduled time, and
the request control module is specifically configured to: if the user equipment UE has to-be-transmitted uplink data or if it is determined that a logical channel of the UE has to-be-transmitted uplink data, where the logical channel is a logical channel configured with the control information or a logical channel in a logical channel group configured with the control information, start a timer according to the scheduled time; and if the timer expires, trigger the uplink grant resource request, or if the timer does not expire, skip triggering the uplink grant resource request; or
the uplink grant resource request is the uplink grant resource request that is implemented by sending an SR, the control information acquired by the control information acquiring module is a scheduled time, and the request control module is specifically configured to: starting from a TTI in which the SR is triggered, in any TTI among TTIs whose quantity is the period repetition coefficient multiplied by an SR period, continues a sending decision processing procedure that is in the any TTI and implemented by means of an SR, and in other TTIs, the UE ends sending decision processing procedures that are in the other TTIs and implemented by means of an SR, where the other TTIs are TTIs, except the any TTI, among the TTIs whose quantity is the period repetition coefficient multiplied by the SR period starting from the TTI in which the SR is triggered; or
the uplink grant resource request is the uplink grant resource request that is implemented by sending an SR, the control information acquired by the control information acquiring module is a period repetition coefficient, and the request control module is specifically configured to: if the UE has to-be-transmitted uplink data or if it is determined that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and before the timer expires, determine not to trigger the uplink grant resource request that is implemented by sending an SR, and when the timer expires, determine to trigger the uplink grant resource request that is implemented by sending an SR; or
the control information acquired by the control information acquiring module is an scheduled time, and the request control module is specifically configured to: if an SR counter is equal to 0, start a timer according to the scheduled time; and before the timer expires, end a sending decision processing procedure of the uplink resource request that is implemented by means of an SR, where the sending decision processing procedure is in a current transmission time interval TTI, and when the timer expires, continue the sending decision processing procedure of the uplink resource that is implemented by means of an SR, where the sending decision processing procedure is in the current TTI; or
the control information acquired by the control information acquiring module is a scheduled time, and the request control module is specifically configured to: if some uplink data of the UE becomes available or if uplink data corresponding to a logical channel becomes available, where the logical channel is a logical channel configured with the control information or a logical channel in a logical channel group configured with the control information, and if a current TTI is a TTI in which BSR triggers the SR, start a timer according to the scheduled time, before the timer expires, set the SR to be an invalid SR in the current TTI, and when the timer expires, sets the SR to be a valid SR in the current TTI; or,
the control information acquired by the control information acquiring module is a period repetition coefficient, and the request control module is specifically configured to: if the UE has to-be-transmitted uplink data or if it is determined that a logical channel of the UE has to-be-transmitted uplink data, where the logical channel is a logical channel configured with the control information or a logical channel in a logical channel group configured with the control information, and if a current TTI is a TTI in which BSR triggers the SR, start a timer, where a scheduled time of the timer is the period repetition coefficient multiplied by an SR period; before the timer expires, set the SR to be an invalid SR in the current TTI, and when the timer expires, set the SR to be a valid SR in the current TTI; or
the control information acquired by the control information acquiring module is a period repetition coefficient, and the request control module is specifically configured to: if the UE has to-be-transmitted uplink data or if it is determined that a logical channel of the UE has to-be-transmitted uplink data, where the logical channel is a logical channel configured with the control information or a logical channel in a logical channel group configured with the control information, starting from a TTI in which the SR is triggered, in any TTI among TTIs whose quantity is the period repetition coefficient multiplied by an SR period, set the SR triggered by BSR in the any TTI to be valid, and in other TTIs, set the SR triggered by BSR in the other TTIs to be invalid, where the other TTIs are TTIs, except the any TTI, among the TTIs whose quantity is the period repetition coefficient multiplied by the SR period starting from the TTI in which the SR is triggered.

With reference to the fifth aspect, in a twelfth possible implementation manner of the fifth aspect, the control information acquired by the control information acquiring module is a data amount threshold, and
the request control module is specifically configured to:
if the UE has to-be-transmitted uplink data, or if it is determined that a logical channel of the UE has to-be-transmitted uplink data, where the logical channel is a logical channel configured with the control information or a logical channel in a logical channel group configured with the control information, and
if it is determined that a data amount of the uplink data is not less than the data amount threshold, trigger the uplink grant resource request, or if the UE determines that a data amount of the uplink data is less than the data amount threshold, skip triggering the uplink grant resource request.

With reference to the fifth aspect, in a thirteenth possible implementation manner of the fifth aspect, the control information acquired by the control information acquiring module is an indication to reduce a quantity of times of processing the uplink grant resource request; and
the request control module is specifically configured to:
determine, according to the indication, not to trigger the uplink grant resource request; or
end, according to the indication, a decision processing procedure of the uplink grant resource request; or
if a logical channel that triggers buffer status reporting BSR is a logical channel configured with the control information or a logical channel that triggers BSR is a logical channel in a logical channel group configured with the control information, set a SR that has been triggered by the BSR to be invalid in a current transmission time interval TTI.

With reference to any possible implementation manner of the first to thirteenth possible implementation manners of the fifth aspect, in a fourteenth possible implementation manner of the fifth aspect, the user equipment further includes:
an invalidity processing module, configured to: after the first SR control submodule sets the SR to be invalid, skip determining whether to notify a physical layer to send the SR or whether to enter a random access process on the invalid SR; or
if the on-duration timer of the UE is not running, skip determining whether to notify a physical layer to send the SR or whether to enter a random access process on the invalid SR, or if the on-duration timer of the UE is running, determine whether to notify a physical layer to send.the SR or whether to enter a random access process on the invalid SR; or
if the UE is in an inactive time, skip determining whether to notify a physical layer to send the SR or whether to enter a random access process on the invalid SR, or if the UE is in an active time, determine whether to notify a physical layer to send the SR or whether to enter a random access process on the invalid SR.

With reference to the fifth aspect, in a fifteenth possible implementation manner of the fifth aspect, the uplink grant resource request is the uplink grant resource request that is implemented by sending the SR, the control information is a period repetition coefficient and the period repetition coefficient is for one logical channel or one logical channel group; and
the request control module includes:
a resource determining submodule, configured to determine an SR resource available for sending the SR, where the SR is triggered by the logical channel or the logical channel group, and a period of the SR resource is an SR period currently configured by a base station for the UE multiplied by the period repetition coefficient; and
a sending submodule, configured to send, on the SR resource determined by the resource determining submodule and for sending the SR, the SR to the base station.

With reference to any possible implementation manner of the first to fifteenth possible implementation manners of the fifth aspect, in a sixteenth possible implementation manner of the fifth aspect, the control information acquiring module includes:
a first acquiring submodule, configured to acquire the control information configured in advance; or
a second acquiring submodule, configured to acquire the control information from an Open Mobile Alliance device management procedure; or
a third acquiring submodule, configured to receive an attach accept message from a mobile management entity MME, and acquire the control information from the attach accept message; or
a fourth acquiring submodule, configured to receive, by the UE, a radio resource control RRC connection reconfiguration message from the base station, and acquire the control information from the RRC connection reconfiguration message; or
a fifth acquiring submodule, configured to acquire the control information by receiving a broadcast message from the base station; or
a sixth acquiring submodule, configured to acquire the control information by receiving a paging message from the base station.

With reference to the sixteenth possible implementation manner of the fifth aspect, in a seventeenth possible implementation manner of the fifth aspect, the fourth acquiring submodule is specifically configured to:
send an RRC connection request message or an RRC connection setup complete message to the base station, where the RRC connection request message or the RRC connection setup complete message carries a preset type indication; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type; or
the fourth acquiring submodule is specifically configured to:
   send, in an attachment process or a service request process, a preset type indication to the MME, so that the MME sends the preset type indication to the base station; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type; or
the third acquiring submodule is specifically configured to:
   send, in an attachment process or a service request process, a preset type indication to the MME; and receive the attach accept message sent by the MME to the user equipment UE, and acquire the control information from the attach accept message, where the control information is control information corresponding to the preset type indication, and the preset type indication is used for indicating at least one of the following: a terminal type is a preset terminal type, and a service type is a preset service type.

With reference to the fifth aspect, in an eighteenth possible implementation manner of the fifth aspect, the control information acquired by the control information acquiring module is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE; and
the request control module includes:
a channel acquiring submodule, configured to acquire the available physical random access channel, where the available physical random access channel is a physical random access channel whose number mod the period of the available physical random access channel is equal to the offset value, where the number is obtained by numbering, in chronological order or first based on frequencies and then in chronological order, physical random access channels that are configured, in a system message broadcast by the base station, for the UE or the logical channel or logical channel group of the UE; and
a random access submodule, configured to initiate, on the available physical random access channel acquired by the channel acquiring submodule, the random access process, to request the uplink grant resource.

With reference to the eighteenth possible implementation manner of the fifth aspect, in a nineteenth possible implementation manner of the fifth aspect, the control information acquired by the control information acquiring module further includes a preamble; and
the random access submodule is specifically configured to:
send, on the available physical random access channel acquired by the channel acquiring submodule, the preamble to initiate the random access process.

With reference to the eighteenth or nineteenth possible implementation manner of the fifth aspect, in a twentieth possible implementation manner of the fifth aspect, the request control module is further configured to:
after the random access submodule sends the preamble on the available physical random access channel,
if a random access response fails and a quantity of times the UE sends the preamble does not reach a maximum quantity of sending times, initiate the random access process on the available physical random access channel acquired by the channel acquiring submodule, to request the uplink grant resource; or initiate the random access process on a physical random access channel among the physical random access channels that are configured, in the system message broadcast by the base station, for the UE or the logical channel or logical channel group of the UE, so as to request the uplink grant resource.

According to a sixth aspect, an embodiment of the present invention provides a base station, including:
a control information configuration module, configured to configure control information for user equipment UE, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process; and
a control information sending module, configured to send, to the UE, the control information configured by the control information configuration module, so that the UE controls, according to the control information, a procedure of processing the uplink grant resource request.

With reference to the sixth aspect, in a first possible implementation manner of the sixth aspect, the control information sending module includes:
a first sending submodule, configured to send a radio resource control RRC connection reconfiguration message to the UE, where the RRC connection reconfiguration message carries the control information; or
a second sending submodule, configured to send a broadcast message, where the broadcast message carries the control information; or
a third sending submodule, configured to send a paging message, where the paging message carries the control information.

With reference to the sixth aspect, in a second possible implementation manner of the sixth aspect, the base station further includes:
a first type receiving module, configured to: before the control information configuration module configures the control information for the UE, receive an RRC connection request message or an RRC connection setup complete message that is sent by the UE and carries a preset type indication, where the preset type indication is used for indicating at least one of the following: a terminal type is a preset terminal type, and a service type is a preset service type; where
the control information configuration module is further configured to configure, for the UE, the control information corresponding to the preset type indication.

With reference to the sixth aspect, in a third possible implementation manner of the sixth aspect, the base station further includes:
a second type receiving module, configured to: before the control information configuration module configures the control information for the UE, receive a preset type indication sent by a mobile management entity MME, where the preset type indication is used for indicating at least one of the following: a terminal type is a preset terminal type, and a service type is a preset service type; where
the control information configuration module is further configured to configure, for the UE, the control information corresponding to the preset type indication.

With reference to the sixth aspect or the first to third possible implementation manners thereof, in a fourth possible implementation manner of the sixth aspect, the control information configured by the control information configuration module for the UE is control information of at least one of a UE level, a logical channel level, and a logical channel group level.

With reference to the fourth possible implementation manner of the sixth aspect, in a fifth possible implementation manner of the sixth aspect, the control information sending module includes:
a fourth sending submodule, configured to: if the control information is control information at the UE level, send, to the UE, an RRC connection reconfiguration message in which the control information is padded in a time sequence arrangement request configuration information element; or
a fifth sending submodule, configured to: if the control information is control information at the logical channel level, send, to the UE, an RRC connection reconfiguration message in which the control information is padded in a logical channel configuration information element; or
a sixth sending submodule, configured to: if the control information is control information at the logical channel group level, send, to the UE, an RRC connection reconfiguration message in which the control information is padded in a logical channel group configuration information element.

With reference to the sixth aspect or any possible implementation manner of the first to fifth possible implementation manners thereof, in a sixth possible implementation manner of the sixth aspect, the control information configured by the control information configuration module for the UE is at least one of a time, an SR period repetition coefficient, a data amount threshold, and an indication to reduce a quantity of times of processing the uplink grant resource request.

With reference to the sixth aspect, in a seventh possible implementation manner of the sixth aspect, the control information configured by the control information configuration module is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE; and

With reference to the seventh possible implementation manner of the sixth aspect, in an eighth possible implementation manner of the sixth aspect, the control information configured by the control information configuration module further includes a preamble.

According to a seventh aspect, an embodiment of the present invention provides a mobile management entity device, including:
a first type acquiring module, configured to acquire a terminal type of user equipment UE or a service type used by the UE; and
a first type sending module, configured to: if the terminal type acquired by the first type acquiring module is a preset terminal type, or the service type is a preset service type, send a preset type indication to a base station, so that the base station sends control information to the UE, where the preset type indication is used for indicating at least one of the following: the terminal type is the preset terminal type, and the service type is the preset service type, the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

With reference to the seventh aspect, in a first possible implementation manner of the seventh aspect, the first type acquiring module includes:
a first acquiring submodule, configured to acquire the terminal type of the UE by receiving a message that is sent by the UE in an attachment process; or
a second acquiring submodule, configured to acquire the terminal type of the UE from a home subscriber server HSS in an authentication process of an attachment process; or
a third acquiring submodule, configured to acquire, by receiving a message that is sent by the UE in a service request process, the terminal type of the UE or the service type used by the UE.

According to an eighth aspect, an embodiment of the present invention provides a mobile management entity device, including:
a second type acquiring module, configured to acquire a terminal type of user equipment UE or a service type used by the UE; and
a second type sending module, configured to: when the terminal type acquired by the second type acquiring module is a preset terminal type, or the service type is a preset service type, send, to the UE, an attach accept message carrying control information, so that the UE controls, according to the control information, a procedure of processing the uplink grant resource request, where the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

With reference to the eighth aspect, in a first possible implementation manner of the eighth aspect, the second type sending module includes:
a first sending submodule, configured to send, to the UE, an attach accept message that carries control information, so that the UE controls, according to the control information, a procedure of processing the uplink grant resource request.

With reference to the eighth aspect and the first possible implementation manner thereof, in a second possible implementation manner of the eighth aspect, the second type acquiring module includes any one of the following acquiring submodules:
a fourth acquiring submodule, configured to acquire the terminal type of the UE by receiving a message that is sent by the UE in an attachment process;
a fifth acquiring submodule, configured to the terminal type of the UE from a home subscriber server HSS in an authentication process of an attachment process; or
a sixth acquiring submodule, configured to acquire, by receiving a message that is sent by the UE in a service request process, the terminal type of the UE or the service type used by the UE.

According to a ninth aspect, an embodiment of the present invention provides user equipment, including: a memory and a processor connected to the memory, where the memory stores a group of program code therein, and the processor is configured to invoke the program code stored in the memory to:
acquire control information, wherein the control information is used for instructing to reduce a quantity of times of processing an uplink grant resource request, and the uplink grant resource request includes a schedule request, SR, and the control information include a scheduled time; and
start a timer according to the scheduled time, when it is determined that there is to-be-transmitted uplink data, or when it is determined that a logical channel has to-be-transmitted uplink data, wherein the logical channel is a logical channel configured with the control information or a logical channel in a logical channel group configured with the control information; and

trigger the uplink grant resource request when the timer expires, or skip triggering the uplink grant resource request when the timer does not expire.

With reference to the ninth aspect, in a first possible implementation manner of the ninth aspect, the control information acquired by the processor is an indication to reduce a quantity of times of processing the uplink grant resource request; and
the processor is specifically configured to use the following manner to control, according to the control information acquired by the processor, a procedure of processing the uplink grant resource request:
if it is determined that the user equipment UE is in an inactive time, determining, according to the indication, not to trigger the uplink grant resource request, or if it is determined that the UE is in an active time, determining, according to the indication, to trigger the uplink grant resource request;
if it is determined that the UE is in an inactive time, ending, according to the indication, a sending decision processing procedure of the uplink grant resource request, where the sending decision processing procedure is in a current transmission time interval TTI, or if it is determined that the UE is in an active time, continuing, according to the indication, a sending decision processing procedure of the uplink grant resource request, where the sending decision processing procedure is in a current TTI; or
if it is determined that a logical channel that triggers buffer status reporting BSR is a logical channel configured with the control information or a logical channel that triggers BSR is a logical channel in a logical channel group configured with the control information, and if it is determined that the UE is in an inactive time, setting a SR that has been triggered by the BSR to be invalid in a current TTI; or if it is determined that the UE is in an active time, setting a SR that has been triggered by the BSR to be valid in a current TTI.

With reference to the first possible implementation manner of the ninth aspect, in a second possible implementation manner of the ninth aspect, the indication acquired by the processor is a scheduled time; and
the processor is specifically configured to use the following manner to determine, according to the indication, not to trigger the uplink grant resource request if the user equipment UE is in an inactive time, or determine, according to the indication, to trigger the uplink grant resource request if the UE is in an active time:
if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer according to the scheduled time; and
before the timer expires, if it is determined that the UE is in an inactive time, determining not to trigger the uplink grant resource request, or if it is determined that the UE is in an active time, determining to trigger the uplink grant resource request, and when the timer expires, determining, by the UE, to trigger the uplink grant resource request; or,
the uplink grant resource request is the uplink grant resource request that is implemented by sending an SR, the indication acquired by the processor is a period repetition coefficient, and the processor is specifically configured to use the following manner to determine, according to the indication, not to trigger the uplink grant resource request if the user equipment UE is in an inactive time, or determine, according to the indication, to trigger the uplink grant resource request if the UE is in an active time:
   if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer, where a scheduled time of the timer is the period repetition coefficient multiplied by an SR period; and
   before the timer expires, if it is determined that the UE is in an inactive time, determining not to trigger the uplink grant resource request that is implemented by sending an SR, or if it is determined that the UE is in an active time, determining to trigger the uplink grant resource request that is implemented by sending an SR, and when the timer expires, determining to trigger the uplink grant resource request.

With reference to the first possible implementation manner of the ninth aspect, in a third possible implementation manner of the ninth aspect, the indication acquired by the processor is a data amount threshold; and
the processor is further configured to:
before determining, according to the indication, not to trigger the uplink grant resource request if it is determined that the UE is in an inactive time or determining, according to the indication, to trigger the uplink grant resource request if it is determined that the UE is in an active time, determine that the UE has to-be-transmitted uplink data or determine that a logical channel of the UE has to-be-transmitted uplink data, where the logical channel is a logical channel configured with the control information or a logical channel in a logical channel group configured with the control information, and determine that a data amount of the uplink data is less than the data amount threshold.

With reference to the first possible implementation manner of the ninth aspect, in a fourth possible implementation manner of the ninth aspect, the indication acquired by the processor is a scheduled time; and
the processor is specifically configured to use the following manner to end, according to the indication, a sending decision processing procedure of the uplink grant resource request if it is determined that the UE is in an inactive time, where the sending decision processing procedure is in a current TTI, or continue, according to the indication, a sending decision processing procedure of the uplink grant resource request if it is determined that the UE is in an active time, where the sending decision processing procedure is in a TTI:
if an SR counter is equal to 0, starting a timer according to the scheduled time; and before the timer expires, if it is determined that the UE is in an inactive time, ending the sending decision processing procedure of the uplink grant resource request that is implemented by means of an SR, where the sending decision processing procedure is in the current TTI, or if it is determined that the UE is in an active time, continuing the sending decision processing procedure of the uplink grant resource request that is implemented by means of an SR, where the sending decision processing procedure is in the current TTI; and when the timer expires, continuing the sending decision processing procedure of the uplink grant resource request that is implemented by means of an SR, where the sending decision processing procedure is in the current TTI.

With reference to the first possible implementation manner of the ninth aspect, in a fifth possible implementation manner of the ninth aspect, the uplink grant resource request is the uplink grant resource request that is implemented by sending an SR, the indication acquired by the processor is a period repetition coefficient, and
the processor is specifically configured to use the following manner to end, according to the indication, a sending decision processing procedure of the uplink grant resource request if it is determined that the UE is in an inactive time, where the sending decision processing procedure is in a current transmission time interval TTI, or continue, according to the indication, a sending decision processing procedure of the uplink grant resource request if it is determined that the UE is in an active time, where the sending decision processing procedure is in a current TTI: starting from a TTI in which the SR is triggered, in TTIs whose quantity is the period repetition coefficient multiplied by an SR period, if it is determined that the UE is in an inactive time, ending the sending decision processing procedure of the uplink grant resource request that is implemented by means of an SR, where the sending decision processing procedure is in the current TTI, or if it is determined that the UE is in an active time, continuing the sending decision processing procedure of the uplink grant resource request that is implemented by means of an SR, where the sending decision processing procedure is in the current TTI.

With reference to the ninth aspect, in a sixth possible implementation manner of the ninth aspect, the control information acquired by the processor is an indication to reduce a quantity of times of processing the uplink grant resource request; and
the processor is specifically configured to use the following manner to control, according to the control information acquired by the processor, a procedure of processing the uplink grant resource request:
if it is determined that an on-duration timer of the UE is not running, determining, according to the indication, not to trigger the uplink grant resource request, or if it is determined that an on-duration timer of the UE is running, determining, according to the indication, to trigger the uplink grant resource request; or
if it is determined that an on-duration timer of the UE is not running, ending, according to the indication, a sending decision processing procedure of the uplink grant resource request, where the sending decision processing procedure is in a current transmission time interval TTI, or if it is determined that an on-duration timer of the UE is running, continuing, according to the indication, a sending decision processing procedure of the uplink grant resource request, where the sending decision processing procedure is in a current transmission time interval TTI; or
if it is determined that an on-duration timer of the UE is not running and if a logical channel that triggers buffer status reporting BSR is a logical channel configured with the control information or a logical channel that triggers BSR is a logical channel in a logical channel group configured with the control information, setting a SR that has been triggered by the BSR to be invalid in a current transmission time interval TTI, or if it is determined that an on-duration timer of the UE is running and if a logical channel that triggers buffer status reporting BSR is a logical channel configured with the control information or a logical channel that triggers BSR is a logical channel in a logical channel group configured with the control information, setting a SR that has been triggered by the BSR to be valid in a current TTI.

With reference to the sixth possible implementation manner of the ninth aspect, in a seventh possible implementation manner of the ninth aspect, the indication acquired by the processor is a scheduled time; and
the processor is specifically configured to use the following manner to determine, according to the indication, not to trigger the uplink grant resource request if it is determined that an on-duration timer of the UE is not running, or determine, according to the indication, to trigger the uplink grant resource request if it is determined that an on-duration timer of the UE is running:
if it is determined that the UE has to-be-transmitted uplink data or if it is determined that a logical channel has to-be-transmitted uplink data, where the logical channel is a logical channel configured with the control information or a logical channel in a logical channel group configured with the control information, starting a timer according to the scheduled time; and before the timer expires, if it is determined that the on-duration timer of the UE is not running, determining not to trigger the uplink grant resource request that is implemented by sending an SR, or if it is determined that the on-duration timer of the UE is running, determining to trigger the uplink grant resource request that is implemented by sending an SR; and when the timer expires, determining to trigger the uplink grant resource request that is implemented by sending an SR; or,
the uplink grant resource is the uplink grant resource request that is implemented by sending an SR, the indication acquired by the processor is a period repetition coefficient, and the processor is specifically configured to use the following manner to determine, according to the indication, not to trigger the uplink grant resource request if it is determined that an on-duration timer of the UE is not running, or determine, according to the indication, to trigger the uplink grant resource request if it is determined that an on-duration timer of the UE is running: if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer, where a scheduled time of the timer is the period repetition coefficient multiplied by an SR period; and before the timer expires, if it is determined that the on-duration timer of the UE is not running, determining not to trigger the uplink grant resource request that is implemented by sending an SR, or if it is determined that the on-duration timer of the UE is running, determining to trigger the uplink grant resource request that is implemented by sending an SR; and when the timer expires, determining to trigger the uplink grant resource request that is implemented by sending an SR.

With reference to the sixth possible implementation manner of the ninth aspect, in an eighth possible implementation manner of the ninth aspect, the indication acquired by the processor is a data amount threshold; and
the processor is further configured to:
before determining, according to the indication, not to trigger the uplink grant resource request if it is determined that the UE is in an inactive time or determining, according to the indication, to trigger the uplink grant resource request if it is determined that the UE is in an active time, determine that the UE has to-be-transmitted uplink data or that a logical channel has to-be-transmitted uplink data, where the logical channel is a logical channel configured with the control information or a logical channel in a logical channel group configured with the control information, and determine that a data amount of the uplink data is less than the data amount threshold.

With reference to the sixth possible implementation manner of the ninth aspect, in a ninth possible implementation manner of the ninth aspect, the indication acquired by the processor is a scheduled time; and
the processor is specifically configured to use the following manner to end, according to the indication, a sending decision processing procedure of the uplink grant resource request if it is determined that an on-duration timer of the UE is not running, where the sending decision processing procedure is in a current transmission time interval TTI, or continue, according to the indication, a sending decision processing procedure of the uplink grant resource request if it is determined that an on-duration timer of the UE is running, where the sending decision processing procedure is in a current transmission time interval TTI, includes:
if an SR counter is equal to 0, starting a timer according to the scheduled time; and
before the timer expires, if it is determined that the on-duration timer of the UE is not running, ending the sending decision processing procedure of the uplink grant resource request that is implemented by means of an SR, where the sending decision processing procedure is in the current TTI, or if it is determined that the on-duration timer of the UE is running, continuing the sending decision processing procedure of the uplink grant resource request that is implemented by means of an SR, where the sending decision processing procedure is in the current TTI; and when the timer expires, continuing the sending decision processing procedure of the uplink grant resource request that is implemented by means of an SR, where the sending decision processing procedure is in the current TTI.

With reference to the sixth possible implementation manner of the ninth aspect, in a tenth possible implementation manner of the ninth aspect, the uplink grant resource request is an uplink grant resource that is implemented by sending an SR, the indication acquired by the processor is a period repetition coefficient, and the processor is specifically configured to use the following manner to end, according to the indication, a sending decision processing procedure of the uplink grant resource request if an on-duration timer of the UE is not running, where the sending decision processing procedure is in a current transmission time interval TTI, or continue, according to the indication, a sending decision processing procedure of the uplink grant resource request if an on-duration timer of the UE is running, where the sending decision processing procedure is in a current transmission time interval TTI:
starting from a TTI in which the SR is triggered, in TTIs whose quantity is the period repetition coefficient multiplied by an SR period, if it is determined that the on-duration timer of the UE is not running, ending the sending decision processing procedure that is in the current TTI and implemented by means of an SR, or if it is determined that the on-duration timer of the UE is running, continuing the sending decision processing procedure that is in the current TTI and implemented by means of an SR.

With reference to the ninth aspect, in an eleventh possible implementation manner of the ninth aspect, the control information acquired by the processor is a scheduled time; and
the processor is specifically configured to use the following manner to control, according to the control information, a procedure of processing the uplink grant resource request: if it is determined that the UE has to-be-transmitted uplink data, or if it is determined that a logical channel of the UE has to-be-transmitted uplink data, where he logical channel is a logical channel configured with the control information or a logical channel in a logical channel group configured with the control information, starting a timer according to the scheduled time; and if the timer expires, triggering the uplink grant resource request, or if the timer does not expire, skipping triggering the uplink grant resource request; or
the uplink grant resource request is the uplink grant resource request that is implemented by sending an SR, the control information acquired by the processor is a scheduled time, and the processor is specifically configured to use the following manner to control, according to the control information, a procedure of processing the uplink grant resource request: starting from a TTI in which the SR is triggered, in any TTI among TTIs whose quantity is the period repetition coefficient multiplied by an SR period, continuing a sending decision processing procedure that is in the any TTI and implemented by means of an SR, and in other TTIs, ending sending decision processing procedures that are in the other TTIs and implemented by means of an SR, where the other TTIs are TTIs, except the any TTI, among the TTIs whose quantity is the period repetition coefficient multiplied by the SR period starting from the TTI in which the SR is triggered; or
the uplink grant resource request is the uplink grant resource request that is implemented by sending an SR, the control information acquired by the processor is a period repetition coefficient, and the processor is specifically configured to use the following manner to control, according to the control information, a procedure of processing the uplink grant resource request: if the UE has to-be-transmitted uplink data or if it is determined that a logical channel of the UE has to-be-transmitted uplink data, where the logical channel is a logical channel configured with the control information or a logical channel in a logical channel group configured with the control information, starting a timer, where a scheduled time of the timer is the period repetition coefficient multiplied by an SR period; and before the timer expires, determining not to trigger the uplink grant resource request that is implemented by sending an SR, and when the timer expires, determining to trigger the uplink grant resource request that is implemented by sending an SR; or
the control information acquired by the processor is a scheduled time, and the processor is specifically configured to use the following manner to control, according to the control information, a procedure of processing the uplink grant resource request: if an SR counter is equal to 0, starting a timer according to the scheduled time; and before the timer expires, ending a sending decision processing procedure of the uplink resource request that is implemented by means of an SR, where the sending decision processing procedure is in a current transmission time interval TTI, and when the timer expires, continuing the sending decision processing procedure of the uplink resource request that is implemented by means of an SR, where the sending decision processing procedure is in the current TTI; or
the control information acquired by the processor is a scheduled time, and the processor is specifically configured to use the following manner to control, according to the control information, a procedure of processing the uplink grant resource request: if some uplink data of the UE becomes available or if uplink data corresponding to a logical channel becomes available, where the logical channel is a logical channel configured with the control information or a logical channel in a logical channel group configured with the control information, and if a current TTI is a TTI in which BSR triggers the SR, starting a timer according to the scheduled time, before the timer expires, setting the SR to be an invalid SR in the current TTI, and when the timer expires, setting the SR to be a valid SR in the current TTI; or
the control information acquired by the processor is a period repetition coefficient, and the processor is specifically configured to use the following manner to control, according to the control information, a procedure of processing the uplink grant resource request: if the UE has to-be-transmitted uplink data or if it is determined that a logical channel of the UE has to-be-transmitted uplink data, where the logical channel is a logical channel configured with the control information or a logical channel in a logical channel group configured with the control information, and if a current TTI is a TTI in which BSR triggers the SR, starting a timer, where a scheduled time of the timer is the period repetition coefficient multiplied by an SR period; before the timer expires, setting the SR to be an invalid SR in the current TTI, and when the timer expires, setting the SR to be a valid SR in the current TTI; or
the control information acquired by the control information acquiring module is a period repetition coefficient, and the processor is specifically configured to use the following manner to control, according to the control information, a procedure of processing the uplink grant resource request: if the UE has to-be-transmitted uplink data, or if it is determined that a logical channel of the UE has to-be-transmitted uplink data, where the logical channel is a logical channel configured with the control information or a logical channel in a logical channel group configured with the control information, starting from a TTI in which the SR is triggered, in any TTI among TTIs whose quantity is the period repetition coefficient multiplied by an SR period, setting the SR triggered by BSR in the any TTI to be valid, and in other TTIs, setting the SR triggered by BSR in the other TTIs to be invalid, where the other TTIs are TTIs, except the any TTI, among the TTIs whose quantity is the period repetition coefficient multiplied by the SR period starting from the TTI in which the SR is triggered.

With reference to the ninth aspect, in a twelfth possible implementation manner of the ninth aspect, the control information acquired by the processor is a data amount threshold; and
the processor is specifically configured to use the following manner to control, according to the control information acquired by the processor, a procedure of processing the uplink grant resource request:
if the UE has to-be-transmitted uplink data, or if it is determined that a logical channel of the UE has to-be-transmitted uplink data, where the logical channel is a logical channel configured with the control information or a logical channel in a logical channel group configured with the control information, and
if it is determined that a data amount of the uplink data is not less than the data amount threshold, trigger the uplink grant resource request, or if the UE determines that a data amount of the uplink data is less than the data amount threshold, skipping triggering the uplink grant resource request.

With reference to the ninth aspect, in a thirteenth possible implementation manner of the ninth aspect, the control information acquired by the processor is an indication to reduce a quantity of times of processing the uplink grant resource request; and
the processor is specifically configured to use the following manner to control, according to the control information acquired by the processor, a procedure of processing the uplink grant resource request:
determining, according to the indication, not to trigger the uplink grant resource request; or
ending, according to the indication, a decision processing procedure of the uplink grant resource request; or
if a logical channel that triggers buffer status reporting BSR is a logical channel configured with the control information or a logical channel that triggers BSR is a logical channel in a logical channel group configured with the control information, setting a SR that has been triggered by the BSR to be invalid in a current transmission time interval TTI.

With reference to any possible implementation manner of the first to thirteenth possible implementation manners of the ninth aspect, in a fourteenth possible implementation manner of the ninth aspect, the processor is further configured to:
after the SR is set to be invalid, skip determining whether to notify a physical layer to send the SR or whether to enter a random access process on the invalid SR; or
if the on-duration timer of the UE is not running, skip determining whether to notify a physical layer to send the SR or whether to enter a random access process on the invalid SR, or if the on-duration timer of the UE is running, determine whether to notify a physical layer to send the SR or whether to enter a random access process on the invalid SR; or
if the UE is in an inactive time, skip determining whether to notify a physical layer to send the SR or whether to enter a random access process on the invalid SR, or if the UE is in an active time, determine whether to notify a physical layer to send the SR or whether to enter a random access process on the invalid SR.

With reference to the ninth aspect, in a fifteenth possible implementation manner of the ninth aspect, the uplink grant resource request is the uplink grant resource request that is implemented by sending the SR, the control information is a period repetition coefficient and the period repetition coefficient is for one logical channel or one logical channel group; and
the processor is further configured to:
determine an SR resource available for sending the SR, where the SR is triggered by the logical channel or the logical channel group, and a period of the SR resource is an SR period currently configured by a base station for the UE multiplied by the period repetition coefficient; and
the user equipment further includes a transmitter, configured to send, on the resource determined by the processor and for sending the SR, the SR to the base station.

With reference to any possible implementation manner of the first to fifteenth possible implementation manners of the ninth aspect, in a sixteenth possible implementation manner of the ninth aspect, the processor is further configured to:
acquire, from the memory, the control information configured in advance, where the memory is further configured to store the control information configured in advance; or
acquire the control information from an Open Mobile Alliance device management procedure; or
receive an attach accept message from a mobile management entity MME, and acquire the control information from the attach accept message; or
receive a radio resource control RRC connection reconfiguration message from the base station, and acquire the control information from the RRC connection reconfiguration message; or
acquire the control information by receiving a broadcast message from the base station; or
acquire the control information by receiving a paging message from the base station.

With reference to the sixteenth possible implementation manner of the ninth aspect, in a seventeenth possible implementation manner of the ninth aspect, the user equipment further includes:
a transmitter, configured to send an RRC connection request message or an RRC connection setup complete message to the base station, where the RRC connection request message or the RRC connection setup complete message carries a preset type indication; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type; or
send, in an attachment process or a service request process, a preset type indication to the MME, so that the MME sends the preset type indication to the base station; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type; or
send, in an attachment process or a service request process, a preset type indication to the MME; and receive the attach accept message sent by the MME to the user equipment UE, and acquire the control information from the attach accept message, where the control information is control information corresponding to the preset type indication, and the preset type indication is used for indicating at least one of the following: a terminal type is a preset terminal type, and a service type is a preset service type.

With reference to the ninth aspect, in an eighteenth possible implementation manner of the ninth aspect, the control information acquired by the processor is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE; and
the processor is further configured to:
acquire the available physical random access channel, where the available physical random access channel is a physical random access channel whose number mod the period of the available physical random access channel is equal to the offset value, where the number is obtained by numbering, in chronological order or first based on frequencies and then in chronological order, physical random access channels that are configured, in a system message broadcast by the base station, for the UE or the logical channel or logical channel group of the UE; and
initiate the random access process on the acquired available physical random access channel, so as to request the uplink grant resource.

With reference to the eighteenth possible implementation manner of the ninth aspect, in a nineteenth possible implementation manner of the ninth aspect, the control information acquired by the processor further includes a preamble; and
the processor is further configured to:
send, on the acquired available physical random access channel, the preamble to initiate the random access process.

With reference to the eighteenth or nineteenth possible implementation manner of the ninth aspect, in a twentieth possible implementation manner of the ninth aspect, the processor is configured to:
after the UE or the logical channel or logical channel group of the UE on the available physical random access channel sends the preamble,
if a random access response fails and a quantity of times the UE sends the preamble does not reach a maximum quantity of sending times, initiate the random access process on the acquired available physical random access channel, to request the uplink grant resource; or initiate the random access process on a physical random access channel among the physical random access channels that are configured, in the system message broadcast by the base station, for the UE or the logical channel or logical channel group of the UE, so as to request the uplink grant resource.

According to a tenth aspect, an embodiment of the present invention provides a base station, including: a transmitter, a memory and a processor connected to the memory, where the memory stores a group of program code therein, and the processor is configured to invoke the program code stored in the memory to:
configure control information for user equipment, UE, wherein the control information is used for instructing to reduce a quantity of times of processing an uplink grant resource request, and the uplink grant resource request includes a schedule request, SR and the control information include a scheduled time; and
the transmitter (101) is configured to send the control information to the UE so that the UE starts a timer according to the scheduled time, when the UE determines that the UE has to-be-transmitted uplink data, or when the UE determines that a logical channel of the UE has to-be-transmitted uplink data,
wherein the logical channel is a logical channel configured with the control information or
a logical channel in a logical channel group configured with the control information; and when the timer expires, the UE triggers the uplink grant resource request, or when the timer does not expire, the UE skips triggering the uplink grant resource request.

With reference to the tenth aspect, in a first possible implementation manner of the tenth aspect, the transmitter is further configured to send a radio resource control RRC connection reconfiguration message to the UE, where the RRC connection reconfiguration message carries the control information; or configured to send a broadcast message, where the broadcast message carries the control information; or configured to send a paging message, where the paging message carries the control information.

With reference to the tenth aspect, in a second possible implementation manner of the tenth aspect, the base station further includes:
a receiver, configured to: before the processor configures the control information for the UE, receive an RRC connection request message or an RRC connection setup complete message that is sent by the UE and carries a preset type indication, where the preset type indication is used for indicating at least one of the following: a terminal type is a preset terminal type, and a service type is a preset service type; and
the processor is further configured to configure, for the UE, the control information corresponding to the preset type indication.

With reference to the tenth aspect, in a third possible implementation manner of the tenth aspect, the base station further includes a receiver, configured to: before the processor configures the control information for the UE, receive a preset type indication sent by a mobile management entity MME, where the preset type indication is used for indicating at least one of the following: a aspect, the base station further includes a receiver, configured to: before the processor configures the control information for the UE, receive a preset type indication sent by a mobile management entity MME, where the preset type indication is used for indicating at least one of the following: a terminal type is a preset terminal type, and a service type is a preset service type; and
the processor is further configured to configure, for the UE, the control information corresponding to the preset type indication.

With reference to the tenth aspect or any possible implementation manner of the first to third possible implementation manners thereof, in a fourth possible implementation manner of the tenth aspect, the control information configured by the processor for the UE is control information of at least one of a UE level, a logical channel level, and a logical channel group level.

With reference to the fourth possible implementation manner of the tenth aspect, in a fifth possible implementation manner of the tenth aspect, the transmitter is further configured to: if the control information is control information at the UE level, send, to the UE, an RRC connection reconfiguration message in which the control information is padded in a time sequence arrangement request configuration information element;
if the control information is control information at the logical channel level, send, to the UE, an RRC connection reconfiguration message in which the control information is padded in a logical channel configuration information element; or
if the control information is control information at the logical channel group level, send, to the UE, an RRC connection reconfiguration message in which the control information is padded in a logical channel group configuration information element.

With reference to the tenth aspect or any possible implementation manner of the first to fifth possible implementation manners thereof, in a sixth possible implementation manner of the tenth aspect, the control information configured by the processor for the UE is at least one of a time, an SR period repetition coefficient, a data amount threshold, and an indication to reduce a quantity of times of processing the uplink grant resource request.

With reference to the tenth aspect, in a seventh possible implementation manner of the tenth aspect, the control information configured by the processor is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE.

With reference to the seventh possible implementation manner of the tenth aspect, in an eighth possible implementation manner of the tenth aspect, the control information configured by the processor further includes a preamble.

According to an eleventh aspect, an embodiment of the present invention provides a computer program product, including a computer readable medium, where the readable medium includes a group of program code for executing any one of the foregoing methods for controlling an uplink grant resource request.

In the foregoing solution, UE acquires control information, and controls, according to the control information, a procedure of processing an uplink grant resource request, so that when the UE frequently generates and sends small data packets, or when a service used by the UE frequently generates and sends small data packets, trigger of an SR or random access can be restricted or processing on an SR that has been triggered can be restricted. Therefore, this resolves problems of frequent activation of the UE and high power consumption of the UE that are caused by frequently triggering an SR, or frequently triggering random access, or frequently sending an SR that has been triggered, or frequent random access, and effectively reduces the power consumption of the UE.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for controlling an uplink grant resource request according to an embodiment of the present invention;
FIG. 2 is a flowchart of a method for controlling an uplink grant resource request according to another embodiment of the present invention;
FIG. 3 is a flowchart of a method for controlling an uplink grant resource request according to another embodiment of the present invention;
FIG. 4 is a flowchart of a method for controlling an uplink grant resource request according to another embodiment of the present invention;
FIG. 5 is a schematic structural diagram of user equipment according to another embodiment of the present invention;
FIG. 6 is a schematic structural diagram of a base station according to another embodiment of the present invention;
FIG. 7 is a schematic structural diagram of a mobility management entity device according to another embodiment of the present invention;
FIG. 8 is a schematic structural diagram of a mobility management entity device according to another embodiment of the present invention;
FIG. 9 is a schematic structural diagram of user equipment according to another embodiment of the present invention;
FIG. 10 is a schematic structural diagram of a base station according to another embodiment of the present invention; and
FIG. 11 is a schematic structural diagram of a mobility management entity device according to another embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some but not all of the embodiments of the present invention. All other embodiments obtained by persons of ordinary skill in the art based on the embodiments of the present invention without creative efforts shall fall within the protection scope of the present invention.

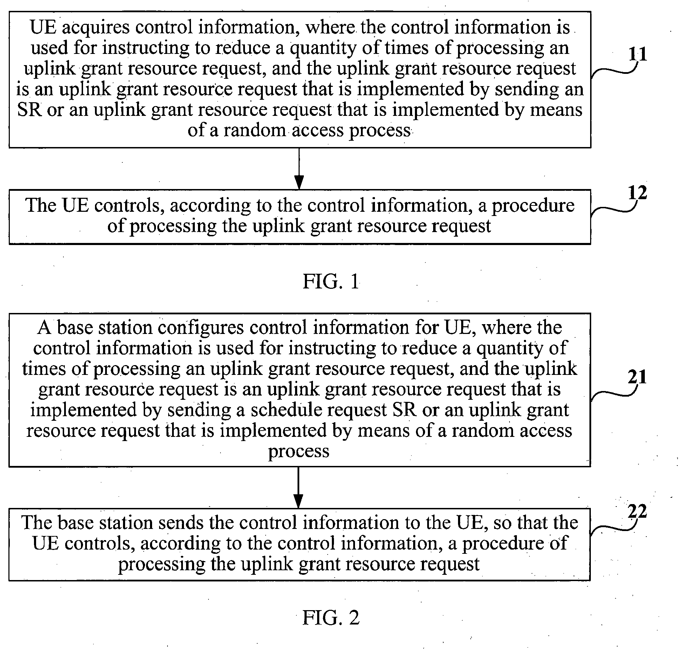

FIG. 1 is a flowchart of a method for controlling an uplink grant resource request according to an embodiment of the present invention, and the method shown in this embodiment is a processing procedure on a user equipment (User Equipment, UE) side. On the UE side, the method for controlling an uplink grant resource request includes:
Step 11: UE acquires control information, where the control information is used for instructing to reduce a quantity of times of processing an uplink grant resource request, and the uplink grant resource request is an uplink grant resource request that is implemented by sending an SR or an uplink grant resource request that is implemented by means of a random access process.

For example, the UE may acquire the control information that is configured in advance; or
the UE acquires the control information from an open mobile alliance device management (Open Mobile Alliance Device Management, OMA DM); or
the UE may acquire the control information from a mobile management entity (Mobile Management Entity, MME), for example, the UE may acquire the control information from an attach accept (attach accept) message sent by the MME, where the attach accept message carries the control information; or
the UE may acquire the control information from a base station, for example:
the UE may acquire the control information from a radio resource control (Radio Resource Control, RRC) connection reconfiguration (RRC connection reconfigration) message sent by the base station, where the RRC connection reconfiguration message carries the control information; or
the UE may acquire the control information by receiving a broadcast message from the base station, where the broadcast message carries the control information; or
the UE may acquire the control information by receiving a paging message from the base station, where the paging message carries the control information.

Further, before the UE acquires the control information from an RRC connection reconfiguration message sent by the base station, the method may further include:
sending, by the UE, an RRC connection request (RRC connection request) message or an RRC connection setup complete (RRC connection setup complete) message to the base station, where the RRC connection request message or RRC connection setup complete message carries a preset type indication; and receiving, by the UE, an RRC connection reconfiguration message sent by the base station, and acquiring control information from the RRC connection reconfiguration message, where the control information is control information corresponding to the preset type indication, and the preset type indication is used for indicating at least one of the following: a terminal type is a preset terminal type, and a service type is a preset service type, where the preset terminal type refers to a type of terminals having a feature of frequently generating and sending small data packets, for example, a meter terminal, and the preset service type refers to a type of services having a feature of frequently generating and sending small data packets, for example, a meter reporting service or an instant messaging service such as WeChat;
or, the method may further include:
   sending, by the UE, a preset type indication to an MME during an attachment (attach) process or a service request (service request) process, so that the MME sends the preset type indication to the base station; and receiving, by the UE, an RRC connection reconfiguration message sent by the base station, and acquiring control information from the RRC connection reconfiguration message, where the control information is control information corresponding to the preset type indication, and the preset type indication is used for indicating at least one of the following: a terminal type is a preset terminal type, and a service type is a preset service type; in this way, the base station can learn, according to the preset type indication, whether the UE belongs to the preset terminal type, or whether a service used by the UE belongs to the preset service type, so that when the UE belongs to the preset terminal type or the service used by the UE belongs to the preset service type, the base station sends the control information to the UE.

Further, the receiving, by the UE, an attach accept message from a mobile management entity MME, and acquiring the control information from the attach accept message may include:
sending, by the UE in an attachment process or a service request process, a preset type indication to the MME; and receiving, by the UE, the attach accept message sent by the MME to the UE, and acquiring the control information from the attach accept message, where the control information is control information corresponding to the preset type indication, and the preset type indication is used for indicating at least one of the following: a terminal type is a preset terminal type, and a service type is a preset service type.

The control information may be control information configured for the UE (namely, control information at a UE level, which is applicable to all services on the UE), or may be control information configured for a logical channel of the UE (namely, control information at a logical channel level), or may further be control information configured for a logical channel group of the UE (namely, control information at a logical channel group level).

For example, acquiring, by the UE, control information at the UE level may include:
acquiring, by the UE, the control information at the UE level from a schedule request configuration (SchedulingRequestConfig) information element in the RRC connection reconfiguration message sent by the base station.

For example, acquiring, by the UE, control information at the logical channel level may include:
acquiring, by the UE, the control information at the logical channel level from a logical channel configuration (SchedulingRequestConfig) information element in the RRC connection reconfiguration message sent by the base station.

For example, acquiring, by the UE, control information at the logical channel group level may include:
acquiring, by the UE, the control information at the logical channel group level from a logical channel group configuration (SchedulingRequestConfig) information element in the RRC connection reconfiguration message sent by the base station, where the logical channel group configuration information element is a newly added information element.

The control information at each level may be a scheduled time, a period repetition coefficient, a data amount threshold, an indication to reduce the uplink grant resource request, or the like.

Step 12: The UE controls, according to the control information, a procedure of processing the uplink grant resource request.

For the uplink grant resource that is implemented by sending an SR, reducing a quantity of times of processing the uplink grant resource request may be reducing SR trigger in an SR trigger decision process, or may be reducing SR sending decisions in an SR sending decision process, or may further be reducing SRs that have been decided to be sent.

The SR trigger decision process is a part of, that is, a procedure of a buffer status reporting (buffer status reporting, BSR) processing process, and the SR sending decision process is a part of, that is, a procedure of an SR processing process. If the UE performs restriction processing on an SR that has been decided to be sent, it actually includes restriction processing on at least one behavior of sending the SR and a random access decision.

For the uplink grant resource request that is implemented by means of a random access process, reducing a quantity of times of the uplink grant resource request may be reducing trigger of a random access request in a random access request triggering process, or may be reducing random access request sending decisions in a random access request sending process.

When the control information is an indication to reduce a quantity of times of processing the uplink grant resource request, the controlling, by the UE according to the control information, a procedure of processing the uplink grant resource request may include:
if the UE is in an inactive time, determining, by the UE according to the indication, not to trigger the uplink grant resource request, or if the UE is in an active time, determining, by the UE according to the indication, to trigger the uplink grant resource request, where the triggering the uplink grant resource request may be triggering to generate an SR, or may be triggering to generate a random access request.

Alternatively, that the UE reduces, according to the indication of the control information, a quantity of times of requesting an uplink grant resource may include:
if the UE is in an inactive time, ending, by the UE according to the indication, a sending decision processing procedure of the uplink grant resource request, where the sending decision processing procedure is in a current transmission time interval (Transmission Time Interval, TTI), or if it is determined that the UE is in an active time, continuing, by the UE according to the indication, a sending decision processing procedure of the uplink grant resource request, where the sending decision processing procedure is in a current TTI.

Alternatively, that the UE reduces, according to the indication of the control information, a quantity of times of requesting an uplink grant resource may include:
if a logical channel that triggers BSR is a logical channel configured with the control information or a logical channel that triggers BSR is a logical channel in a logical channel group configured with the control information, and if the UE is in an inactive time, setting, by the UE, an SR that has been triggered by the BSR to be invalid in a current TTI; or if it is determined that the UE is in an active time, setting, by the UE, an SR that has been triggered by the BSR to be valid in a current TTI.

When the indication is a scheduled time, the determining, by the UE, according to the indication, not to trigger the uplink grant resource request if the UE is in an inactive time, or determining, by the UE, according to the indication, to trigger the uplink grant resource request if the UE is in an active time may include: if the UE determines that the UE has to-be-transmitted uplink data, or a logical channel has to-be-transmitted uplink data, where the logical channel is a logical channel configured with the control information or a logical channel in a logical channel group configured with the control information, starting, by the UE, a timer according to the time; and
before the started timer expires, if the UE determines that the UE is in an inactive time, determining, by the UE, not to trigger the uplink grant resource request, or the UE determines that the UE is in an active time, determining, by the UE, to trigger the uplink grant resource request, and when the timer expires, determining, by the UE, to trigger the uplink grant resource request; or,
when the uplink grant resource is the uplink grant resource request that is implemented by sending an SR, and the indication is a period repetition coefficient, the determining, by the UE according to the indication, not to trigger the uplink grant resource request if the UE is in an inactive time, and determining, by the UE according to the indication, to trigger the uplink grant resource request if the UE is in an active time may include:
if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer, where a scheduled time of the timer is the period repetition coefficient multiplied by an SR period; and before the timer expires, if the UE determines that the UE is in an inactive time, determining, by the UE, not to trigger the uplink grant resource request that is implemented by sending an SR, or if the UE determines that the UE is in an active time, determining, by the UE, to trigger the uplink grant resource request that is implemented by sending an SR; and when the timer expires, determining, by the UE, to trigger the uplink grant resource request.

When the indication is a data amount threshold, before the determining, by the UE according to the indication, not to trigger the uplink grant resource request if the UE is in an inactive time, and determining, by the UE according to the indication, to trigger the uplink grant resource request if the UE is in an active time, the method for controlling an uplink grant resource request provided by this embodiment of the present invention may further include: determining, by the UE, that the UE has to-be-transmitted uplink data, or determining, by the UE, that a logical channel of the UE has to-be-transmitted uplink data, where the logical channel is a logical channel configured with the control information or a logical channel in a logical channel group configured with the control information, and determining, by the UE, that a data amount of the uplink data is less than the data amount threshold.

When the indication is a scheduled time, the ending, by the UE according to the indication, a sending decision processing procedure of the uplink grant resource request if the UE is in an inactive time, where the sending decision processing procedure is in a current TTI, or continuing, by the UE according to the indication, a sending decision processing procedure of the uplink grant resource request if the UE is in an active time, where the sending decision processing procedure is in a current TTI, may include:
if an SR counter is equal to 0, starting a timer according to the scheduled time; and before the timer expires, if the UE is in an inactive time, ending, by the UE, the sending decision processing procedure of the uplink grant resource request that is implemented by means of an SR, where the sending decision processing procedure is in the current TTI, or if the UE is in an active time, continuing, by the UE, the sending decision processing procedure of the uplink grant resource request that is implemented by means of an SR, where the sending decision processing procedure is in the current TTI; and when the timer expires, continuing, by the UE, the sending decision processing procedure of the uplink grant resource request that is implemented by means of an SR, where the sending decision processing procedure is in the current TTI.

When the uplink grant resource request is the uplink grant resource that is implemented by sending an SR, and the indication is a period repetition coefficient, the ending, by the UE according to the indication, a sending decision processing procedure of the uplink grant resource request if the UE is in an inactive time, where the sending decision processing procedure is in a current transmission time interval TTI, or continuing, by the UE according to the indication, a sending decision processing procedure of the uplink grant resource request if the UE is in an active time, where the sending decision processing procedure is in a current TTI, may include:
starting from a TTI in which the SR is triggered, in TTIs whose quantity is the period repetition coefficient multiplied by an SR period, if the UE is in an inactive time, ending, by the UE, the sending decision processing procedure of the uplink grant resource request that is implemented by means of an SR, where the sending decision processing procedure is in the current TTI, or if the UE is in an active time, continuing, by the UE, the sending decision processing procedure of the uplink grant resource request that is implemented by means of an SR, where the sending decision processing procedure is in the current TTI.

When the control information is an indication to reduce a quantity of times of processing the uplink grant resource request, the controlling, by the UE according to the control information, a procedure of processing the uplink grant resource request may include:
if the UE determines that an on-duration timer of the UE is not running, determining, by the UE according to the indication, not to trigger the uplink grant resource request, or if the UE determines that an on-duration timer of the UE is running, determining, according to the indication, to trigger the uplink grant resource request; or
if the UE determines that an on-duration timer of the UE is not running, ending, by the UE according to the indication, a sending decision processing procedure of the uplink grant resource request, where the sending decision processing procedure is in a current transmission time interval TTI, or if it is determined that an on-duration timer of the UE is running, continuing, by the UE according to the indication, a sending decision processing procedure of the uplink grant resource request, where the sending decision processing procedure is in a current transmission time interval TTI; or
if the UE determines that an on-duration timer of the UE is not running and if a logical channel that triggers BSR is a logical channel configured with the control information or a logical channel that triggers BSR is a logical channel in a logical channel group configured with the control information, setting, by the UE, an SR that has been triggered by the BSR to be invalid in a current transmission time interval TTI, or if the UE determines that an on-duration timer of the UE is running and if a logical channel that triggers buffer status reporting BSR is a logical channel configured with the control information or a logical channel that triggers BSR is a logical channel in a logical channel group configured with the control information, setting, by the UE, the SR that has been triggered by the BSR to be valid in a current TTI.

When the indication is a scheduled time, the determining, by the UE according to the indication, not to trigger the uplink grant resource request if the UE determines that an on-duration timer of the UE is not running, or determining, according to the indication, to trigger the uplink grant resource request if the UE determines that an on-duration timer of the UE is running may include: if the UE determines that the UE has to-be-transmitted uplink data, or the UE determines that a logical channel of the UE has to-be-transmitted uplink data, where the logical channel is a logical channel configured with the control information or a logical channel in a logical channel group configured with the control information, starting, by the UE, a timer according to the scheduled time; before the timer expires, if the UE determines that the on-duration timer of the UE is not running, determining, by the UE, not to trigger the uplink grant resource request that is implemented by sending an SR, or if the UE determines that the on-duration timer of the UE is running, determining, by the UE, to trigger the uplink grant resource request that is implemented by sending an SR; and when the timer expires, determining, by the UE, to trigger the uplink grant resource request that is implemented by sending an SR; or,
the uplink grant resource is the uplink grant resource request that is implemented by sending an SR, the indication is a period repetition coefficient, and the determining, by the UE according to the indication, not to trigger the uplink grant resource request if the UE determines that an on-duration timer of the UE is not running, or determining, according to the indication, to trigger the uplink grant resource request if the UE determines that an on-duration timer of the UE is running may include: if the UE determines that the UE has to-be-transmitted uplink data, or the UE determines that a logical channel of the UE has to-be-transmitted uplink data, where the logical channel is a logical channel configured with the control information or a logical channel in a logical channel group configured with the control information, starting, by the UE, a timer, where a scheduled time of the timer is the period repetition coefficient multiplied by an SR period; and before the timer expires, if it is determined that the on-duration timer of the UE is not running, determining, by the UE, not to trigger the uplink grant resource request that is implemented by sending an SR, or if it is determined that the on-duration timer of the UE is running, determining, by the UE, to trigger the uplink grant resource request that is implemented by sending an SR; and when the timer expires, determining, by the UE, to trigger the uplink grant resource request that is implemented by sending an SR.

When the indication is a data amount threshold, before the determining, by the UE according to the indication, not to trigger the uplink grant resource request if the UE is in an inactive time, and determining, by the UE according to the indication, to trigger the uplink grant resource request if the UE is in an active time, the method for controlling an uplink grant resource request provided by this embodiment of the present invention may further include: determining, by the UE, that the UE has to-be-transmitted uplink data, or determining, by the UE, that a logical channel of the UE has to-be-transmitted uplink data, where the logical channel is a logical channel configured with the control information or a logical channel in a logical channel group configured with the control information, and determining, by the UE, that a data amount of the uplink data is less than the data amount threshold.

When the indication is a scheduled timer, the ending, by the UE according to the indication, a sending decision processing procedure of the uplink grant resource request if the UE determines that an on-duration timer of the UE is not running, where the sending decision processing procedure is in a current transmission time interval TTI, or continuing, by the UE according to the indication, a sending decision processing procedure of the uplink grant resource request if it is determined that an on-duration timer of the UE is running, where the sending decision processing procedure is in a current transmission time interval TTI, may include:
if an SR counter is equal to 0, starting a timer according to the scheduled time; and
before the timer expires, if the UE determines that the on-duration timer of the UE is not running, ending, by the UE, the sending decision processing procedure of the uplink grant resource request that is implemented by means of an SR, where the sending decision processing procedure is in the current TTI, or if the UE determines that the on-duration timer of the UE is running, continuing, by the UE, the sending decision processing procedure of the uplink grant resource request that is implemented by means of an SR, where the sending decision processing procedure is in the current TTI; and when the timer expires, continuing, by the UE, the sending decision processing procedure of the uplink grant resource request that is implemented by means of an SR, where the sending decision processing procedure is in the current TTI.

When the uplink grant resource request is the uplink grant resource that is implemented by sending an SR, and the indication is a period repetition coefficient, the ending, by the UE according to the indication, a sending decision processing procedure of the uplink grant resource request if the UE determines that an on-duration timer of the UE is not running, where the sending decision processing procedure is in a current transmission time interval TTI, or continuing, by the UE according to the indication, a sending decision processing procedure of the uplink grant resource request if the UE determines that an on-duration timer of the UE is running, where the sending decision processing procedure is in a current transmission time interval TTI, may include:
starting from a TTI in which the SR is triggered, in TTIs whose quantity is the period repetition coefficient multiplied by an SR period, if the UE determines that the on-duration timer of the UE is not running, ending, by the UE, the sending decision processing procedure that is in the current TTI and implemented by means of an SR, or if the UE determines that the on-duration timer of the UE is running, continuing, by the UE, the sending decision processing procedure that is in the current TTI and implemented by means of an SR.

When the control information is a scheduled time, the controlling, by the UE according to the control information, a procedure of processing the uplink grant resource request may include: if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting, by the UE, a timer according to the scheduled time; and if the timer expires, triggering the uplink grant resource request, or if the timer does not expire, skipping triggering the uplink grant resource request; or
the uplink grant resource request is the uplink grant resource request that is implemented by sending an SR, the control information is a scheduled time, and the controlling, by the UE according to the control information, a procedure of processing the uplink grant resource request includes: starting from a TTI in which the SR is triggered, in any TTI among TTIs whose quantity is a period repetition coefficient multiplied by an SR period, continuing, by the UE, a sending decision processing procedure that is in the any TTI and implemented by means of an SR, and in other TTIs, ending, by the UE, sending decision processing procedures that are in the other TTIs and implemented by means of an SR, where the other TTIs are TTIs, except the any TTI, among the TTIs whose quantity is the period repetition coefficient multiplied by the SR period starting from the TTI in which the SR is triggered; or
the uplink grant resource request is the uplink grant resource request that is implemented by sending an SR, the control information is a period repetition coefficient, and the controlling, by the UE according to the control information, a procedure of processing the uplink grant resource request includes: if the UE determines that the UE has to-be-transmitted uplink data or if the UE determines that a logical channel of the UE has to-be-transmitted uplink data, where the logical channel is a logical channel configured with the control information or a logical channel in a logical channel group configured with the control information, starting, by the UE, a timer, where a scheduled time of the timer is the period repetition coefficient multiplied by an SR period; and before the timer expires, determining, by the UE, not to trigger the uplink grant resource request that is implemented by sending an SR, and when the timer expires, determining, by the UE, to trigger the uplink grant resource request that is implemented by sending an SR; or
the control information is a scheduled time, and the controlling, by the UE according to the control information, a procedure of processing the uplink grant resource request includes: if an SR counter is equal to 0, starting a timer according to the scheduled time; and before the timer expires, ending a sending decision processing procedure of the uplink resource request that is implemented by means of an SR, where the sending decision processing procedure is in a current transmission time interval TTI, and when the timer expires, continuing, by the UE, the sending decision processing procedure of the uplink resource request that is implemented by means of an SR, where the sending decision processing procedure is in the current TTI; or
the control information is a scheduled time, and the controlling, by the UE according to the control information, a procedure of processing the uplink grant resource request includes: if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, and if a current TTI is a TTI in which BSR triggers the SR, starting, by the UE, a timer according to the scheduled time; and before the timer expires, setting, by the UE, the SR to be an invalid SR in the current TTI; or
the control information is a period repetition coefficient, and the controlling, by the UE according to the control information, a procedure of processing the uplink grant resource request includes: if the UE has to-be-transmitted uplink data or if the UE determines that a logical channel of the UE has to-be-transmitted uplink data, where the logical channel is a logical channel configured with the control information or a logical channel in a logical channel group configured with the control information, and if a current TTI is a TTI in which BSR triggers the SR, starting, by the UE, a timer, where a scheduled time of the timer is the period repetition coefficient multiplied by an SR period; before the timer expires, setting, by the UE, the SR to be an invalid SR in the current TTI, and when the timer expires, setting, by the UE, the SR to be a valid SR in the current TTI; or
the control information is a period repetition coefficient, and the controlling, by the UE according to the control information, a procedure of processing the uplink grant resource request includes: if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, starting from a TTI in which the SR is triggered, in any TTI among TTIs whose quantity is the period repetition coefficient multiplied by an SR period, setting, by the UE, the SR triggered by BSR in the any TTI to be valid, and in other TTIs, setting, by the UE, the SR triggered by BSR in the other TTIs to be invalid, where the other TTIs are TTIs, except the any TTI, among the TTIs whose quantity is the period repetition coefficient multiplied by the SR period starting from the TTI in which the SR is triggered.

When the control information is a data amount threshold, the controlling, by the UE according to the control information, a procedure of processing the uplink grant resource request includes:
if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, and
if the UE determines that a data amount of the uplink data is not less than the data amount threshold, triggering, by the UE, the uplink grant resource request, or if the UE determines that a data amount of the uplink data is less than the data amount threshold, skipping, by the UE, triggering the uplink grant resource request.

When the control information is an indication to reduce a quantity of times of processing the uplink grant resource request, the controlling, by the UE according to the control information, a procedure of processing the uplink grant resource request may include:
determining, by the UE according to the indication, not to trigger the uplink grant resource request; or
ending, by the UE according to the indication, a decision processing procedure of the uplink grant resource request; or
if a logical channel that triggers buffer status reporting BSR is a logical channel configured with the control information or a logical channel that triggers BSR is a logical channel in a logical channel group configured with the control information, setting, by the UE, an SR that has been triggered by the BSR to be invalid in a current transmission time interval TTI.

Further, after the UE sets the SR to be invalid, the method for controlling an uplink grant resource request provided by this embodiment of the present invention may further include: skipping, by the UE, determining whether to notify a physical layer to send the SR or whether to enter a random access process on the invalid SR; or,
if the on-duration timer of the UE is not running, skipping, by the UE, determining whether to notify a physical layer to send the SR or whether to enter a random access process on the invalid SR, or if the on-duration timer of the UE is running, determining, by the UE, whether to notify a physical layer to send the SR or whether to enter a random access process on the invalid SR; or
if the UE is in an inactive time, skipping determining whether to notify a physical layer to send the SR or whether to enter a random access process on the invalid SR, or if the UE is in an active time, determining whether to notify a physical layer to send the SR or whether to enter a random access process on the invalid SR.

The uplink grant resource request is the uplink grant resource request that is implemented by sending the SR, the control information is a period repetition coefficient and the period repetition coefficient is for one logical channel or one logical channel group; and
the controlling, by the UE according to the control information, a procedure of processing the uplink grant resource request may include:
determining, by the UE, an SR resource available for sending the SR, where the SR is triggered by the logical channel or the logical channel group, and a period of the SR resource is an SR period currently configured by a base station for the UE multiplied by the period repetition coefficient; and
sending, by the UE on the resource for sending the SR, the SR to the base station.

In this embodiment, UE acquires control information, and reduces, according to the control information, a quantity of times of processing an uplink grant resource request, so that when the UE frequently generates and sends small data packets, or when a service used by the UE frequently generates and sends small data packets, trigger of an SR can be restricted or processing on an SR that has been triggered can be restricted. Therefore, this resolves problems of frequent activation of the UE and high power consumption of the UE that are caused by frequently triggering an SR, or frequently sending an SR that has been triggered, or frequent random access, and effectively reduces the power consumption of the UE.

When the UE requests an uplink grant resource by means of a random access process, the control information may be physical random access channel configuration information, and the physical random access channel configuration information may include a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE.

The random access process includes:
The UE selects, according to configuration information broadcast by a base station, a physical random access channel resource and a preamble for random access, and sends, on the selected physical random access channel resource, the selected preamble for random access, where a total of 64 preambles are provided, the preambles are numbered 0 to 63, and the UE may select one from the 64 preambles and use the selected preamble for random access. The 64 preambles and their numbers may be fixed on the UE.

Then, the UE listens on a PDCCH to receive a random access response.

After receiving the response, the UE acquires scheduling information from the response, and sends a message to the base station based on the scheduling information. Then, a contention resolution timer is started (different terminals may choose to send a same random access preamble on a same physical random access channel resource, which is referred to as collision, and therefore, a contention resolution process is required).

Finally, the UE listens on the PDCCH to receive a contention resolution message.

Correspondingly, the controlling, by the UE according to the control information, a procedure of processing the uplink grant resource request may include:
acquiring, by the UE, the available physical random access channel, where the available physical random access channel is a physical random access channel whose number mod the period of the available physical random access channel is equal to the offset value, where the number is obtained by numbering, in chronological order or first based on frequencies and then in chronological order, physical random access channels that are configured, in a system message broadcast by the base station, for the UE or the logical channel or logical channel group of the UE; and
initiating, by the UE or the logical channel or logical channel group of the UE, the random access process on the available physical random access channel, to request the uplink grant resource.

In this way, when the control information acquired by the UE from the base station is a physical random access channel configuration, the UE may use, based on the configuration, only some of physical random access channel resources configured in a system broadcast message, to implement control by the UE over the procedure of processing the uplink grant resource request. The some of the physical random access channel resources configured in the system broadcast message is the available physical random access channel resource in the control information, for example, in every 10 frames, only physical random access channel resources from the second frame to the fourth frame are used.

Further, the control information may further include a preamble.

The initiating, by the UE or the logical channel or logical channel group, of the UE, the random access process on the available physical random access channel may include:
sending, by the UE or the logical channel or logical channel group of the UE, the preamble on the available physical random access channel, to initiate the random access process.

Further, after the sending, by the UE or the logical channel or logical channel group of the UE, the preamble on the available physical random access channel, to initiate the random access process, the method may further include:
if a random access response fails and a quantity of times the UE sends the preamble does not reach a maximum quantity of sending times, initiating, by the UE or the logical channel or logical channel group of the UE, the random access process on the available physical random access channel, to request the uplink grant resource; or initiating, by the UE or the logical channel or logical channel group of the UE, the random access process on a physical random access channel among the physical random access channels that are configured, in the system message broadcast by the base station, for the UE or the logical channel or logical channel group of the UE, so as to request the uplink grant resource. When the UE initiates random access process on a physical random access channel among the physical random access channels that are configured, in the system message broadcast by the base station, for the UE or the logical channel or logical channel group of the UE, the UE may select, from the physical random access channels that are configured, in the system message broadcast by the base station, for the UE or the logical channel or logical channel group of the UE, a physical random access channel closest to a backoff end moment as a channel for initiating random access again. The backoff refers to that after random access fails, the UE needs to back off to allow access of another UE, and give up the resource to the another UE.

For failure in a random access response, it may be determined that the random access response fails when UE does not receive the random access response, or when the random access response received by the UE does not include a number of a random access preamble sent by the UE, it may be determined that the random access response fails correspondingly. The maximum quantity of times for sending a preamble may be configured, for the UE, by the base station in the system broadcast message.

For example, the control information acquired by the UE from the base station is a physical random access channel configuration, content of the configuration includes a period and an offset value of an available physical random access channel, and if the period of the physical random access channel is for one logical channel or one logical channel group, a physical random access channel resource that can be used by the logical channel or the logical channel group is: in a case of a frequency division duplex system, physical random access channel resources that are configured in a system broadcast message are numbered in chronological order in each system frame period, and the numbers mod the period of the physical random access channel are equal to the physical random access channel resources corresponding to the offset value; in a case of a time division duplex system, physical random access channel resources that are configured in a system broadcast message are numbered first based on frequencies and then in chronological order in each system frame period, and the numbers mod the period of the physical random access channel are equal to the physical random access channel resources corresponding to the offset value. The offset value may be 0.

For another example, when a parameter of a physical random access channel configuration in the control information acquired by the UE is not for a logical channel or a logical channel group, but a physical random access channel configuration configured by the base station for the UE, a physical random access channel resource that can be used by the UE is: in a case of a frequency division duplex system, physical random access channel resources that are configured in a system broadcast message are numbered in chronological order in each system frame period, and the numbers mod the period of the physical random access channel are equal to the physical random access channel resources corresponding to the offset value; and in a case of a time division duplex system, physical random access channel resources that are configured in a system broadcast message are numbered first based on frequencies and then in chronological order in each system frame period, and the numbers mod the period of the physical random access channel are equal to the physical random access channel resources corresponding to the offset value.

For still another example, on the basis of the foregoing two embodiments in which the control information is a physical random access channel configuration, the control information may further include a preamble. These parameters are used in the random access process.

For yet another example, on the basis of the foregoing three embodiments in which the control information includes at least a physical random access channel configuration, after the UE uses the foregoing available physical random access channel resource to send a preamble (where the preamble may be the preamble in the control information or may not be the preamble in the control information), when receiving a random access response fails and the maximum quantity of times for sending the preamble is not reached, when selecting a random access resource again, the UE may select only the foregoing physical random access channel resource in the control information; or, when selecting a random access resource again, the UE may select a physical random access channel resource configured in the system broadcast message to perform random access.

FIG. 2 is a flowchart of a method for controlling an uplink grant resource request according to another embodiment of the present invention, and the method shown in this embodiment is a processing procedure on a base station side. On the base station side, the method for controlling an uplink grant resource request includes:
Step 21: A base station configures control information for UE, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process. For details about the control information, refer to the description in the embodiment shown in FIG. 1.

Further, the control information configured by the base station for the UE may be at least one of a scheduled time, a period repetition coefficient, a data amount threshold and an indication to reduce a quantity of times of processing the uplink grant resource request. The indication to reduce a quantity of times of processing the uplink grant resource request may be a scheduled time, a period repetition coefficient, a data amount threshold, or the like.

Further, before the configuring, by a base station, control information for UE, the method may further include:

The base station receives an RRC connection request message or an RRC connection setup complete message that is sent by the UE and carries a preset type indication, where the preset type indication is used for indicating at least one of the following: a terminal type is a preset terminal type and a service type is a preset service type. Correspondingly, the control information configured by the base station for the UE may include: the control information that is configured by the base station for the UE and corresponding to the preset type indication. For details about the preset type indication, the preset terminal type and the preset service type, refer to the description in the embodiment shown in FIG. 1.

Further, before the configuring, by a base station, control information for UE, the method may further include:
receiving, by the base station, a preset type indication sent by an MME, where the preset type indication is used for indicating at least one of the following: a terminal type is a preset terminal type, and a service type is a preset service type.

Correspondingly, the configuring, by a base station, control information for UE includes: configuring, by the base station for the UE, the control information corresponding to the preset type indication.

Further, the control information configured by the base station for the UE may be configuration information of at least one of a UE level, a logical channel level, and a logical channel group level. That is, the control information configured by the base station for the UE may be control information configured for the UE (that is, control information at the UE level, applicable to all services on the UE), or may be control information configured for a logical channel of the UE (that is, control information at the logical channel level), or may be control information configured for a logical channel group of the UE (that is, control information at the logical channel group level).

Step 22: The base station sends the control information to the UE, so that the UE controls, according to the control information, a procedure of processing the uplink grant resource request.

For example, the sending, by the base station, the control information to the UE may include:
sending, by the base station, an RRC connection reconfiguration message to the UE, where the RRC connection reconfiguration message carries the control information; or
sending, by the base station, a broadcast message, where the broadcast message carries the control information; or
sending, by the base station, a paging message, where the paging message carries the control information.

For example, the sending, by the base station, the control information to the UE may include:
if the control information is control information at the UE level, sending, by the base station to the UE, an RRC connection reconfiguration message in which the control information is padded in a time sequence arrangement request configuration information element; or
if the control information is control information at the logical channel level, sending, by the base station to the UE, an RRC connection reconfiguration message in which the control information is padded in a logical channel configuration information element; or
if the control information is control information at the logical channel group level, sending, by the base station to the UE, an RRC connection reconfiguration message in which the control information is padded in a logical channel group configuration information element.

Alternatively, the control information configured by the base station for the UE may be physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE. For details about the physical random access channel configuration information, refer to the description in the embodiment of the method on the terminal side.

Further, the control information may further include a preamble, to further enable the UE to control, according to the control information, the procedure of processing the uplink grant resource request.

In this embodiment, a base station configures and sends control information, so that UE can perform, according to the control information, restriction processing on a procedure of processing an uplink grant resource request, and therefore, when frequently the UE generates and sends small data packets, or when a service used by the UE frequently generates and sends small data packets, trigger of an SR can be restricted or processing on an SR that has been triggered can be restricted. Therefore, this resolves problems of frequent activation of the UE and high power consumption of the UE that are caused by frequently triggering an SR, or frequently sending an SR that has been triggered, or frequent random access, and effectively reduces the power consumption of the UE.

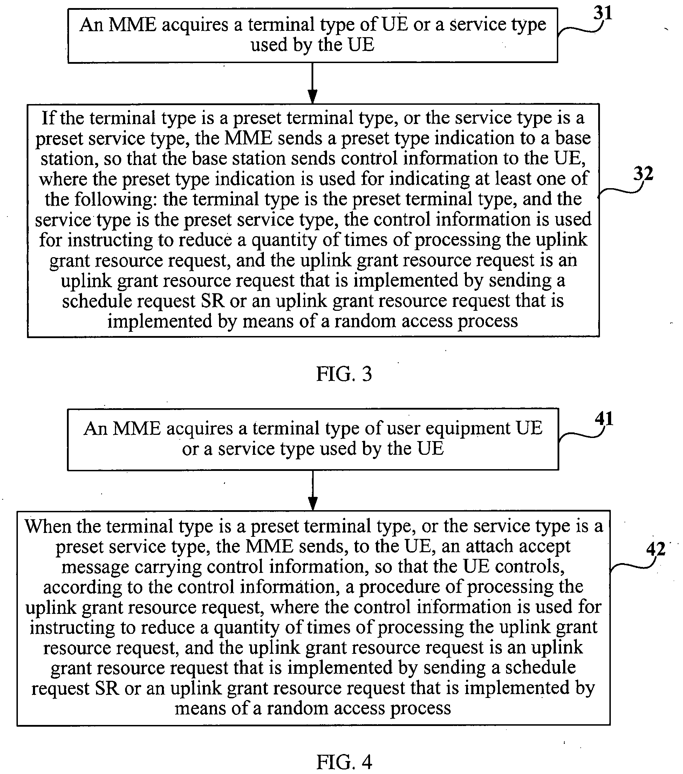

FIG. 3 is a flowchart of a method for controlling an uplink grant resource request according to another embodiment of the present invention, and the method shown in this embodiment is a processing procedure on an MME side. On the MME side, the method for controlling an uplink grant resource request includes:
Step 31: An MME acquires a terminal type of UE or a service type used by the UE.

For example, the MME acquires the terminal type of the UE by receiving a message that is sent by the UE in an attachment process; or
the MME acquires the terminal type of the UE from a home subscriber server (Home Subscriber Server, HSS) in an authentication process of an attachment process; or
the MME acquires, by receiving a message that is sent by the UE in a service request process, the terminal type of the UE or the service type used by the UE.

Step 32: If the terminal type is a preset terminal type, or the service type is a preset service type, the MME sends a preset type indication to a base station, so that the base station sends control information to the UE, where the preset type indication is used for indicating at least one of the following: the terminal type is the preset terminal type, and the service type is the preset service type, the control information is used for instructing to reduce a quantity of times of processing the uplink grant resource request, and the uplink grant resource request is an uplink grant resource request that is implemented by sending a schedule request SR or an uplink grant resource request that is implemented by means of a random access process. For details about the control information, the preset terminal type and the preset service type, refer to the description in the embodiment shown in FIG. 1.

In this embodiment, an MME identifies a terminal type of UE or a service type used by the UE, and when the terminal type is a preset terminal type or the service type is a preset service type, sends a preset type indication to a base station, so that the base station can configure control information for the UE according to the preset type indication and sends the control information to the UE; therefore, the UE can control, according to the control information, a procedure of processing an uplink grant resource request, when the UE frequently generates and sends small data packets, or when a service used by the UE frequently generates and sends small data packets, trigger of an SR can be restricted or processing on an SR that has been triggered can be restricted. Therefore, this resolves problems of frequent activation of the UE and high power consumption of the UE that are caused by frequently triggering an SR, or frequently sending an SR that has been triggered, or frequent random access, and effectively reduces the power consumption of the UE.

FIG. 4 is a flowchart of a method for controlling an uplink grant resource request according to another embodiment of the present invention, and the method shown in this embodiment is another processing procedure on an MME side. On the MME side, the method for controlling an uplink grant resource request includes:
Step 41: An MME acquires a terminal type of UE or a service type used by the UE.
Step 42: When the terminal type is a preset terminal type, or the service type is a preset service type, the MME sends, to the UE, an attach accept message carrying control information, so that the UE controls, according to the control information, a procedure of processing the uplink grant resource request, where the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

The sending, by the MME to the UE, an attach accept message carrying control information may include:
sending, by the MME to the UE, an attach accept message carrying control information, so that the UE controls, according to an indication of the control information, a procedure of processing the uplink grant resource request.

For details about the control information, the preset terminal type and the preset service type, refer to the description in the embodiment shown in FIG. 1.

Further, the acquiring, by an MME, a terminal type of UE or a service type used by the UE may include:
acquiring, by the MME, the terminal type of the UE by receiving a message that is sent by the UE in an attachment process; or
acquiring, by the MME, the terminal type of the UE from an HSS during an authentication process in an attachment process; or
acquiring, by the MME, by receiving a message that is sent by the UE in a service request process, the terminal type of the UE or the service type used by the UE.

In this embodiment, an MME identifies a terminal type of UE or a service type used by the UE, and when the terminal type is a preset terminal type or the service type is a preset service type, sends control information to the UE, so that the UE can control, according to the control information, a procedure of processing an uplink grant resource request, and therefore, when the UE frequently generates and sends small data packets, or when a service used by the UE frequently generates and sends small data packets, trigger of an SR can be restricted or processing on an SR that has been triggered can be restricted. Therefore, this resolves problems of frequent activation of the UE and high power consumption of the UE that are caused by frequently triggering an SR, or frequently sending an SR that has been triggered, or frequent random access, and effectively reduces the power consumption of the UE.

Another embodiment provided by the present invention is similar to the embodiment shown in FIG. 1, and a difference lies in that, in this embodiment, a terminal UE acquires control information in an attachment (attach) procedure or a service request (Service request) procedure.

In an LTE system, after the UE triggers an attachment procedure, and an initial context setup request or an attachment between a base station eNodeB (namely, eNB) and an MME is accepted, the base station sends an RRC connection reconfiguration message to the UE, and the UE returns an RRC connection reconfiguration complete message. After that, the base station returns an initial context setup response message to the MME, to complete RRC connection reconfiguration and initial context.

When the terminal UE needs to request a service, the UE triggers a service request (Service request) procedure. In the service request procedure, after the UE sends a service request message to the base station eNodeB, the base station sends the service request message to the MME. In a radio bearer establishment (Radio bearer Establishment) process, the UE sends an RRC connection reconfiguration message to the base station, and the base station forwards the message to the MME.

In this way, in the attachment procedure or service request procedure, the eNB may add control information to the RRC connection reconfiguration message sent to the UE.

The UE may acquire the control information from the RRC connection reconfiguration message and store the control information, and then the UE performs restriction processing on an SR according to the control information.

Further, before sending the RRC connection reconfiguration message that carries the control information to the UE, the base station may first determines whether to use the RRC connection reconfiguration message to send the control information to the UE. The eNB may determine, in the following manners, whether to use the RRC connection reconfiguration message to send the control information to the UE:
Manner 1: If an establishment cause (establishmentCause) value carried in an RRC connection request (RRC connection request) message that is sent by the terminal to the eNB in an RRC connection setup procedure is delayTolerantAccess-v1020 or a new value, the base station considers that the terminal type of the UE is a preset terminal type, or the service type of the UE is a preset service type. In this case, the base station determines to use the RRC connection reconfiguration message to send the control information to the UE, where a terminal type of a terminal that frequently sends small data packets uplink is the preset terminal type, for example, a meter terminal, and a service type of a service that frequently sends small data packets uplink is the preset service type. For example, the meter terminal may be configured as a special terminal type, and therefore the meter terminal itself can identify that the terminal type thereof is the preset terminal type; for another example, WeChat, QQ, and the like that frequently send small data packets uplink may be configured as the preset service type.
Manner 2: The terminal adds a preset type indication to an RRC connection setup complete (RRCConnectionSetupComplete) message that is sent in an RRC connection setup procedure to the eNB, so that base station can learn that the UE that sends the RRC connection setup complete message belongs to a preset terminal type or a service used by the UE belongs to a preset service type, and in this way, the base station determines that the RRC connection reconfiguration message needs to be used to send the control information to the UE.
Manner 3: The MME identifies that the UE belongs to a preset terminal type or a service used by the UE belongs to a preset service type, and adds, a preset type indication to an initial context setup request (initial context setup request) message or a new message that is sent to the base station, so that the base station can learn that the UE belongs to the preset terminal type or a service used by the UE belongs to the preset service type, and in this way, the base station determines that the RRC connection reconfiguration message needs to be used to send the control information to the UE.

The MME may use the following manners to identify the terminal type of the UE or the service type of the service used by the UE:
Manner 1: The terminal may add terminal type information to an attach request (attach request) message or a new message in an attachment (attach) process, and in this way, by receiving the attach request message, the MME may acquire the terminal type information from the attach request message, and therefore can identify whether the UE that sends the attach request message belongs to the preset terminal type.
Manner 2: In an authentication process of an attachment process, the MME acquires terminal type information of the UE from an HSS, thereby identifying whether the UE belongs to the preset terminal type.
Manner 3: The terminal may add terminal type information or service type information to a service request (service request) message or a new message in a service request (service request) process, and in this way, the MME may acquire, by receiving the service request message or new message sent by the UE, the terminal type information of the UE that sends the service request message or the new message, or the service type information of the service used by the UE, and therefore can identify whether the UE belongs to the preset terminal type or whether the service used by the UE belongs to the preset service type.

In this embodiment, based on levels, the control information may be classified into: control information at a UE level, control information at a logical channel level, and control information at a logical channel group level.

When the base station configures the control information at the UE level for the UE, the control information may be placed in a schedule request configuration (SchedulingRequestConfig) information element of the RRC connection reconfiguration message, and then the RRC connection reconfiguration message is sent to the UE.

When the base station configures the control information at the logical channel level for the UE, the control information may be placed in a logical channel configuration (LogicalChannelConfig) information element of the RRC connection reconfiguration message, and then the RRC connection reconfiguration message is sent to the UE.

When the base station configures the control information at the logical channel group level for the UE, a new information element, namely, logical channel group configuration (LogicalChannelGroupConfig) may be introduced to the RRC connection reconfiguration message and the control information is placed in this new information element, and then the RRC connection reconfiguration message is sent to the UE.

For the foregoing control information at three levels, content of the control information may include at least one of the following items:
(1) a command of instructing the UE to perform SR restriction processing, for example {setup (setup)};
(2) time, for example, 50 ms, 150 ms, or 300 ms;
(3) SR period repetition coefficient, for example, 1, 3, or 5; and
(4) data amount threshold, for example, 500 bytes, or 1000 bytes.

In this embodiment, performing, by the UE according to the control information and in an SR trigger decision procedure, restriction processing on triggering an SR specifically includes:
When buffer status reporting that meets a regulation (regular BSR) is triggered, if the base station configures the control information at the UE level for the UE, or a logical channel that triggers the foregoing buffer status reporting is configured with the control information, or a logical channel group to which a logical channel that triggers the foregoing buffer status reporting belongs is configured with the control information, and content of the control information is a command of instructing the UE to perform restriction processing on an SR, the UE may use the following manners to perform restriction processing on triggering the SR:
   manner 1: If the UE is not in an active time, the UE does not trigger the SR, and the UE triggers the SR only when the UE is in an active time, where the active time refers to an active time during which the UE is configured with a DRX period;
   manner 2: If an on-duration timer (onDurationTimer) of the UE is not running, the UE does not trigger the SR, and the UE triggers the SR only when the on-duration timer of the UE is running; and
   manner 3: The UE does not trigger the SR.

If the content of the control information is a time or an SR period repetition coefficient, and if the control information at the UE level is configured, and some uplink data, of the UE, on an RLC entity or a PDCP entity becomes available, or one or some logical channels are configured with the control information and some uplink data, of the logical channel or the logical channels, on an RLC entity or a PDCP entity becomes available, or a logical channel group is configured with the control information and some uplink data, of a logical channel in the logical channel group, on an RLC entity or a PDCP entity becomes available, the UE starts a timer, where the timer is a timer for restricting trigger of the SR (RestrictTriggerSRTimer), and when the timer does not reach the time given in the control information, the UE does not trigger the SR, and when the timer reaches the time given in the control information or reaches a time obtained by multiplying the SR period repetition coefficient SR by a sending opportunity period, the UE performs restriction processing on triggering the SR in the following manners:
manner 1: If the UE is not in an active time, the UE does not trigger the SR, and the UE triggers the SR only when the UE is in an active time, where the active time refers to an active time during which the UE is configured with a DRX period;
manner 2: If an on-duration timer (onDurationTimer) of the UE is not running, the UE does not trigger the SR, and the UE triggers the SR only when the on-duration timer of the UE is running; and
manner 3: The UE triggers the SR.

The sending opportunity period refers to a time interval before SR sending opportunities, or duration for generating an SR sending opportunity, for example 5 ms or 10 ms. The sending opportunity is a time at which an uplink resource that can be used to send the SR is configured and at which the SR can be sent. For example, if TTI = 1 ms, it may be configured for the SR that a PUCCH resource that can be used to send the SR (the SR can be sent over the PUCCH resource) is configured in the third microsecond among every 10 ms, and in this case, the third TTI is the SR sending opportunity.

If the content of the control information is a data amount threshold, and if the control information at the UE level is configured, and some uplink data, of the UE, on an RLC entity or a PDCP entity becomes available, or one or some logical channels are configured with the control information and some uplink data, of the logical channel or the logical channels, on an RLC entity or a PDCP entity becomes available, or a logical channel group is configured with the control information and some uplink data, of a logical channel in the logical channel group, on an RLC entity or a PDCP entity becomes available, the UE does not trigger the SR when an amount of available data on the UE does not reach the data amount threshold given in the control information, and when the amount of available data on the UE reaches or exceeds the data amount threshold given in the control information, the UE performs restriction processing on triggering the SR in the following manners:
manner 1: If the UE is not in an active time, the UE does not trigger the SR, and the UE triggers the SR only when the UE is in an active time, where the active time refers to an active time during which the UE is configured with a DRX period;
manner 2: If an on-duration timer (onDurationTimer) of the UE is not running, the UE does not trigger the SR, and the UE triggers the SR only when the on-duration timer of the UE is running; and
manner 3: The UE triggers the SR.

In this embodiment, an MME identifies a type of a terminal or a type of a service of the terminal, and then sends a preset type indication to a base station, so that the base station sends control information to the UE according to the preset type indication, thereby controlling that some type of terminal or some type of service of the terminal does not trigger an SR or does not send an SR or does not enter a random access process when the UE is in a DRX inactive time, but sends data when the UE is in an active time, so that the UE in a connected state can have a longer inactive time, thereby saving power overheads of the UE, and by accumulating data packets and sending them till the UE is in an activated state, control plane overheads and user plane overheads are effectively reduced.

Another embodiment provided by the present invention is similar to the foregoing embodiment, and the different lies in that, in this embodiment, a base station adds, to a broadcast message, control information indicating a preset service type or a preset terminal type, and the UE acquires the control information by receiving the broadcast message. Alternatively, the base station adds, to a paging message, control information indicating a preset service type or a preset terminal type, and the UE acquires the control information by receiving the paging message. Alternatively, the UE acquires the control information by using information fixed on the UE or by using a message received by the UE in an OMA DM (mobile device management) procedure. In the OMA DM (mobile device management) procedure, the message received by the UE carries a terminal type or service type and a control information list. Each item of the control information list includes an index and control information, where the index is a terminal type or a service type. In this way, the UE may find corresponding control information from the control information list according to the terminal type or service type provided in the message that is received in the OMA DM (Open Mobile Alliance Device Management) procedure. Similarly, fixed content of the UE is a terminal type or service type and a control information list.

Another embodiment provided by the present invention is similar to the foregoing embodiment, and the difference lies in that, in this embodiment, the UE acquires control information from a control information list carried in an attach accept message sent by an MME.

First, the MME may acquire, in an attachment process or in an authentication process of the attachment process, whether the UE belongs to a preset terminal type.

For example, the terminal may add terminal type information to an attach request message or a new message in an attachment process, and in this way, the MME may obtain, from the received attach request message or new message, the terminal type information of the UE that sends the attach request message or the new message, thereby determining whether the UE belongs to the preset terminal type, that is, the MME identifies whether the UE belongs to the preset terminal type, and if the UE belongs to the preset terminal type, the MME adds a control information list to the attach accept message sent to the UE.

For another example, in the authentication process of the attachment process, the MME acquires terminal type information of the UE from an HSS, the MME then identifies whether the UE belongs to the preset terminal type, and if the UE belongs to the preset terminal type, the MME adds a control information list to the attach accept message sent to the UE.

In this embodiment, an MME identifies a type of a terminal or a type of a service of the terminal, and then sends control information to the UE, thereby controlling that some type of terminal or some type of service of the terminal does not trigger an SR or does not send an SR or does not enter a random access process when the UE is in a DRX inactive time, but sends data when the UE is in an active time, so that the UE in a connected state can have a longer inactive time, thereby saving power overheads of the UE, and by accumulating data packets and sending them till the UE is in an activated state, control plane overheads and user plane overheads are effectively reduced.

Another embodiment provided by the present invention is similar to the foregoing embodiment, and the difference lies in that, in the foregoing embodiment, the UE performs restriction processing on triggering the SR according to the control information in the SR trigger decision process, while in this embodiment, the UE performs restriction processing on triggering the SR according to the control information in an SR sending decision process.

In each TTI, a UE executes an SR sending decision process, and in this process, the UE performs restriction processing on sending an SR according to control information at a UE level.

If content of the control information is a command of instructing the UE to perform restriction processing on an SR, the UE uses the following manners to perform restriction processing on the SR according to the control information:
Manner 1: When the UE is in an inactive time, the UE ends an SR sending decision processing procedure in a current TTI.
Manner 2: If an on-duration timer (onDurationTimer) of the UE is not running, the UE sends an SR sending decision processing procedure in a current TTI.
Manner 3: The UE ends an SR sending decision processing procedure in a current TTI.

If content of the control information is a time, and if a timer that is started after the control information is received (when the timer reaches or is not greater than the time given in the configured control information, the timer is started again) does not reach or is not greater than the time given in the configured control information, the UE uses the following manners to perform restriction processing on an SR sending decision according to the control information:
Manner 1: When the UE is in an inactive time, the UE ends an SR sending decision processing procedure in a current TTI.
Manner 2: If an on-duration timer (onDurationTimer) of the UE is not running, the UE sends an SR sending decision processing procedure in a current TTI.
Manner 3: The UE ends an SR sending decision processing procedure in a current TTI.

If content of the control information is an SR period repetition coefficient, starting from a TTI in which an SR in a pending state is triggered, in a TTI in which the (SR period repetition coefficient)^{th} SR period is located, or starting from the TTI in which an SR in a pending state is triggered, in a TTI in which an SR period after the (SR period repetition coefficient)^{th} SR period (including or excluding the (SR period repetition coefficient)^{th} SR period) is located, the UE executes a subsequent SR sending decision processing procedure, and in every SR periods whose quantity is equal to the SR period repetition coefficient, the UE uses the following manners to perform restriction processing on an SR sending decision according to the control information:
Manner 1: When the UE is in an inactive time, the UE ends an SR sending decision processing procedure in a current TTI.
Manner 2: If an on-duration timer (onDurationTimer) of the UE is not running, the UE sends an SR sending decision processing procedure in a current TTI.
Manner 3: The UE ends an SR sending decision processing procedure in a current TTI.

In each TTI, for each SR in a pending (pending) state, if BSR that triggers an SR in a pending state is triggered by a local channel configured with the control information, or BSR that triggers an SR in a pending state is triggered by a local channel in a logical channel group configured with the control information:
If content of the control information is a command of instructing the UE to perform restriction processing on an SR, the UE performs restriction processing on a sending procedure of the SR according to the control information in the following manners:
   Manner 1: When the UE is in an inactive time, it is set that the SR is an invalid SR in the current TTI, for example, a mark may be made for the SR to mark that the SR is an invalid SR in the current TTI, and in this way, in the current TTI, whether to notify a physical layer to send the SR or whether to trigger random access is not determined on the invalid SR; the same applies to the following.
   Manner 2: If an on-duration timer (onDurationTimer) of the UE is not running, it is set that the SR is an invalid SR in the current TTI.
   Manner 3: It is set that the SR is an invalid SR in the current TTI.

If content of the control information is a time, the performing, by the UE, restriction processing on the SR sending decision according to the control information may specifically include: if a current TTI is TTI in which the SR is triggered, setting a timer for the SR, and when the timer in the current TTI does not reach or is not greater than the time given in the configured control information, setting that the SR is an invalid SR in the current TTI, where the UE has the following manners for performing restriction processing on a sending decision of an invalid SR:
Manner 1: When the UE is in an inactive time, the UE does not determine whether to notify a physical layer to send the SR or whether to trigger random access on the invalid SR.
Manner 2: If an on-duration timer (onDurationTimer) of the UE is not running, the UE does not determine whether to notify a physical layer to send the SR or whether to trigger random access on the invalid SR.
Manner 3: In a current TTI, the UE does not determine whether to notify a physical layer to send the SR or whether to trigger random access on the invalid SR.

If the content of the control information is an SR period repetition coefficient, the performing, by the UE, restriction processing on the SR according to the control information may specifically include: starting from a TTI in which the SR is triggered, in every TTI in which the (SR period repetition coefficient)^{th} SR period is located, setting the SR as a valid SR, for example, if the SR period repetition coefficient is set to 5, starting from a TTI in which the SR is triggered, in each fifth TTI in which an SR period is located, the SR is set to be a valid SR, and in other TTIs, the SR is set to be an invalid SR, and in the other TTIs, the UE uses the following manners to perform subsequent processing on the invalid SR:
Manner 1: When the UE is in an inactive time, the UE does not determine whether to notify a physical layer to send the SR or whether to trigger random access on the invalid SR.
Manner 2: If an on-duration timer (onDurationTimer) of the UE is not running, the UE does not determine whether to notify a physical layer to send the SR or whether to trigger random access on the invalid SR.
Manner 3: In a current TTI, the UE does not determine whether to notify a physical layer to send the SR or whether to trigger random access on the invalid SR.

Alternatively, the performing, by the UE, restriction processing on the SR according to the control information may specifically include: starting from the TTI in which the TTI is triggered, in at least one TTI of a TTI in which the (SR period repetition coefficient)^{th} SR period is located and a TTI after the (SR period repetition coefficient)^{th} SR period, setting the SR to be a valid SR, for example, if the SR period repetition coefficient is set to 5, counting is started from a TTI in which the SR is triggered, starting from the sixth TTI in which an SR period is located, the SR is set to be a valid SR, and in other TTIs, the SR is set to be an invalid SR.

That is, on the other TTIs, the following manners are used to perform subsequent processing on the SR:
Manner 1: When the UE is in an inactive time, the UE does not determine whether to notify a physical layer to send the SR or whether to trigger random access on the invalid SR.
Manner 2: If an on-duration timer (onDurationTimer) of the UE is not running, the UE does not determine whether to notify a physical layer to send the SR or whether to trigger random access on the invalid SR.
Manner 3: In a current TTI, the UE does not determine whether to notify a physical layer to send the SR or whether to trigger random access on the invalid SR.

In the present invention, a type of a terminal or a type of a service of the terminal is identified, and then it is controlled that, in a normal state (that is, a DRX connected state is not configured) or when UE is in a DRX inactive time, a given type of terminal or a given type of service of the terminal does not trigger an SR or does not perform subsequent processing on an SR that has been triggered or perform a random access process; instead, data is sent after a period of time or when the UE is in an active time, so that the UE in a connected state has a longer inactive time, thereby saving power overheads of the UE, and by accumulating data packets and sending them till the UE is in an activated state, control plane overheads and user plane overheads are effectively reduced.

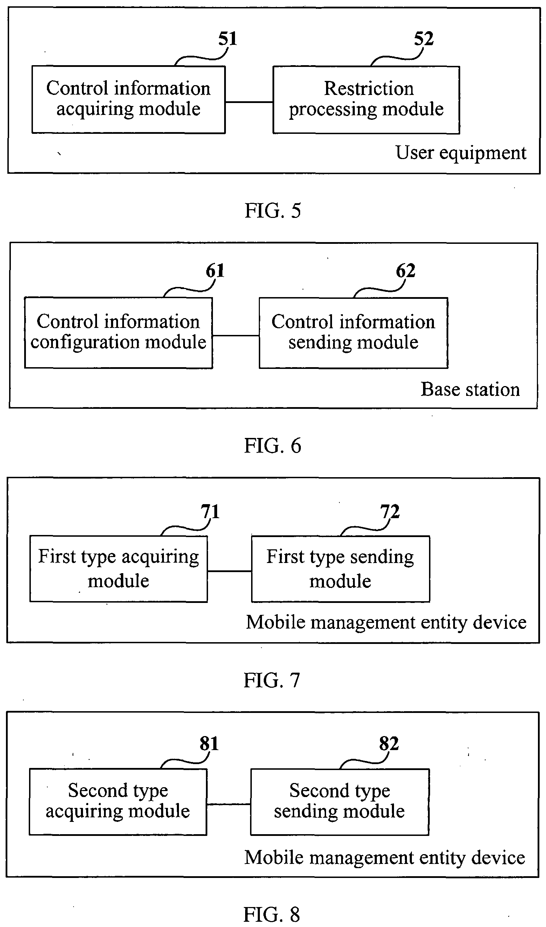

FIG. 5 is a schematic structural diagram of user equipment according to another embodiment of the present invention. The user equipment shown in this embodiment is configure to implement the method shown in FIG. 1, and the user equipment includes: a control information acquiring module 51 and a restriction processing module 52.

The control information acquiring module 51 is configured to acquire control information, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process.

The request control module 52 is configured to control, according to the control information acquired by the control information acquiring module 51, a procedure of processing the uplink grant resource request.

Further, the control information acquired by the control information acquiring module 51 is an indication to reduce a quantity of times of processing the uplink grant resource request; the request control module 52 may include any one of the following submodules:
a first trigger control submodule, configured to: if the user equipment UE is in an inactive time, determine, according to the indication, not to trigger the uplink grant resource request, or if the UE is in an active time, determine, according to the indication, to trigger the uplink grant resource request;
a first decision control submodule, configured to: if the UE is in an inactive time, end a sending decision processing procedure of the uplink grant resource request according to the indication, where the sending decision processing procedure is in a current transmission time interval TTI, or if the UE is in an active time, continue a sending decision processing procedure of the uplink grant resource request according to the indication, where the sending decision processing procedure is in a current TTI; and
a first SR control submodule, configured to: if a logical channel that triggers buffer status reporting BSR is a logical channel configured with the control information or if a logical channel that triggers BSR a logical channel in a logical channel group configured with the control information, and if the UE is in an inactive time, set the SR that has been triggered by the BSR to be invalid in a current TTI; or if the UE is in an active time, set the SR that has been triggered by the BSR to be valid in a current TTI.

Further, the indication acquired by the control information acquiring module 51 may be a scheduled time; and
the first trigger control submodule may include:
a first timer start submodule, configured to: if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, start a timer according to the scheduled time; and
a first timed trigger control submodule, configured to: before the timer started by the timer start submodule expires, if it is determined that the UE is in an inactive time, determine not to trigger the uplink grant resource request, or if it is determined that the UE is in an active time, determine to trigger the uplink grant resource request, and when the timer expires, the UE determines to trigger the uplink grant resource request; or,
the uplink grant resource request may be the uplink grant resource request that is implemented by sending an SR, the indication acquired by the control information acquiring module 51 may be a period repetition coefficient, and the first trigger control submodule may include:
   a second timer start submodule, configured to: if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and
   a second timed trigger control submodule, configured to: before the timer started by the second timer start submodule expires, if it is determined that the UE is in an inactive time, determine not to trigger the uplink grant resource request, or if it is determined that the UE is in an active time, determine to trigger the uplink grant resource request; and when the timer expires, the UE determines to trigger the uplink grant resource request.

Further, the indication acquired by the control information acquiring module 51 may be a data amount threshold; and
the user equipment may further include:
an available data determining module, configured to: before the first trigger control submodule determines, according to the indication, not to trigger the uplink grant resource request if the UE is in an inactive time or determines, according to the indication, to trigger the uplink grant resource request if the UE is in an active time, determine that the UE has to-be-transmitted uplink data or determine that a logical channel of the UE has to-be-transmitted uplink data, where the logical channel is a logical channel configured with the control information or a logical channel in a logical channel group configured with the control information, and determine that a data amount of the uplink data is less than the data amount threshold.

Further, the indication acquired by the control information acquiring module 51 may be a scheduled time; and
the first decision control submodule may be specifically configured to: if an SR counter is equal to 0, start a timer according to the scheduled time; and before the timer expires, if the UE is in an inactive time, end the sending decision processing procedure of the uplink grant resource request that is implemented by means of an SR, where the sending decision processing procedure is in the current TTI, or if the UE is in an active time, continue the sending decision processing procedure of the uplink grant resource request that is implemented by means of an SR, where the sending decision processing procedure is in the current TTI; and when the timer expires, the UE continues the sending decision processing procedure of the uplink grant resource request that is implemented by means of an SR, where the sending decision processing procedure is in the current TTI.

Further, the uplink grant resource request may be the uplink grant resource request that is implemented by sending an SR, and the control information acquired by the control information acquiring module 51 may be a period repetition coefficient; and
the first decision control submodule may be specifically configured to: starting from a TTI in which the SR is triggered, in TTIs whose quantity is the period repetition coefficient multiplied by an SR period, if the UE is in an inactive time, end the sending decision processing procedure of the uplink grant resource request that is implemented by means of an SR, where the sending decision processing procedure is in the current TTI, or if the UE is in an active time, continue the sending decision processing procedure of the uplink grant resource request that is implemented by means of an SR, where the sending decision processing procedure is in the current TTI.

Further, the control information acquired by the control information acquiring module 51 may be an indication to reduce a quantity of times of processing the uplink grant resource request; and
the request control module 52 may include:
a second trigger control submodule, configured to: if it is determined that an on-duration timer of the UE is not running, determine, according to the indication, not to trigger the uplink grant resource request, or if it is determined that an on-duration timer of the UE is running, determine, according to the indication, to trigger the uplink grant resource request; or
a second decision control submodule, configured to: if it is determined that an on-duration timer of the UE is not running, end, according to the indication, a sending decision processing procedure of the uplink grant resource request, where the sending decision processing procedure is in a current transmission time interval TTI, or if it is determined that an on-duration timer of the UE is running, continue, according to the indication, a sending decision processing procedure of the uplink grant resource request, where the sending decision processing procedure is in a current transmission time interval TTI; or
a second SR control submodule, configured to: if it is determined that an on-duration timer of the UE is not running and if a logical channel that triggers buffer status reporting BSR is a logical channel configured with the control information or a logical channel that triggers BSR is a logical channel in a logical channel group configured with the control information, set the SR that has been triggered by the BSR to be invalid in a current transmission time interval TTI, or if it is determined that an on-duration timer of the UE is running and if a logical channel that triggers buffer status reporting BSR is a logical channel configured with the control information or a logical channel that triggers BSR is a logical channel in a logical channel group configured with the control information, set the SR that has been triggered by the BSR to be valid in a current TTI.

Further, the indication acquired by the control information acquiring module 51 may be a scheduled time, and the second trigger control submodule may be specifically configured to: if the UE has to-be-transmitted uplink data, or if a logical channel has to-be-transmitted uplink data, where the logical channel is a logical channel configured with the control information or a logical channel in a logical channel group configured with the control information, start a timer according to the scheduled time; and before the timer started by the third timer start submodule expires, if it is determined that an on-duration timer of the UE is not running, determine not to trigger the uplink grant resource request that is implemented by sending an SR, or if it is determined that an on-duration timer of the UE is running, determine to trigger the uplink grant resource request that is implemented by sending an SR; and when the timer expires, the UE determines to trigger the uplink grant resource request that is implemented by sending an SR; or,
the uplink grant resource request is the uplink grant resource request that is implemented by sending an SR, the indication acquired by the control information acquiring module 51 may be a period repetition coefficient, and the second decision control submodule is specifically configured to: if the UE has to-be-transmitted uplink data or if the UE determines that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and before the timer started by the fourth timer start submodule expires, if it is determined an on-duration timer of the UE is not running, determine not to trigger the uplink grant resource request that is implemented by sending an SR, or if it is determined that an on-duration timer of the UE is running, determine to trigger the uplink grant resource request that is implemented by sending an SR; and when the timer expires, the UE determines to trigger the uplink grant resource request that is implemented by sending an SR.

Further, the indication acquired by the control information acquiring module 51 may be a data amount threshold; and
the user equipment may further include:
a second available data determining module, configured to: before the second trigger control submodule determines, according to the indication, not to trigger the uplink grant resource request if the UE is in an inactive time or determines, according to the indication, to trigger the uplink grant resource request if the UE is in an active time, determine that the UE has to-be-transmitted uplink data or that a logical channel has to-be-transmitted uplink data, where the logical channel is a logical channel configured with the control information or a logical channel in a logical channel group configured with the control information, and determine that a data amount of the uplink data is less than the data amount threshold.

Further, the indication acquired by the control information acquiring module 51 may be a scheduled time; and
the second decision control submodule may be specifically configured to:
if an SR counter is equal to 0, start a timer according to the scheduled time; and
before the timer expires, if it is determined that the on-duration timer of the UE is not running, end the sending decision processing procedure of the uplink grant resource request that is implemented by means of an SR, where the sending decision processing procedure is in the current TTI, or if it is determined that the on-duration timer of the UE is running, continue the sending decision processing procedure of the uplink grant resource request that is implemented by means of an SR, where the sending decision processing procedure is in the current TTI; and when the timer expires, continue the sending decision processing procedure of the uplink grant resource request that is implemented by means of an SR, where the sending decision processing procedure is in the current TTI.

Further, the uplink grant resource request may be the uplink grant resource request that is implemented by sending an SR, the indication acquired by the control information acquiring module 51 may be a period repetition coefficient, and the second decision control submodule may be specifically configured to:
starting from a TTI in which the SR is triggered, in TTIs whose quantity is the period repetition coefficient multiplied by an SR period, if it is determined that the on-duration timer of the UE is not running, end the sending decision processing procedure that is in the current TTI and implemented by means of an SR, or if it is determined that the on-duration timer of the UE is running, continue the sending decision processing procedure that is in the current TTI and implemented by means of an SR.

Further, the control information acquired by the control information acquiring module 51 may be a scheduled time; and
the request control module 52 may be specifically configured to: if the user equipment UE has to-be-transmitted uplink data or if it is determined that a logical channel of the UE has to-be-transmitted uplink data, where the logical channel is a logical channel configured with the control information or a logical channel in a logical channel group configured with the control information, start a timer according to the scheduled time; and if the timer expires, trigger the uplink grant resource request, or if the timer does not expire, skip triggering the uplink grant resource request; or
the uplink grant resource request is the uplink grant resource request that is implemented by sending an SR, the control information acquired by the control information acquiring module 51 may be a scheduled time, and the request control module 52 may be specifically configured to: starting from a TTI in which the SR is triggered, in any TTI among TTIs whose quantity is the period repetition coefficient multiplied by an SR period, the UE continues a sending decision processing procedure that is in the any TTI and implemented by means of an SR, and in other TTIs, the UE ends sending decision processing procedures that are in the other TTIs and implemented by means of an SR, where the other TTIs are TTIs, except the any TTI, among the TTIs whose quantity is the period repetition coefficient multiplied by the SR period starting from the TTI in which the SR is triggered; or
the uplink grant resource request is the uplink grant resource request that is implemented by sending an SR, the control information acquired by the control information acquiring module 51 may be a period repetition coefficient, and the request control module 52 may be specifically configured to: if the UE has to-be-transmitted uplink data or if it is determined that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and before the timer expires, determine not to trigger the uplink grant resource request that is implemented by sending an SR, and when the timer expires, determine to trigger the uplink grant resource request that is implemented by sending an SR; or
the control information acquired by the control information acquiring module 51 may be a scheduled time, and the request control module 52 may be specifically configured to: if an SR counter is equal to 0, start a timer according to the scheduled time; and before the timer expires, end a sending decision processing procedure of the uplink resource request that is implemented by means of an SR, where the sending decision processing procedure is in a current transmission time interval TTI, and when the timer expires, continue the sending decision processing procedure of the uplink resource request that is implemented by means of an SR, where the sending decision processing procedure is in the current TTI; or
the control information acquired by the control information acquiring module 51 is a scheduled time, and the request control module 52 may be specifically configured to: if some uplink data of the UE becomes available or if uplink data corresponding to a logical channel becomes available, where the logical channel is a logical channel configured with the control information or a logical channel in a logical channel group configured with the control information, and if a current TTI is a TTI in which BSR triggers the SR, start a timer according to the scheduled time, before the timer expires, set the SR to be an invalid SR in the current TTI, and when the timer expires, the UE sets the SR to be a valid SR in the current TTI; or,
the control information acquired by the control information acquiring module 51 may be a period repetition coefficient, and the request control module 52 may be specifically configured to: if the UE has to-be-transmitted uplink data or if it is determined that a logical channel of the UE has to-be-transmitted uplink data, where the logical channel is a logical channel configured with the control information or a logical channel in a logical channel group configured with the control information, and if a current TTI is a TTI in which BSR triggers the SR, start a timer, where a scheduled time of the timer is the period repetition coefficient multiplied by an SR period; before the timer expires, set the SR to be an invalid SR in the current TTI, and when the timer expires, set the SR to be a valid SR in the current TTI; or
the control information acquired by the control information acquiring module 51 may be a period repetition coefficient, and the request control module 52 may be specifically configured to: if the UE has to-be-transmitted uplink data, or if the UE determines that a logical channel of the UE has to-be-transmitted uplink data, where the logical channel is a logical channel configured with the control information or a logical channel in a logical channel group configured with the control information, starting from a TTI in which the SR is triggered, in any TTI among TTIs whose quantity is the period repetition coefficient multiplied by an SR period, set the SR triggered by BSR in the any TTI to be valid, and in other TTIs, set the SR triggered by BSR in the other TTIs to be invalid, where the other TTIs are TTIs, except the any TTI, among the TTIs whose quantity is the period repetition coefficient multiplied by the SR period starting from the TTI in which the SR is triggered.

Further, the control information acquired by the control information acquiring module 51 may be a data amount threshold; and
the request control module 52 may be specifically configured to:
if the UE has to-be-transmitted uplink data, or if it is determined that a logical channel of the UE has to-be-transmitted uplink data, where the logical channel is a logical channel configured with the control information or a logical channel in a logical channel group configured with the control information, and
if it is determined that a data amount of the uplink data is not less than the data amount threshold, trigger the uplink grant resource request, or if the UE determines that a data amount of the uplink data is less than the data amount threshold, skip triggering the uplink grant resource request.

Further, the control information acquired by the control information acquiring module 51 may be an indication to reduce a quantity of times of processing the uplink grant resource request; and
the request control module 52 may be specifically configured to:
determine, according to the indication, not to trigger the uplink grant resource request; or
end, according to the indication, a decision processing procedure of the uplink grant resource request; or
if a logical channel that triggers buffer status reporting BSR is a logical channel configured with the control information or a logical channel that triggers BSR is a logical channel in a logical channel group configured with the control information, set the SR that has been triggered by the BSR to be invalid in a current transmission time interval TTI.

Further, the uplink grant resource request is the uplink grant resource request that is implemented by sending the SR, the control information is a period repetition coefficient and the period repetition coefficient is for one logical channel or one logical channel group; and
the controlling, by the UE according to the control information, a procedure of processing the uplink grant resource request includes:
determining, by the UE, an SR resource available for sending the SR, where the SR is triggered by the logical channel or the logical channel group, and a period of the SR resource is an SR period currently configured by a base station for the UE multiplied by the period repetition coefficient; and
sending, by the UE on the resource for sending the SR, the SR to the base station.

Further, the user equipment may further include:
an invalidity processing module, configured to: after the first SR control submodule sets the SR to be invalid, skip determining whether to notify a physical layer to send the SR or whether to enter a random access process on the invalid SR; or
if the on-duration timer of the UE is not running, skip determining whether to notify a physical layer to send the SR or whether to enter a random access process on the invalid SR, or if the on-duration timer of the UE is running, determine whether to notify a physical layer to send the SR or whether to enter a random access process on the invalid SR; or
if the UE is in an inactive time, skip determining whether to notify a physical layer to send the SR or whether to enter a random access process on the invalid SR, or if the UE is in an active time, determine whether to notify a physical layer to send the SR or whether to enter a random access process on the invalid SR.

Further, the uplink grant resource request may be the uplink grant resource request that is implemented by sending the SR, the control information is a period repetition coefficient and the period repetition coefficient is for one logical channel or one logical channel group; and
the request control module 52 may include:
a resource determining submodule, configured to determine an SR resource available for sending the SR, where the SR is triggered by the logical channel or the logical channel group, and a period of the SR resource is an SR period currently configured by a base station for the UE multiplied by the period repetition coefficient; and
a sending submodule, configured to send, on the SR resource determined by the resource determining submodule and for sending the SR, the SR to the base station.

Further, the control information acquiring module 51 may include:
a first acquiring submodule, configured to acquire the control information configured in advance; or
a second acquiring submodule, configured to acquire the control information from an Open Mobile Alliance device management procedure; or
a third acquiring submodule, configured to receive an attach accept message from a mobile management entity MME, and acquire the control information from the attach accept message; or
a fourth acquiring submodule, configured to receive, by the UE, a radio resource control RRC connection reconfiguration message from the base station, and acquire the control information from the RRC connection reconfiguration message; or
a fifth acquiring submodule, configured to acquire the control information by receiving a broadcast message from the base station; or
a sixth acquiring submodule, configured to acquire the control information by receiving a paging message from the base station.

Further, the fourth acquiring submodule may be specifically configured to:
send an RRC connection request message or an RRC connection setup complete message to the base station, where the RRC connection request message or the RRC connection setup complete message carries a preset type indication; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type; or
the fourth acquiring submodule may be specifically configured to:
   send, in an attachment process or a service request process, a preset type indication to the MME, so that the MME sends the preset type indication to the base station; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type;
the third acquiring submodule may be specifically configured to:
   send, in an attachment process or a service request process, a preset type indication to the MME; and receive the attach accept message sent by the MME to the user equipment UE, and acquire the control information from the attach accept message, where the control information is control information corresponding to the preset type indication, and the preset type indication is used for indicating at least one of the following: a terminal type is a preset terminal type, and a service type is a preset service type.

Exemplarily, the control information acquired by the control information acquiring module is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE; and
the request control module includes:
a channel acquiring submodule, configured to acquire the available physical random access channel, where the available physical random access channel is a physical random access channel whose number mod the period of the available physical random access channel is equal to the offset value, where the number is obtained by numbering, in chronological order or first based on frequencies and then in chronological order, physical random access channels that are configured, in a system message broadcast by the base station, for the UE or the logical channel or logical channel group of the UE; and
a random access submodule, configured to initiate, on the available physical random access channel acquired by the channel acquiring submodule, the random access process, to request the uplink grant resource.

Exemplarily, the control information acquired by the control information acquiring module may further include a preamble; and
the random access submodule is specifically configured to:
send, on the available physical random access channel acquired by the channel acquiring submodule, the preamble to initiate the random access process.

Exemplarily, the request control module may be further configured to:
after the random access submodule sends, on the UE or the logical channel or logical channel group of the UE on the available physical random access channel, the preamble,
if a random access response fails and a quantity of times the UE sends the preamble does not reach a maximum quantity of sending times, initiate the random access process on the available physical random access channel acquired by the channel acquiring submodule, to request the uplink grant resource; or initiate the random access process on a physical random access channel among the physical random access channels that are configured, in the system message broadcast by the base station, for the UE or the logical channel or logical channel group of the UE, so as to request the uplink grant resource.

FIG. 6 is a schematic structural diagram of a base station according to another embodiment of the present invention. The base station provided by this embodiment is used to implement the method shown in FIG. 2, and the base station includes: a control information configuration module 61 and a control information sending module 62.

The control information configuration module 61 is configured to configure control information for UE, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process.

The control information sending module 62 is configured to send, to the UE, the control information configured by the control information configuration module, so that the UE controls, according to the control information, a procedure of processing the uplink grant resource request.

Further, the control information sending module includes:
a first sending submodule, configured to send an RRC connection reconfiguration message to the UE, where the RRC connection reconfiguration message carries the control information; or
a second sending submodule, configured to send a broadcast message, where the broadcast message carries the control information; or
a third sending submodule, configured to send a paging message, where the paging message carries the control information.

Further, the base station further includes:
a first type receiving module, configured to: before the control information configuration module configures the control information for the UE, receive an RRC connection request message or an RRC connection setup complete message that is sent by the UE and carries a preset type indication, where the preset type indication is used for indicating at least one of the following: a terminal type is a preset terminal type, and a service type is a preset service type, where
the control information configuration module is further configured to configure, for the UE, the control information corresponding to the preset type indication.

Further, the base station further includes:
a second type receiving module, configured to: before the control information configuration module configures the control information for the UE, receive a preset type indication sent by an MME, where the preset type indication is used for indicating at least one of the following: a terminal type is a preset terminal type, and a service type is a preset service type, where
the control information configuration module is further configured to configure the control information for the UE according to the preset type indication.

Further, the control information configured by the control information configuration module for the UE is control information of at least one of a UE level, a logical channel level, and a logical channel group level.

Further, the control information sending module includes:
a fourth sending submodule, configured to: if the control information is control information at the UE level, send, to the UE, an RRC connection reconfiguration message in which the control information is padded in a time sequence arrangement request configuration information element; or
a fifth sending submodule, configured to: if the control information is control information at the logical channel level, send, to the UE, an RRC connection reconfiguration message in which the control information is padded in a logical channel configuration information element; or
a sixth sending submodule, configured to: if the control information is control information at the logical channel group level, send, to the UE, an RRC connection reconfiguration message in which the control information is padded in a logical channel group configuration information element.

Further, the control information configured by the control information configuration module for the UE is at least one of a time, an SR period repetition coefficient, a data amount threshold and a command of instructing to the UE to perform restriction processing on an SR.

Exemplarily, the control information configured by the control information configuration module may be physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE.

Exemplarily, the control information configured by the control information configuration module may further include a preamble.

FIG. 7 is a schematic structural diagram of a mobile management entity device, according to another embodiment of the present invention. The mobile management entity device provided by this embodiment is configured to implement the method shown in FIG. 3, and the mobile management entity device includes: a first type acquiring module 71 and a first type sending module 72.

The first type acquiring module 71 is configured to acquire a terminal type of user equipment UE or a service type used by the UE.

The first type sending module 72 is configured to: if the terminal type acquired by the first type acquiring module is a preset terminal type, or the service type is a preset service type, send a preset type indication to a base station, so that the base station sends control information to the UE, where the preset type indication is used for indicating at least one of the following: the terminal type is the preset terminal type, and the service type is the preset service type, the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

Further, the first type acquiring module may include:
a first acquiring submodule, configured to acquire the terminal type of the UE by receiving a message that is sent by the UE in an attachment process; or
a second acquiring submodule, configured to acquire the terminal type of the UE from an HSS in an authentication process of an attachment process; or
a third acquiring submodule, configured to acquire, by receiving a message that is sent by the UE in a service request process, the terminal type of the UE or the service type used by the UE.

FIG. 8 is a schematic structural diagram of a mobile management entity device according to another embodiment of the present invention. The mobile management entity device provided by this embodiment is configured to implement the method shown in FIG. 4, and the mobile management entity device includes: a second type acquiring module 81 and a second type sending module 82.

The second type acquiring module 81 is configured to acquire a terminal type of user equipment UE or a service type used by the UE.

The second type sending module 82 is configured to: when the terminal type acquired by the second type acquiring module is a preset terminal type, or the service type is a preset service type, send, to the UE, an attach accept message carrying control information, so that the UE controls, according to the control information, a procedure of processing the uplink grant resource request, where the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

Further, the second type sending module includes:
a first sending submodule, configured to send, to the UE, an attach accept message that carries control information, so that the UE performs SR restriction processing according to an indication of the control information, where the attach accept message may carry a control information list, each item of the control information list includes an index and control information corresponding to the index, and the index is at least one of a terminal type and a service type.

Further, the second type acquiring module includes any one of the following acquiring submodules:
a fourth acquiring submodule, configured to acquire the terminal type of the UE by receiving a message that is sent by the UE in an attachment process;
a fifth acquiring submodule, configured to acquire the terminal type of the UE from an HSS in an authentication process of an attachment process; or
a sixth acquiring submodule, configured to acquire; by receiving a message that is sent by the UE in a service request process, the terminal type of the UE or the service type used by the UE.

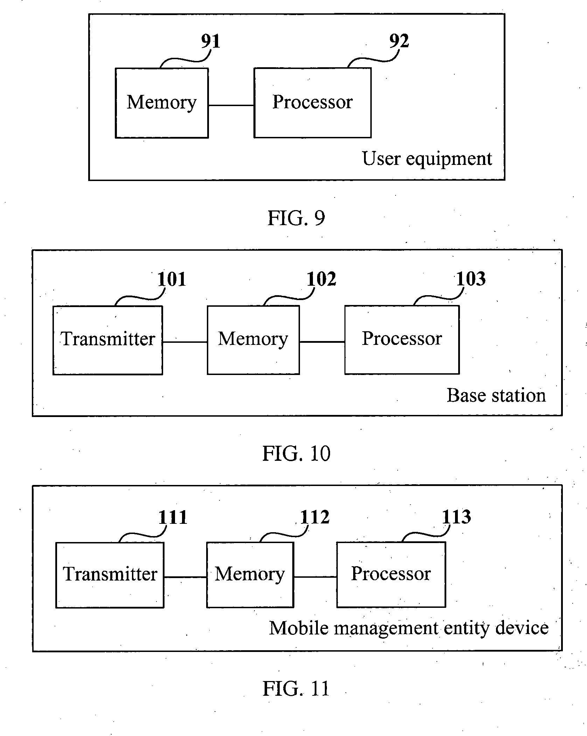

FIG. 9 is a schematic structural diagram of user equipment according to another embodiment of the present invention. The user equipment includes: a memory 91 and a processor 92 connected to the memory 91, where the memory 91 stores a group of program code therein, and the processor 92 is configured to invoke the program code stored in the memory 91 to the following operations as shown in FIG. 1: acquiring control information, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process; and controlling, according to the control information acquired by the processor, a procedure of processing the uplink grant resource request.

Further, the control information acquired by the processor 92 is an indication to reduce a quantity of times of processing the uplink grant resource request; and
the processor 92 is further configured to:
if the user equipment UE is in an inactive time, determine, according to the indication, not to trigger the uplink grant resource request, or if the UE is in an active time, determine, according to the indication, to trigger the uplink grant resource request;
if the UE is in an inactive time, end, according to the indication, a sending decision processing procedure of the uplink grant resource request, where the sending decision processing procedure is in a current transmission time interval TTI, or if the UE is in an active time, continue, according to the indication, a sending decision processing procedure of the uplink grant resource request, where the sending decision processing procedure is in a current TTI; or
if a logical channel that triggers buffer status reporting BSR is a logical channel configured with the control information or a logical channel that triggers BSR is a logical channel in a logical channel group configured with the control information, and if the UE is in an inactive time, set the SR that has been triggered by the BSR to be invalid in a current TTI; or if the UE is in an active time, set the SR that has been triggered by the BSR to be valid in a current TTI.

Further, the indication acquired by the processor 92 is a scheduled time; and
the processor 92 is further configured to:
if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, start a timer according to the scheduled time; and
before the timer started by the timer start submodule expires, if it is determined that the UE is in an inactive time, determine not to trigger the uplink grant resource request, or if it is determined that the UE is in an active time, determine to trigger the uplink grant resource request, and when the timer expires, the UE determines to trigger the uplink grant resource request; or,
the uplink grant resource request is the uplink grant resource request that is implemented by sending an SR, the indication acquired by the processor 92 is a period repetition coefficient, and the processor 92 is further configured to:
   if the UE determines that the UE has to-be-transmitted uplink data, or if the UE determines that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and
   before the timer started by the second timer start submodule expires, if it is determined that the UE is in an inactive time, determine not to trigger the uplink grant resource request that is implemented by sending an SR, or if it is determined that the UE is in an active time, determine to trigger the uplink grant resource request that is implemented by sending an SR, and when the timer expires, the UE determines to trigger the uplink grant resource request.

Further, the indication acquired by the processor 92 is a data amount threshold; and
the processor 92 is further configured to:
before the first trigger control submodule determines, according to the indication, not to trigger the uplink grant resource request if the UE is in an inactive time or determines, according to the indication, to trigger the uplink grant resource request if the UE is in an active time, determine that the UE has to-be-transmitted uplink data or determine that a logical channel of the UE has to-be-transmitted uplink data, where the logical channel is a logical channel configured with the control information or a logical channel in a logical channel group configured with the control information, and determine that a data amount of the uplink data is less than the data amount threshold.

Further, the indication acquired by the processor 92 is a scheduled time; and
the processor 92 is further configured to: if an SR counter is equal to 0, start a timer according to the scheduled time; and before the timer expires, if the UE is in an inactive time, end the sending decision processing procedure of the uplink grant resource request that is implemented by means of an SR, where the sending decision processing procedure is in the current TTI, or if the UE is in an active time, continue the sending decision processing procedure of the uplink grant resource request that is implemented by means of an SR, where the sending decision processing procedure is in the current TTI; and when the timer expires, the UE continues the sending decision processing procedure of the uplink grant resource request that is implemented by means of an SR, where the sending decision processing procedure is in the current TTI.

Further, the uplink grant resource request is the uplink grant resource request that is implemented by sending an SR, and the indication acquired by the processor 92 is a period repetition coefficient; and
the processor 92 is further configured to: starting from a TTI in which the SR is triggered, in TTIs whose quantity is the period repetition coefficient multiplied by an SR period, if the UE is in an inactive time, end the sending decision processing procedure of the uplink grant resource request that is implemented by means of an SR, where the sending decision processing procedure is in the current TTI, or if the UE is in an active time, continue the sending decision processing procedure of the uplink grant resource request that is implemented by means of an SR, where the sending decision processing procedure is in the current TTI.

Further, the control information acquired by the processor 92 is an indication to reduce a quantity of times of processing the uplink grant resource request; and
the processor 92 is further configured to:
if it is determined that an on-duration timer of the UE is not running, determine, according to the indication, not to trigger the uplink grant resource request, or if it is determined that an on-duration timer of the UE is running, determine, according to the indication, to trigger the uplink grant resource request; or
if it is determined that an on-duration timer of the UE is not running, end, according to the indication, a sending decision processing procedure of the uplink grant resource request, where the sending decision processing procedure is in a current transmission time interval TTI, or if it is determined that an on-duration timer of the UE is running, continue, according to the indication, a sending decision processing procedure of the uplink grant resource request, where the sending decision processing procedure is in a current transmission time interval TTI; or
if it is determined that an on-duration timer of the UE is not running and if a logical channel that triggers buffer status reporting BSR is a logical channel configured with the control information or a logical channel that triggers BSR is a logical channel in a logical channel group configured with the control information, set the SR that has been triggered by the BSR to be invalid in a current transmission time interval TTI, or if it is determined that an on-duration timer of the UE is running and if a logical channel that triggers buffer status reporting BSR is a logical channel configured with the control information or a logical channel that triggers BSR is a logical channel in a logical channel group configured with the control information, set the SR that has been triggered by the BSR to be valid in a current TTI.

Further, the indication acquired by the processor 92 is a scheduled time, and
the processor 92 is further configured to:
if the UE has to-be-transmitted uplink data or if a logical channel has to-be-transmitted uplink data, where the logical channel is a logical channel configured with the control information or a logical channel in a logical channel group configured with the control information, start a timer according to the scheduled time; and before the timer started by the third timer start submodule expires, if it is determined that the on-duration timer of the UE is not running, determine not to trigger the uplink grant resource request that is implemented by sending an SR, or if it is determined that the on-duration timer of the UE is running, determine to trigger the uplink grant resource request that is implemented by sending an SR; and when the timer expires, the UE determines not to trigger the uplink grant resource request that is implemented by sending an SR; or,
the uplink grant resource request is the uplink grant resource request that is implemented by sending an SR, the indication acquired by the processor 92 is a period repetition coefficient, and the processor 92 is further configured to: if the UE has to-be-transmitted uplink data or if the UE determines that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and before the timer started by the fourth timer start submodule expires, if it is determined that an on-duration timer of the UE is not running, determine not to trigger the uplink grant resource request that is implemented by sending an SR, or if it is determined that an on-duration timer of the UE is running, determine to trigger the uplink grant resource request that is implemented by sending an SR; and when the timer expires, the UE determines to trigger the uplink grant resource request that is implemented by sending an SR.

Further, the indication acquired by the processor 92 is a data amount threshold; and
the processor 92 is further configured to:
before the second trigger control submodule determines, according to the indication, not to trigger the uplink grant resource request if the UE is in an inactive time or determines, according to the indication, to trigger the uplink grant resource request if the UE is in an active time, determine that the UE has to-be-transmitted uplink data or that a logical channel has to-be-transmitted uplink data, where the logical channel is a logical channel configured with the control information or a logical channel in a logical channel group configured with the control information, and determine that a data amount of the uplink data is less than the data amount threshold.

Further, the indication acquired by the processor 92 is a scheduled time; and
the processor 92 is further configured to:
if an SR counter is equal to 0, start a timer according to the scheduled time; and
before the timer expires, if it is determined that the on-duration timer of the UE is not running, end the sending decision processing procedure of the uplink grant resource request that is implemented by means of an SR, where the sending decision processing procedure is in the current TTI, or if it is determined that the on-duration timer of the UE is running, continue the sending decision processing procedure of the uplink grant resource request that is implemented by means of an SR, where the sending decision processing procedure is in the current TTI; and when the timer expires, continue the sending decision processing procedure of the uplink grant resource request that is implemented by means of an SR, where the sending decision processing procedure is in the current TTI.

Further, the uplink grant resource request is the uplink grant resource request that is implemented by sending an SR, the indication acquired by the processor 92 is a period repetition coefficient, and the processor 92 is further configured to:
starting from a TTI in which the SR is triggered, in TTIs whose quantity is the period repetition coefficient multiplied by an SR period, if it is determined that the on-duration timer of the UE is not running, end the sending decision processing procedure that is in the current TTI and implemented by means of an SR, or if it is determined that the on-duration timer of the UE is running, continue the sending decision processing procedure that is in the current TTI and implemented by means of an SR.

Further, the control information acquired by the processor 92 is a scheduled time; and
the processor 92 is further configured to: if the user equipment UE has to-be-transmitted uplink data or if it is determined that a logical channel of the UE has to-be-transmitted uplink data, where the logical channel is a logical channel configured with the control information or a logical channel in a logical channel group configured with the control information, start a timer according to the scheduled time; and if the timer expires, trigger the uplink grant resource request, or if the timer does not expire, skip triggering the uplink grant resource request; or
the uplink grant resource request is the uplink grant resource request that is implemented by sending an SR, the control information acquired by the processor 92 is a scheduled time, and the processor 92 is further configured to: starting from a TTI in which the SR is triggered, in any TTI among TTIs whose quantity is the period repetition coefficient multiplied by an SR period, the UE ends a sending decision processing procedure that is in the any TTI and implemented by means of, an SR, and in other TTIs, the UE continues sending decision processing procedures that are in the other TTIs and implemented by means of an SR, where the other TTIs are TTIs, except the any TTI, among the TTIs whose quantity is the period repetition coefficient multiplied by the SR period starting from the TTI in which the SR is triggered; or
the uplink grant resource request is the uplink grant resource request that is implemented by sending an SR, the control information acquired by the processor 92 is a period repetition coefficient, and the processor 92 is further configured to: if the UE has to-be-transmitted uplink data or if it is determined that a logical channel of the UE has to-be-transmitted uplink data, where the logical channel is a logical channel configured with the control information or a logical channel in a logical channel group configured with the control information, start a timer, where a scheduled time of the timer is the period repetition coefficient multiplied by an SR period; and before the timer expires, determine not to trigger the uplink grant resource request that is implemented by sending an SR, and when the timer expires, determine to trigger the uplink grant resource request that is implemented by sending an SR; or
the control information acquired by the processor 92 is a scheduled time, and the processor 92 is further configured to: if an SR counter is equal to 0, start a timer according to the scheduled time; and before the timer expires, end a sending decision processing procedure of the uplink resource request that is implemented by means of an SR, where the sending decision processing procedure is in a current transmission time interval TTI, and when the timer expires, continue the sending decision processing procedure of the uplink resource request that is implemented by means of an SR, where the sending decision processing procedure is in the current TTI; or
the control information acquired by the processor 92 is a scheduled time, and the processor 92 is further configured to: if some uplink data of the UE becomes available or if uplink data corresponding to a logical channel becomes available, where the logical channel is a logical channel configured with the control information or a logical channel in a logical channel group configured with the control information, and if a current TTI is a TTI in which BSR triggers the SR, start a timer according to the scheduled time, before the timer expires, set the SR to be an invalid SR in the current TTI, and when the timer expires, the UE sets the SR to be a valid SR in the current TTI; or,
the control information acquired by the processor 92 is a period repetition coefficient, and the processor 92 is further configured to: if the UE has to-be-transmitted uplink data or if it is determined that a logical channel of the UE has to-be-transmitted uplink data, where the logical channel is a logical channel configured with the control information or a logical channel in a logical channel group configured with the control information, and if a current TTI is a TTI in which BSR triggers the SR, start a timer, where a scheduled time of the timer is the period repetition coefficient multiplied by an SR period; before the timer expires, set the SR to be an invalid SR in the current TTI, and when the timer expires, set the SR to be a valid SR in the current TTI; or
the control information acquired by the processor is a period repetition coefficient, and the processor 92 is further configured to: if the UE has to-be-transmitted uplink data, or if the UE determines that a logical channel of the UE has to-be-transmitted uplink data, where the logical channel is a logical channel configured with the control information or a logical channel in a logical channel group configured with the control information, starting from a TTI in which the SR is triggered, in any TTI among TTIs whose quantity is the period repetition coefficient multiplied by an SR period, set the SR triggered by BSR in the any TTI to be valid, and in other TTIs, set the SR triggered by BSR in the other TTIs to be invalid, where the other TTIs are TTIs, except the any TTI, among the TTIs whose quantity is the period repetition coefficient multiplied by the SR period starting from the TTI in which the SR is triggered.

Further, the control information acquired by the processor 92 is a data amount threshold; and
the processor 92 is further configured to:
if the UE has to-be-transmitted uplink data, or if it is determined that a logical channel of the UE has to-be-transmitted uplink data, where the logical channel is a logical channel configured with the control information or a logical channel in a logical channel group configured with the control information, and
if it is determined that a data amount of the uplink data is not less than the data amount threshold, trigger the uplink grant resource request, or if the UE determines that a data amount of the uplink data is less than the data amount threshold, skip triggering the uplink grant resource request.

Further, the control information acquired by the processor 92 is an indication to reduce a quantity of times of processing the uplink grant resource request; and
the processor 92 is further configured to:
determine, according to the indication, not to trigger the uplink grant resource request; or
end, according to the indication, a decision processing procedure of the uplink grant resource request; or
if a logical channel that triggers buffer status reporting BSR is a logical channel configured with the control information or a logical channel that triggers BSR is a logical channel in a logical channel group configured with the control information, set the SR that has been triggered by the BSR to be invalid in a current transmission time interval TTI.

Further, the processor 92 is further configured to:
after the first SR control submodule sets the SR to be invalid, skip determining whether to notify a physical layer to send the SR or whether to enter a random access process on the invalid SR; or
if the on-duration timer of the UE is not running, skip determining whether to notify a physical layer to send the SR or whether to enter a random access process on the invalid SR, or if the on-duration timer of the UE is running, determine whether to notify a physical layer to send the SR or whether to enter a random access process on the invalid SR; or
if the UE is in an inactive time, skip determining whether to notify a physical layer to send the SR or whether to enter a random access process on the invalid SR, or if the UE is in an active time, determine whether to notify a physical layer to send the SR or whether to enter a random access process on the invalid SR.

Further, the uplink grant resource request is the uplink grant resource request that is implemented by sending the SR, the control information is a period repetition coefficient and the period repetition coefficient is for one logical channel or one logical channel group; and
the processor 92 is further configured to:
determine an SR resource available for sending the SR, where the SR is triggered by the logical channel or the logical channel group, and a period of the SR resource is an SR period currently configured by a base station for the UE multiplied by the period repetition coefficient; and
the user equipment further includes a transmitter, configured to send, on the resource determined by the processor 92 and for sending the SR, the SR to the base station.

Further, the processor 92 is further configured to:
acquire the control information that is configured in advance; or
acquire the control information from an Open Mobile Alliance device management procedure; or
receive an attach accept message from a mobile management entity MME, and acquire the control information from the attach accept message; or
receive a radio resource control RRC connection reconfiguration message from the base station, and acquire the control information from the RRC connection reconfiguration message; or
acquire the control information by receiving a broadcast message from the base station; or
acquire the control information by receiving a paging message from the base station.

Further, the user equipment provided by this embodiment of the present invention may further include:
a transmitter, configured to send an RRC connection request message or an RRC connection setup complete message to the base station, where the RRC connection request message or the RRC connection setup complete message carries a preset type indication; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type; or
send, in an attachment process or a service request process, a preset type indication to the MME, so that the MME sends the preset type indication to the base station; and receive the RRC connection reconfiguration message sent by the base station, and acquire the control information from the RRC connection reconfiguration message, where the control information is control information corresponding to the preset type indication, and the preset type indication is used for indicating at least one of the following: a terminal type is a preset terminal type, and a service type is a preset service type; or
send, in an attachment process or a service request process, a preset type indication to the MME; and receive the attach accept message sent by the MME to the user equipment UE, and acquire the control information from the attach accept message, where the control information is control information corresponding to the preset type indication, and the preset type indication is used for indicating at least one of the following: a terminal type is a preset terminal type, and a service type is a preset service type.

Alternatively, the control information acquired by the processor is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE; and
the processor is further configured to:
acquire the available physical random access channel, where the available physical random access channel is a physical random access channel whose number mod the period of the available physical random access channel is equal to the offset value, where the number is obtained by numbering, in chronological order or first based on frequencies and then in chronological order, physical random access channels that are configured, in a system message broadcast by the base station, for the UE or the logical channel or logical channel group of the UE base station; and
initiate the random access process on the acquired available physical random access channel, so as to request the uplink grant resource.

Exemplarily, the control information acquired by the processor further includes a preamble; and
the processor is further configured to:
send, on the acquired available physical random access channel, the preamble to initiate the random access process.

Exemplarily, the processor may be configured to:
after the UE or the logical channel or logical channel group of the UE on the available physical random access channel sends the preamble,
if a random access response fails and a quantity of times the UE sends the preamble does not reach a maximum quantity of sending times, initiate the random access process on the acquired available physical random access channel, to request the uplink grant resource; or initiate the random access process on a physical random access channel among the physical random access channels that are configured, in the system message broadcast by the base station, for the UE or the logical channel or logical channel group of the UE, so as to request the uplink grant resource.

FIG. 10 is a schematic structural diagram of a base station according to another embodiment of the present invention. The base station includes: a transmitter 101, a memory 102, and a processor 103 connected to the memory 102, where the memory 102 stores a group of program code therein, and the processor 103 is configured to invoke the program code stored in the memory 102 to, as shown in FIG. 2: configure control information for user equipment UE, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process; and the transmitter 101 is configured to send, to the UE, the control information configured by the processor 103, so that the UE controls, according to the control information, a procedure of processing the uplink grant resource request.

Further, the transmitter 101 is further configured to send an RRC connection reconfiguration message to the UE, where the RRC connection reconfiguration message carries the control information; or configured to send a broadcast message, where the broadcast message carries the control information; or configured to send a paging message, where the paging message carries the control information.

Further, the base station provided by this embodiment of the present invention may further include:
a receiver, configured to: before the processor configures the control information for the UE, receive an RRC connection request message or an RRC connection setup complete message that is sent by the UE and carries a preset type indication, where the preset type indication is used for indicating at least one of the following: a terminal type is a preset terminal type, and a service type is a preset service type, where
the processor 103 is further configured to configure, for the UE, the control information corresponding to the preset type indication.

Further, the base station provided by this embodiment of the present invention may further include:
a receiver, configured to: before the processor configures the control information for the UE, receive a preset type indication sent by a mobile management entity MME, where the preset type indication is used for indicating at least one of the following: a terminal type is a preset terminal type, and a service type is a preset service type, where
the processor 103 is further configured to configure, for the UE, the control information corresponding to the preset type indication.

Further, the control information configured by the processor 103 for the UE is configuration information of at least one of a UE level, a logical channel level, and a logical channel group level.

Further, the transmitter 101 may further be configured to: if the control information is control information at the UE level, send, to the UE, an RRC connection reconfiguration message in which the control information is padded in a time sequence arrangement request configuration information element; or
if the control information is control information at the logical channel level, send, to the UE, an RRC connection reconfiguration message in which the control information is padded in a logical channel configuration information element; or
if the control information is control information at the logical channel group level, send, to the UE, an RRC connection reconfiguration message in which the control information is padded in a logical channel group configuration information element.

Further, the control information configured by the processor for the UE may be at least one of a time, a period repetition coefficient, a data amount threshold and an indication to reduce a quantity of times of processing the uplink grant resource request.

Alternatively, the control information configured by the processor may be physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE.

Exemplarily, the control information configured by the processor may further include a preamble.

FIG. 11 is a schematic structural diagram of a mobile management entity according to another embodiment of the present invention. The mobile management entity device includes: a transmitter 111, a memory 112, and a processor 113 connected to the memory, where the memory 112 stores a group of program code therein, and the processor 113 is configured to invoke the program code stored in the memory 112, to execute an operation, in the method for controlling an uplink grant resource request shown in FIG. 3, of acquiring a terminal type OF user equipment UE or a service type used by the UE; the transmitter 111 is configured to: when the terminal type is a terminal type or the service type is a service type, send a preset type indication to a base station, so that the base station sends control information to the UE or sends an attach accept message that carries control information to the UE, so that the UE performs restriction processing on an SR according to an indication of the control information, where the preset type indication is used for indicating at least one of the following: a terminal type is a preset terminal type, and a service type is a preset service type, and the control information is used for instructing the UE to perform processing on the SR.

Further, the device further includes a receiver, and the receiver is configured to receive a message that is sent by the UE during an attachment process, or configured to receive a message that is sent by the UE during a service requesting process.

Further, the transmitter 111 is further configured to send, to the UE, an attach accept message that carries control information, so that the UE performs restriction processing on an SR according to an indication of the control information control information.

An embodiment of the present invention further provides a computer program product, where the computer program product includes a computer readable medium, and the readable medium includes a first group of program code configured to execute steps in the method shown in FIG. 1:
acquiring control information, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process; and
controlling, according to the control information, a procedure of processing the uplink grant resource request.

Further, the control information may be an indication to reduce a quantity of times of processing the uplink grant resource request; and
the controlling, according to the control information, a procedure of processing the uplink grant resource request includes:
if the UE is in an inactive time, determine, according to the indication, not to trigger the uplink grant resource request, or if the UE is in an active time, determine, according to the indication, to trigger the uplink grant resource request; or
if the UE is in an inactive time, end, according to the indication, a sending decision processing procedure of the uplink grant resource request, where the sending decision processing procedure is in a current transmission time interval TTI, or if the UE is in an active time, continue, according to the indication, a sending decision processing procedure of the uplink grant resource request, where the sending decision processing procedure is in a current TTI; or
if a logical channel that triggers buffer status reporting BSR is a logical channel configured with the control information or a logical channel in a logical channel group configured with the control information, and if the UE is in an inactive time, setting the SR that has been triggered by the BSR to be invalid in a current TTI; or if the UE is in an active time, setting the SR that has been triggered by the BSR to be valid in a current TTI.

Further, the indication may be a scheduled time, and
the determining, by the UE according to the indication, not to trigger the uplink grant resource request if the UE is in an inactive time, or determining, by the UE according to the indication, to trigger the uplink grant resource request if the UE is in an active time includes:
if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer according to the scheduled time; and
before the timer expires, if it is determined that the UE is in an inactive time, determining not to trigger the uplink grant resource request, or if it is determined that the UE is in an active time, determining to trigger the uplink grant resource request, and when the timer expires, determining to trigger the uplink grant resource request; or,
the uplink grant resource request is the uplink grant resource request that is implemented by sending an SR, the indication is a period repetition coefficient, and
the determining, according to the indication, not to trigger the uplink grant resource request if the UE is in an inactive time, or determining, according to the indication, to trigger the uplink grant resource request if the UE is in an active time includes:
   if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer, where a scheduled time of the timer is the period repetition coefficient multiplied by an SR period; and
   before the timer expires, if it is determined that the UE is in an inactive time, determining not to trigger the uplink grant resource request that is implemented by sending an SR, or if it is determined that the UE is in an active time, determining to trigger the uplink grant resource request that is implemented by sending an SR, and when the timer expires, determining, by the UE, to trigger the uplink grant resource request.

Further, the indication may be a data amount threshold; and
before the determining, according to the indication, not to trigger the uplink grant resource request if the UE is in an inactive time, or determining, according to the indication, to trigger the uplink grant resource request if the UE is in an active time, the method further includes:
determining that the UE has to-be-transmitted uplink data, or determining that a logical channel of the UE has to-be-transmitted uplink data, where the logical channel is a logical channel configured with the control information or a logical channel in a logical channel group configured with the control information, and determining that a data amount of the uplink data is less than the data amount threshold.

Further, the indication may be a scheduled time; and
the ending, according to the indication, a sending decision processing procedure of the uplink grant resource request if the UE is in an inactive time, where the sending decision processing procedure is in a current TTI, or continuing, according to the indication, a sending decision processing procedure of the uplink grant resource request if the UE is in an active time, where the sending decision processing procedure is in a current TTI, includes:
if an SR counter is equal to 0, starting a timer according to the scheduled time; and before the timer expires, if the UE is in an inactive time, ending the sending decision processing procedure of the uplink grant resource request that is implemented by means of an SR, where the sending decision processing procedure is in the current TTI, or if the UE is in an active time, continuing the sending decision processing procedure of the uplink grant resource request that is implemented by means of an SR, where the sending decision processing procedure is in the current TTI; and when the timer expires, continuing the sending decision processing procedure of the uplink grant resource request that is implemented by means of an SR, where the sending decision processing procedure is in the current TTI.

Further, the uplink grant resource request may be the uplink grant resource request that is implemented by sending an SR, the instruction is a period repetition coefficient, and
the ending, according to the indication, a sending decision processing procedure of the uplink grant resource request if the UE is in an inactive time, where the sending decision processing procedure is in a current TTI, or continuing, according to the indication, a sending decision processing procedure of the uplink grant resource request if the UE is in an active time, where the sending decision processing procedure is in a current TTI, includes:
starting from a TTI in which the SR is triggered, in TTIs whose quantity is the period repetition coefficient multiplied by an SR period, if the UE is in an inactive time, ending the sending decision processing procedure of the uplink grant resource request that is implemented by means of an SR, where the sending decision processing procedure is in the current TTI, or if the UE is in an active time, continuing the sending decision processing procedure of the uplink grant resource request that is implemented by means of an SR, where the sending decision processing procedure is in the current TTI.

Further, the control information may be an indication to reduce a quantity of times of processing the uplink grant resource request; and
the controlling, according to the control information, a procedure of processing the uplink grant resource request includes:
if it is determined that an on-duration timer of the UE is not running, determining, according to the indication, not to trigger the uplink grant resource request, or if it is determined that an on-duration timer of the UE is running, determining, according to the indication, to trigger the uplink grant resource request; or
if it is determined that an on-duration timer of the UE is not running, ending, according to the indication, a sending decision processing procedure of the uplink grant resource request, where the sending decision processing procedure is in a current transmission time interval TTI, or if it is determined that an on-duration timer of the UE is running, continuing, according to the indication, a sending decision processing procedure of the uplink grant resource request, where the sending decision processing procedure is in a current transmission time interval TTI; or
if it is determined that an on-duration timer of the UE is not running and if a logical channel that triggers buffer status reporting BSR is a logical channel configured with the control information or a logical channel that triggers BSR is a logical channel in a logical channel group configured with the control information, setting the SR that has been triggered by the BSR to be invalid in a current transmission time interval TTI, or if it is determined that an on-duration timer of the UE is running and if a logical channel that triggers buffer status reporting BSR is a logical channel configured with the control information or a logical channel that triggers BSR is a logical channel in a logical channel group configured with the control information, setting the SR that has been triggered by the BSR to be valid in a current TTI.

Further, the indication may be a scheduled time, and
the determining, according to the indication, not to trigger the uplink grant resource request if it is determined that an on-duration timer of the UE is not running or determining, according to the indication, to trigger the uplink grant resource request if it is determined that an on-duration timer of the UE is running includes:
if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer according to the scheduled time; and
before the timer expires, if it is determined that the on-duration timer of the UE is not running, determining not to trigger the uplink grant resource request that is implemented by sending an SR, or if it is determined that the on-duration timer of the UE is running, determining to trigger the uplink grant resource request that is implemented by sending an SR; and when the timer expires, determining to trigger the uplink grant resource request that is implemented by sending an SR; or,
the uplink grant resource request is the uplink grant resource request that is implemented by sending an SR, the indication is a period repetition coefficient, and
the determining, according to the indication, not to trigger the uplink grant resource request if it is determined that an on-duration timer of the UE is not running or determining, according to the indication, to trigger the uplink grant resource request if it is determined that an on-duration timer of the UE is running includes:
   if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer, where a scheduled time of the timer is the period repetition coefficient multiplied by an SR period; and
   before the timer expires, if it is determined that the on-duration timer of the UE is not running, determining, by the UE, not to trigger the uplink grant resource request that is implemented by sending an SR, or if it is determined that the on-duration timer of the UE is running, determining to trigger the uplink grant resource request that is implemented by sending an SR; and when the timer expires, determining to trigger the uplink grant resource request that is implemented by sending an SR.

Further, the indication may be a data amount threshold; and
before the determining, according to the indication, not to trigger the uplink grant resource request if the UE is in an inactive time, or determining, according to the indication, to trigger the uplink grant resource request if the UE is in an active time, the method further includes:
determining that the UE has to-be-transmitted uplink data, or determining that a logical channel of the UE has to-be-transmitted uplink data, where the logical channel is a logical channel configured with the control information or a logical channel in a logical channel group configured with the control information, and determining that a data amount of the uplink data is less than the data amount threshold.

Further, the indication may be a scheduled time; and
the ending, according to the indication, a sending decision processing procedure of the uplink grant resource request if it is determined that an on-duration timer of the UE is not running, where the sending decision processing procedure is in a current transmission time interval TTI, or continuing, according to the indication, a sending decision processing procedure of the uplink grant resource request if it is determined that an on-duration timer of the UE is running, where the sending decision processing procedure is in a current transmission time interval TTI, includes:
if an SR counter is equal to 0, starting a timer according to the scheduled time; and
before the timer expires, if it is determined that the on-duration timer of the UE is not running, ending the sending decision processing procedure of the uplink grant resource request that is implemented by means of an SR, where the sending decision processing procedure is in the current TTI, or if the UE determines that the on-duration timer of the UE is running, continuing the sending decision processing procedure of the uplink grant resource request that is implemented by means of an SR, where the sending decision processing procedure is in the current TTI; and when the timer expires, continuing the sending decision processing procedure of the uplink grant resource request that is implemented by means of an SR, where the sending decision processing procedure is in the current TTI.

Further, the uplink grant resource request may be the uplink grant resource request that is implemented by sending an SR, the indication may be a period repetition coefficient, and
the ending, according to the indication, a sending decision processing procedure of the uplink grant resource request if it is determined that an on-duration timer of the UE is not running, where the sending decision processing procedure is in a current transmission time interval TTI, or continuing, according to the indication, a sending decision processing procedure of the uplink grant resource request if it is determined that an on-duration timer of the UE is running, where the sending decision processing procedure is in a current transmission time interval TTI, includes:
starting from a TTI in which the SR is triggered, in TTIs whose quantity is the period repetition coefficient multiplied by an SR period, if it is determined that the on-duration timer of the UE is not running, end the sending decision processing procedure that is in the current TTI and implemented by means of an SR, or if it is determined that the on-duration timer of the UE is running, continue the sending decision processing procedure that is in the current TTI and implemented by means of an SR.

Further, the control information may be a scheduled time, and
the controlling, according to the control information, a procedure of processing the uplink grant resource request may include:
if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting a timer according to the scheduled time; and
if the timer expires, triggering the uplink grant resource request, or if the timer does not expire, skipping triggering the uplink grant resource request; or,
the uplink grant resource request is the uplink grant resource request that is implemented by sending an SR, the control information is a scheduled time, and
the controlling, according to the control information, a procedure of processing the uplink grant resource request includes:
   starting from a TTI in which the SR is triggered, in any TTI among TTIs whose quantity is the period repetition coefficient multiplied by an SR period, continuing a sending decision processing procedure that is in the any TTI and implemented by means of an SR, and in other TTIs, ending sending decision processing procedures that are in the other TTIs and implemented by means of an SR, where the other TTIs are TTIs, except the any TTI, among the TTIs whose quantity is the period repetition coefficient multiplied by the SR period starting from the TTI in which the SR is triggered; or,
   the uplink grant resource request is the uplink grant resource request that is implemented by sending an SR, the control information is a period repetition coefficient, and
the controlling, according to the control information, a procedure of processing the uplink grant resource request includes:
   if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting, by the UE, a timer, where a scheduled time of the timer is the period repetition coefficient multiplied by an SR period; and before the timer expires, determining not to trigger the uplink grant resource request that is implemented by sending an SR, and when the timer expires, determining to trigger the uplink grant resource request that is implemented by sending an SR; or,
   the control information is a scheduled time; and
the controlling, according to the control information, a procedure of processing the uplink grant resource request includes:
   if an SR counter is equal to 0, starting a timer according to the scheduled time; and before the timer expires, ending, by the UE, a sending decision processing procedure of the uplink resource request that is implemented by means of an SR, where the sending decision processing procedure is in a current transmission time interval TTI, and when the timer expires, continuing the sending decision processing procedure of the uplink resource request that is implemented by means of an SR, where the sending decision processing procedure is in the current TTI; or,
   the control information is a scheduled time; and
the controlling, according to the control information, a procedure of processing the uplink grant resource request includes:
   if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, and if a current TTI is a TTI in which BSR triggers the SR, starting, by the UE, a timer according to the scheduled time, before the timer expires, setting the SR to be an invalid SR in the current TTI, and when the timer expires, setting the SR to be a valid SR in the current TTI; or,
   the control information is a period repetition coefficient, and
the controlling, according to the control information, a procedure of processing the uplink grant resource request includes:
   if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, and if a current TTI is a TTI in which BSR triggers the SR, starting, by the UE, a timer, where a scheduled time of the timer is the period repetition coefficient multiplied by an SR period, before the timer expires, setting the SR to be an invalid SR in the current TTI, and when the timer expires, setting the SR to be a valid SR in the current TTI; or,
   the control information is a period repetition coefficient, and
the controlling, according to the control information, a procedure of processing the uplink grant resource request includes:
   if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, starting from a TTI in which the SR is triggered, in any TTI among TTIs whose quantity is the period repetition coefficient multiplied by an SR period, setting, by the UE, the SR triggered by BSR in the any TTI to be valid, and in other TTIs, setting, by the UE, the SR triggered by BSR in the other TTIs to be invalid, where the other TTIs are TTIs, except the any TTI, among the TTIs whose quantity is the period repetition coefficient multiplied by the SR period starting from the TTI in which the SR is triggered.

Further, the control information may be a data amount threshold; and
the controlling, according to the control information, a procedure of processing the uplink grant resource request includes:
if it is determined that the UE has to-be-transmitted uplink data, or if it is determined that a logical channel of the UE has to-be-transmitted uplink data, where the logical channel is a logical channel configured with the control information or a logical channel in a logical channel group configured with the control information, and
if it is determined that a data amount of the uplink data is not less than the data amount threshold, triggering the uplink grant resource request, or if the UE determines that a data amount of the uplink data is less than the data amount threshold, skipping triggering the uplink grant resource request.

Further, the control information may be an indication to reduce a quantity of times of processing the uplink grant resource request; and
the controlling, according to the control information, a procedure of processing the uplink grant resource request includes:
determining, according to the indication, not to trigger the uplink grant resource request; or
ending, according to the indication, a decision processing procedure of the uplink grant resource request; or
if a logical channel that triggers buffer status reporting BSR is a logical channel configured with the control information or a logical channel that triggers BSR is a logical channel in a logical channel group configured with the control information, setting, by the UE, the SR that has been triggered by the BSR to be invalid in a current transmission time interval TTI.

Further, after the setting the SR to be invalid, the method may further includes:
skipping determining whether to notify a physical layer to send the SR or whether to enter a random access process on the invalid SR; or
if the on-duration timer of the UE is not running, skipping determining whether to notify a physical layer to send the SR or whether to enter a random access process on the invalid SR, or if the on-duration timer of the UE is running, determining whether to notify a physical layer to send the SR or whether to enter a random access process on the invalid SR; or
if the UE is in an inactive time, skipping determining whether to notify a physical layer to send the SR or whether to enter a random access process on the invalid SR, or if the UE is in an active time, determining whether to notify a physical layer to send the SR or whether to enter a random access process on the invalid SR.

Further, the uplink grant resource request may be the uplink grant resource request that is implemented by sending the SR, the control information is a period repetition coefficient and the period repetition coefficient is for one logical channel or one logical channel group; and
the controlling, according to the control information, a procedure of processing the uplink grant resource request includes:
determining an SR resource available for sending the SR, where the SR is triggered by the logical channel or the logical channel group, and a period of the SR resource is an SR period currently configured by a base station for the UE multiplied by the period repetition coefficient; and sending, on the resource for sending the SR, the SR to the base station.

Further, the acquiring control information may include:
acquiring the control information that is configured in advance; or
acquiring the control information from an Open Mobile Alliance device management procedure; or
receiving an attach accept message from a mobile management entity MME, and acquire the control information from the attach accept message; or
receiving a radio resource control RRC connection reconfiguration message from the base station, and acquiring the control information from the RRC connection reconfiguration message; or
acquiring the control information by receiving a broadcast message from the base station; or
acquiring the control information by receiving a paging message from the base station.

Further, the receiving a radio resource control RRC connection reconfiguration message from the base station, and acquiring the control information from the RRC connection reconfiguration message includes:
sending an RRC connection request message or an RRC connection setup complete message to the base station, where the RRC connection request message or the RRC connection setup complete message carries a preset type indication; and receiving the RRC connection reconfiguration message sent by the base station, and acquiring the control information from the RRC connection reconfiguration message, where the control information is control information corresponding to the preset type indication, and the preset type indication is used for indicating at least one of the following: a terminal type is a preset terminal type, and a service type is a preset service type;
or the receiving a radio resource control RRC connection reconfiguration message from the base station, and acquiring the control information from the RRC connection reconfiguration message includes:
   sending, in an attachment process or a service request process, a preset type indication to the MME, so that the MME sends the preset type indication to the base station; and receiving the RRC connection reconfiguration message sent by the base station, and acquiring the control information from the RRC connection reconfiguration message, where the control information is control information corresponding to the preset type indication, and the preset type indication is used for indicating at least one of the following: a terminal type is a preset terminal type, and a service type is a preset service type; or
   the receiving an attach accept message from a mobile management entity MME, and acquiring the control information from the attach accept message includes:
      sending, in an attachment process or a service request process, a preset type indication to the MME; and receiving the attach accept message sent by the MME to the UE, and acquiring the control information from the attach accept message, where the control information is control information corresponding to the preset type indication, and the preset type indication is used for indicating at least one of the following: a terminal type is a preset terminal type, and a service type is a preset service type.

Alternatively, the control information is physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE; and
the controlling, by the UE according to the control information, a procedure of processing the uplink grant resource request includes:
acquiring, by the UE, the available physical random access channel, where the available physical random access channel is a physical random access channel whose number mod the period of the available physical random access channel is equal to the offset value, where the number is obtained by numbering, in chronological order or first based on frequencies and then in chronological order, physical random access channels that are configured, in a system message broadcast by the base station, for the UE or the logical channel or logical channel group of the UE base station; and
initiating, by the UE or the logical channel or logical channel group of the UE, the random access process on the available physical random access channel, to request the uplink grant resource.

Exemplarily, the control information may further include a preamble; and
the initiating, by the UE or the logical channel or logical channel group of the UE, the random access process on the available physical random access channel includes:
sending, by the UE or the logical channel or logical channel group of the UE, the preamble on the available physical random access channel, to initiate the random access process.

Exemplarily, after the initiating, by the UE or the logical channel or logical channel group of the UE, the random access process on the available physical random access channel, the method further includes:
if a random access response fails and a quantity of times the UE sends the preamble does not reach a maximum quantity of sending times, initiating, by the UE or the logical channel or logical channel group of the UE, the random access process on the available physical random access channel, to request the uplink grant resource; or initiating, by the UE or the logical channel or logical channel group of the UE, the random access process on a physical random access channel among the physical random access channels that are configured, in the system message broadcast by the base station, for the UE or the logical channel or logical channel group of the UE, so as to request the uplink grant resource.

In addition, an embodiment of the present invention further provides another computer program product, where the computer program product includes a computer readable medium, and the readable medium includes a second group of program code configured to execute steps in the method shown in FIG. 2:
configuring control information for user equipment UE, where the control information is used for instructing to reduce a quantity of times of processing an uplink grant resource request, and the uplink grant resource request is an uplink grant resource request that is implemented by sending a schedule request SR or an uplink grant resource request that is implemented by means of a random access process; and
sending the control information to the UE, so that the UE controls, according to the control information, a procedure of processing the uplink grant resource request.

Further, the sending the control information to the UE may include:
sending a radio resource control RRC connection reconfiguration message to the UE, where the RRC connection reconfiguration message carries the control information; or
sending a broadcast message, where the broadcast message carries the control information; or
sending a paging message, where the paging message carries the control information.

Further, before the configuring control information for UE, the method may further include:
receiving an RRC connection request message or an RRC connection setup complete message that is sent by the UE and carries a preset type indication, where the preset type indication is used for indicating at least one of the following: a terminal type is a preset terminal type, and a service type is a preset service type; and
the configuring control information for UE may include: configuring, for the UE, the control information corresponding to the preset type indication.

Further, before the configuring control information for UE, the method may further include:
receiving a preset type indication sent by a mobile management entity MME, where the preset type indication is used for indicating at least one of the following: a terminal type is a preset terminal type, and a service type is a preset service type; and
the configuring control information for UE may include: configuring, for the UE, the control information corresponding to the preset type indication.

Further, the control information configured by for the UE may be configuration information of at least one of a UE level, a logical channel level, and a logical channel group level.

Further, the sending the control information to the UE may include:
if the control information is control information at the UE level, sending, to the UE, an RRC connection reconfiguration message in which the control information is padded in a time sequence arrangement request configuration information element; or
if the control information is control information at the logical channel level, sending, to the UE, an RRC connection reconfiguration message in which the control information is padded in a logical channel configuration information element; or
if the control information is control information at the logical channel group level, sending, to the UE, an RRC connection reconfiguration message in which the control information is padded in a logical channel group configuration information element.

Further, the control information configured for the UE may be at least one of a scheduled time, a period repetition coefficient, a data amount threshold and an indication to reduce a quantity of times of processing the uplink grant resource request.

Alternatively, the control information configured by the base station for the UE may be physical random access channel configuration information, and the physical random access channel configuration information includes a period and an offset value of an available physical random access channel, where the available physical random access channel is an available physical random access channel of the random access process triggered on a logical channel of the UE, an available physical random access channel of the random access process triggered on a logical channel group of the UE, or an available physical random access channel of the random access process triggered by the UE.

Exemplarily, the control information may further include a preamble.

In addition, an embodiment of the present invention further provides another computer program product, where the computer program product includes a computer readable medium, and the readable medium includes a third group of program code configured to execute steps in the method shown in FIG. 3:
acquiring a terminal type of user equipment UE or a service type used by the UE; and
if the terminal type is a preset terminal type, or the service type is a preset service type, sending a preset type indication to a base station, so that the base station sends control information to the UE, where the preset type indication is used for indicating at least one of the following: the terminal type is the preset terminal type, and the service type is the preset service type, the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

Further, the acquiring a terminal type of user equipment UE or a service type used by the UE may include:
acquiring the terminal type of the UE by receiving a message that is sent by the UE in an attachment process; or
acquiring the terminal type of the UE from a home subscriber server HSS in an authentication process of an attachment process; or
acquiring, by receiving a message that is sent by the UE in a service request process, the terminal type of the UE or the service type used by the UE.

In addition, an embodiment of the present invention further provides another computer program product, where the computer program product includes a computer readable medium, and the readable medium includes a fourth group of program code configured to execute steps in the method shown in FIG. 4:
acquiring a terminal type of user equipment UE or a service type used by the UE; and
when the terminal type is a preset terminal type, or the service type is a preset service type, sending, to the UE, an attach accept message carrying control information, so that the UE controls, according to the control information, a procedure of processing the uplink grant resource request, where the control information is used for instructing to reduce a quantity of times of processing the uplink grant resource request, and the uplink grant resource request is an uplink grant resource request that is implemented by sending a schedule request SR or an uplink grant resource request that is implemented by means of a random access process.

Further, the acquiring, by the MME, a terminal type of user equipment UE or a service type used by the UE may include:
acquiring the terminal type of the UE by receiving a message that is sent by the UE in an attachment process; or
acquiring the terminal type of the UE from a home subscriber server HSS in an authentication process of an attachment process; or
acquiring, by receiving a message that is sent by the UE in a service request process, the terminal type of the UE or the service type used by the UE.

The control information acquired by a terminal from a network device is a period repetition coefficient, and if the period repetition coefficient is for one logical channel or one logical channel group, an SR resource available to the logical channel or the logical channel group is an SR resource currently configured by a network side device for the terminal multiplied by the period repetition coefficient.

An SR resource configuration acquired by the terminal from the network device includes an identifier of a logical channel or a logical channel group and a corresponding SR resource, and at this time, when the logical channel or the logical channel group indicated by the identifier needs to send an SR, only the corresponding SR resource can be used. Persons of ordinary skill in the art may understand that all or some of the steps of the method embodiments may be implemented by a program instructing relevant hardware. The program may be stored in a computer-readable storage medium. When the program is running, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for controlling an uplink grant resource request, **characterized by**, comprising:
Acquiring(11), by user equipment, UE, control information, wherein the control information is used for instructing to reduce a quantity of times of processing an uplink grant resource request, and the uplink grant resource request is an uplink grant resource request that is implemented by sending a schedule request, SR, and the control information include a scheduled time; and
starting, by the UE, a timer according to the scheduled time, when the UE determines that the UE has to-be-transmitted uplink data, or when the UE determines that a logical channel of the UE has to-be-transmitted uplink data,
wherein the logical channel is a logical channel configured with the control information or a logical channel in a logical channel group configured with the control information; and
when the timer expires, triggering the uplink grant resource request, or when the timer does not expire, skipping triggering the uplink grant resource request.

2. The method according to claim 1, wherein
triggering the uplink grant resource request is a part of a procedure of a buffer status reporting, BSR, processing process.,

3. The method according to one of claim 1 to 2, wherein
the control information is one of the following information:
control information configured for the UE level,
control information configured for a logical channel level of the UE,
control information configured for a logical channel group level of the UE,
the control information acquired by UE, at the logical channel level from a logical channel configuration information element in the RRC connection reconfiguration message sent by the base station.

4. The method according to one of claim 1 to 2, wherein
the control information is at least one of: a scheduled time, an indication to reduce a quantity of times of processing the uplink grant resource request.

5. The method according to any one of claims 1 to 2, wherein the acquiring, by UE, control information comprises:
receiving, by the UE, a radio resource control, RRC, connection reconfiguration message from the base station, and acquiring the control information from the RRC connection reconfiguration message.

6. The method according to claim 5, wherein the receiving, by the UE, a radio resource control, RRC, connection reconfiguration message from the base station, and acquiring the control information from the RRC connection reconfiguration message comprises:
sending, by the UE, an RRC connection request message or an RRC connection setup complete message to the base station, wherein the RRC connection request message or the RRC connection setup complete message carries a preset type indication; and receiving, by the UE, the RRC connection reconfiguration message sent by the base station, and acquiring the control information from the RRC connection reconfiguration message, wherein the control information is control information corresponding to the preset type indication, and the preset type indication is used for indicating at least one of the following: a terminal type is a preset terminal type, and a service type is a preset service type.

7. A method for controlling an uplink grant resource request, **characterized by**, comprising:
configuring(21), by a base station, control information for user equipment, UE, wherein the control information is used for instructing to reduce a quantity of times of processing an uplink grant resource request, and the uplink grant resource request includes an uplink grant resource request that is implemented by sending a schedule request, SR and the control information include a scheduled time; and
sending, by the base station, the control information to the UE so that the UE starts a timer according to the scheduled time, when the UE determines that the UE has to-be-transmitted uplink data, or when the UE determines that a logical channel of the UE has to-be-transmitted uplink data,
wherein the logical channel is a logical channel configured with the control information or a logical channel in a logical channel group configured with the control information; and
when the timer expires, the UE triggers the uplink grant resource request, or when the timer does not expire, the UE skips triggering the uplink grant resource request.

8. The method according to claim 7, wherein the sending, by the base station, the control information to the UE comprises:
sending, by the base station, a radio resource control, RRC, connection reconfiguration message to the UE, wherein the RRC connection reconfiguration message carries the control information.

9. The method according to one of claim 7 to 8, wherein before the configuring, by a base station, control information for UE, the method further comprises:
receiving, by the base station, a preset type indication sent by a mobile management entity, MME, wherein the preset type indication is used for indicating at least one of the following: a terminal type is a preset terminal type, and a service type is a preset service type; and
the configuring, by a base station, control information for UE comprises: configuring, by the base station for the UE, the control information corresponding to the preset type indication.

10. The method according to one of claims 7 to 8, wherein the control information configured by the base station for the UE is configuration information of at least one of a UE level, a logical channel level, and a logical channel group level.

11. The method according to claim 10, wherein the sending, by the base station, the control information to the UE comprises:
when the control information is control information at the UE level, sending, by the base station to the UE, an RRC connection reconfiguration message in which the control information is padded in a time sequence arrangement request configuration information element.

12. The method according to any one of claims 7 to 8, wherein the control information configured by the base station for the UE is at least one of a scheduled time, and an indication to reduce a quantity of times of processing the uplink grant resource request.

13. A user equipement, **characterized by**, including:
a memory(91) and a processor(92) connected to the memory, where the memory(91) stores a group of program code therein, and the processor(92) is configured to invoke the program code stored in the memory(91) to:
acquire control information, wherein the control information is used for instructing to reduce a quantity of times of processing an uplink grant resource request, and the uplink grant resource request is an uplink grant resource request that is implemented by sending a schedule request, SR, and the control information include a scheduled time; and
start a timer according to the scheduled time, when it is determined that there is to-be-transmitted uplink data, or when it is determined that a logical channel has to-be-transmitted uplink data, wherein the logical channel is a logical channel configured with the control information or a logical channel in a logical channel group configured with the control information; and
trigger the uplink grant resource request when the timer expires, or skip triggering the uplink grant resource request when the timer does not expire.

14. The user equipement according to claim 13, wherein
triggering the uplink grant resource request is a part of a procedure of a buffer status reporting (buffer status reporting, BSR) processing process.

15. The user equipement according to one of claim 13 to 14, wherein
the control information is one of the following information:
control information configured for the UE level,
control information configured for a logical channel level of the UE,
control information configured for a logical channel group level of the UE,
the control information acquired at the logical channel level from a logical channel configuration information element in the RRC connection reconfiguration message sent by the base station.

16. The user equipement according to one of claim 13 to 14, wherein
the control information is at least one of: a scheduled time, an indication to reduce a quantity of times of processing the uplink grant resource request.

17. The user equipement according to any one of claims 13 to 14, wherein the processor (92) is configured to acquire control information comprises:
the processor (92) is configured to receive a radio resource control, RRC, connection reconfiguration message from the base station, and acquire the control information from the RRC connection reconfiguration message.

18. The user equipement according to claim 17, comprises:
a transmitter, configured to send an RRC connection request message or an RRC connection setup complete message to the base station, wherein the RRC connection request message or the RRC connection setup complete message carries a preset type indication; and receive the RRC connection reconfiguration message sent by the base station, and acquire the control information from the RRC connection reconfiguration message, wherein the control information is control information corresponding to the preset type indication, and the preset type indication is used for indicating at least one of the following: a terminal type is a preset terminal type, and a service type is a preset service type.

19. A base station, **characterized by**, comprising: a transmitter (101), a memory (102, and a processor (103) connected to the memory (102), wherein the memory (102), stores a group of program code therein, and the processor (103) is configured to invoke the program code stored in the memory (102) to
configure control information for user equipment, UE, wherein the control information is used for instructing to reduce a quantity of times of processing an uplink grant resource request, and the uplink grant resource request includes an uplink grant resource request that is implemented by sending a schedule request, SR; and
the transmitter (101) is configured to send the control information to the UE so that the UE starts a timer according to the scheduled time, when the UE determines that the UE has to-be-transmitted uplink data, or when the UE determines that a logical channel of the UE has to-be-transmitted uplink data,
wherein the logical channel is a logical channel configured with the control information or a logical channel in a logical channel group configured with the control information; and
when the timer expires, the UE triggers the uplink grant resource request, or when the timer does not expire, the UE skips triggering the uplink grant resource request.

20. The base station according to claim 19, wherein the transmitter 101 is further configured to send the control information to the UE, comprises:
the transmitter is further configured to send a radio resource control, RRC, connection reconfiguration message to the UE, wherein the RRC connection reconfiguration message carries the control information.

21. The base station according to one of claim 19 to 20, comprising
a receiver, configured to: before the processor configures the control information for the UE, receive a preset type indication sent by a mobile management entity, MME, where the preset type indication is used for indicating at least one of the following: a terminal type is a preset terminal type, and a service type is a preset service type, where
the processor (103) is further configured to configure, for the UE, the control information corresponding to the preset type indication..

22. The base station according to one of claims 19 to 20, wherein the control information configured for the UE is configuration information of at least one of a UE level, a logical channel level, and a logical channel group level.

23. The base station according to claim 22, the transmitter (101) may further be configured to:
send an RRC connection reconfiguration message in which the control information is padded in a time sequence arrangement request configuration information element, when the control information is control information at the UE level.

24. The base station according to any one of claims 19 to 20, wherein the control information configured for the UE is at least one of a scheduled time, and an indication to reduce a quantity of times of processing the uplink grant resource request.

## Patentansprüche

1. Verfahren zum Steuern einer Anfrage für eine Uplink-Autorisierungsressource, **dadurch gekennzeichnet, dass** das Verfahren umfasst:
Erlangen (11) von Steuerinformationen durch eine Benutzervorrichtung (User Equipment, UE), wobei die Steuerinformationen verwendet werden, um eine Anweisung zu geben, eine Verarbeitungshäufigkeit einer Anfrage für eine Uplink-Autorisierungsressource zu verringern, und wobei die Anfrage für eine Uplink-Autorisierungsressource eine Anfrage für eine Uplink-Autorisierungsressource ist, die durch ein Senden einer Planungsanfrage (Schedule Request, SR) umgesetzt wird, und wobei die Steuerinformationen einen geplanten Zeitpunkt umfassen; und
Starten einer Zeitsteuerung durch die UE gemäß dem geplanten Zeitpunkt, wenn die UE ermittelt, dass die UE zu übertragende Uplink-Daten aufweist, oder wenn die UE ermittelt, dass ein Logikkanal der UE zu übertragende Uplink-Daten aufweist,
wobei der Logikkanal ein Logikkanal ist, der mit den Steuerinformationen konfiguriert ist, oder ein Logikkanal in einer Logikkanalgruppe ist, die mit den Steuerinformationen konfiguriert ist; und
wenn die Zeitsteuerung abgelaufen ist, Triggern der Anfrage für eine Uplink-Autorisierungsressource; oder wenn die Zeitsteuerung nicht abgelaufen ist, Überspringen des Triggerns der Anfrage für eine Uplink-Autorisierungsressource.

2. Verfahren nach Anspruch 1, wobei
das Triggern der Anfrage für eine Uplink-Autorisierungsressource ein Teil einer Prozedur eines Verarbeitungsprozesses einer Pufferzustandsberichterstattung (Buffer Status Reporting, BSR) ist.

3. Verfahren nach einem der Ansprüche 1 bis 2, wobei
die Steuerinformationen eine der folgenden sind:
Steuerinformationen, die für die UE-Ebene konfiguriert sind,
Steuerinformationen, die für eine Logikkanalebene der UE konfiguriert sind,
Steuerinformationen, die für eine Logikkanalgruppenebene der UE konfiguriert sind,
wobei die Steuerinformationen von der UE auf der Logikkanalebene aus einem Informationselement für eine Logikkanalkonfiguration in der RRC-Verbindungsneukonfigurationsnachricht erlangt werden, die von der Basisstation gesendet wird.

4. Verfahren nach einem der Ansprüche 1 bis 2, wobei
die Steuerinformationen mindestens eine der folgenden aufweisen: einen geplanten Zeitpunkt, eine Anzeige zum Verringern einer Verarbeitungshäufigkeit der Anfrage für eine Uplink-Autorisierungsressource.

5. Verfahren nach einem der Ansprüche 1 bis 2, wobei das Erlangen von Steuerinformationen durch die UE umfasst:
Empfangen in der UE einer Funkressourcensteuerung(Radio Resource Control, RRC)-Verbindungsneukonfigurationsnachricht von der Basisstation, und Erlangen der Steuerinformationen aus der RRC-Verbindungsneukonfigurationsnachricht.

6. Verfahren nach Anspruch 5, wobei das Empfangen in der UE einer Funkressourcensteuerung(Radio Resource Control, RRC)-Verbindungsneukonfigurationsnachricht von der Basisstation und das Erlangen der Steuerinformationen aus der RRC-Verbindungsneukonfigurationsnachricht umfassen:
Senden einer RRC-Verbindungsanfragenachricht oder einer RRC-Verbindungssetupabschlussnachricht von der UE an die Basisstation, wobei die RRC-Verbindungsanfragenachricht oder die RRC-Verbindungssetupabschlussnachricht eine voreingestellte Typanzeige mitführt; und
Empfangen der von der Basisstation gesendeten RRC-Verbindungsneukonfigurationsnachricht in der UE, und Erlangen der Steuerinformationen aus der RRC-Verbindungsneukonfigurationsnachricht, wobei die Steuerinformationen Steuerinformationen aufweisen, die der voreingestellten Typanzeige entsprechen, und wobei die voreingestellte Typanzeige verwendet wird, um mindestens eine der folgenden Anzeigen anzuzeigen: ein Endgerätetyp ist ein voreingestellter Endgerätetyp, und ein Diensttyp ist ein voreingestellter Diensttyp.

7. Verfahren zum Steuern einer Anfrage für eine Uplink-Autorisierungsressource, **dadurch gekennzeichnet, dass** das Verfahren umfasst:
Konfigurieren (21) von Steuerinformationen für eine Benutzervorrichtung (User Equipment, UE) durch eine Basisstation, wobei die Steuerinformationen verwendet werden, um eine Anweisung zu geben, eine Verarbeitungshäufigkeit einer Anfrage für eine Uplink-Autorisierungsressource zu verringern, und wobei die Anfrage für eine Uplink-Autorisierungsressource eine Anfrage für eine Uplink-Autorisierungsressource umfasst, die durch ein Senden einer Planungsanfrage (Schedule Request, SR) umgesetzt wird, und wobei die Steuerinformationen einen geplanten Zeitpunkt umfassen; und
Senden der Steuerinformationen von der Basisstation an die UE, sodass die UE eine Zeitsteuerung gemäß dem geplanten Zeitpunkt startet, wenn die UE ermittelt, dass die UE zu übertragende Uplink-Daten aufweist, oder wenn die UE ermittelt, dass ein Logikkanal der UE zu übertragende Uplink-Daten aufweist,
wobei der Logikkanal ein Logikkanal ist, der mit den Steuerinformationen konfiguriert ist, oder ein Logikkanal in einer Logikkanalgruppe ist, die mit den Steuerinformationen konfiguriert ist; und
wenn die Zeitsteuerung abgelaufen ist, die UE die Anfrage für eine Uplink-Autorisierungsressource triggert; oder wenn die Zeitsteuerung nicht abgelaufen ist, die UE das Triggern der Anfrage für eine Uplink-Autorisierungsressource überspringt.

8. Verfahren nach Anspruch 7, wobei das Senden der Steuerinformationen von der Basisstation an die UE umfasst:
Senden einer Funkressourcensteuerung(Radio Resource Control, RRC)-Verbindungsneukonfigurationsnachricht von der Basisstation an die UE, wobei die RRC-Verbindungsneukonfigurationsnachricht die Steuerinformationen mitführt.

9. Verfahren nach einem der Ansprüche 7 bis 8, wobei das Verfahren vor dem Konfigurieren der Steuerinformationen für die UE durch die Basisstation außerdem umfasst:
Empfangen in der Basisstation einer von einer Mobilitätsverwaltungseinheit (Mobile Management Entity, MME) gesendeten Typanzeige, wobei die voreingestellte Typanzeige verwendet wird, um mindestens eine der folgenden Anzeigen anzuzeigen: ein Endgerätetyp ist ein voreingestellter Endgerätetyp, und ein Diensttyp ist ein voreingestellter Diensttyp; und
wobei das Konfigurieren der Steuerinformationen für die UE durch die Basisstation umfasst: Konfigurieren der Steuerinformationen für die UE, die der voreingestellten Typanzeige entsprechen, durch die Basisstation.

10. Verfahren nach einem der Ansprüche 7 bis 8, wobei die von der Basisstation konfigurierten Steuerinformationen für die UE Konfigurationsinformationen von mindestens einer der folgenden sind: einer UE-Ebene, einer Logikkanalebene und einer Logikkanalgruppenebene.

11. Verfahren nach Anspruch 10, wobei das Senden der Steuerinformationen von der Basisstation an die UE umfasst:
wenn die Steuerinformationen Steuerinformationen auf der UE-Ebene sind, Senden einer RRC-Verbindungsneukonfigurationsnachricht von der Basisstation an die UE, in der die Steuerinformationen in ein Konfigurationsinformationselement einer Zeitabfolgeanordnungsanfrage eingebettet sind.

12. Verfahren nach einem der Ansprüche 7 bis 8, wobei die von der Basisstation konfigurierten Steuerinformationen für die UE mindestens eine der folgenden umfassen: einen geplanten Zeitpunkt, und eine Anzeige zum Verringern einer Verarbeitungshäufigkeit der Anfrage für eine Uplink-Autorisierungsressource.

13. Benutzervorrichtung, **dadurch gekennzeichnet, dass** sie umfasst:
einen Speicher (91) und einen Prozessor (92), der mit dem Speicher verbunden ist, wobei in dem Speicher (91) eine Gruppe von Programmcodes gespeichert wird, und wobei der Prozessor (92) konfiguriert ist, um den in dem Speicher (91) gespeicherten Programmcode aufzurufen zum:
Erlangen von Steuerinformationen, wobei die Steuerinformationen verwendet werden, um eine Anweisung zu geben, eine Verarbeitungshäufigkeit einer Anfrage für eine Uplink-Autorisierungsressource zu verringern, und wobei die Anfrage für eine Uplink-Autorisierungsressource eine Anfrage für eine Uplink-Autorisierungsressource ist, die durch ein Senden einer Planungsanfrage (Schedule Request, SR) umgesetzt wird, und wobei die Steuerinformationen einen geplanten Zeitpunkt umfassen; und
Starten einer Zeitsteuerung gemäß dem geplanten Zeitpunkt, wenn ermittelt wird, dass zu übertragende Uplink-Daten vorhanden sind, oder wenn ermittelt wird, dass ein Logikkanal zu übertragende Uplink-Daten aufweist, wobei der Logikkanal ein Logikkanal ist, der mit den Steuerinformationen konfiguriert ist, oder ein Logikkanal in einer Logikkanalgruppe ist, die mit den Steuerinformationen konfiguriert ist; und
Triggern der Anfrage für eine Uplink-Autorisierungsressource, wenn die Zeitsteuerung abgelaufen ist, oder Überspringen des Triggerns der Anfrage für eine Uplink-Autorisierungsressource, wenn die Zeitsteuerung nicht abgelaufen ist.

14. Benutzervorrichtung nach Anspruch 13, wobei
das Triggern der Anfrage für eine Uplink-Autorisierungsressource ein Teil einer Prozedur eines Verarbeitungsprozesses einer Pufferzustandsberichterstattung (Pufferzustandspeicher(Buffer Status Reporting) BSR) ist.

15. Benutzervorrichtung nach einem der Ansprüche 13 bis 14, wobei die Steuerinformationen eine der folgenden Informationen sind:
Steuerinformationen, die für die UE-Ebene konfiguriert sind,
Steuerinformationen, die für eine Logikkanalebene der UE konfiguriert sind,
Steuerinformationen, die für eine Logikkanalgruppenebene der UE konfiguriert sind,
wobei die Steuerinformationen auf der Logikkanalebene aus einem Informationselement für eine Logikkanalkonfiguration in der RRC-Verbindungsneukonfigurationsnachricht erlangt werden, die von der Basisstation gesendet wird.

16. Benutzervorrichtung nach einem der Ansprüche 13 bis 14, wobei die Steuerinformationen mindestens eine der folgenden aufweisen: einen geplanten Zeitpunkt, eine Anzeige zum Verringern einer Verarbeitungshäufigkeit der Anfrage für eine Uplink-Autorisierungsressource.

17. Benutzervorrichtung nach einem der Ansprüche 13 bis 14, wobei der Prozessor (92) konfiguriert ist, zum Erlangen der Steuerinformationen, umfasst:
den Prozessor (92), der konfiguriert ist, um eine Funkressourcensteuerung(Radio Resource Control, RRC)-Verbindungsneukonfigurationsnachricht von der Basisstation zu empfangen, und um die Steuerinformationen aus der RRC-Verbindungsneukonfigurationsnachricht zu erlangen.

18. Benutzervorrichtung nach Anspruch 17, umfassend:
einen Sender, der konfiguriert ist zum Senden einer RRC-Verbindungsanfragenachricht oder einer RRC-Verbindungssetupabschlussnachricht an die Basisstation, wobei die RRC-Verbindungsanfragenachricht oder die RRC-Verbindungssetupabschlussnachricht eine voreingestellte Typanzeige mitführt; und
Empfangen der von der Basisstation gesendeten RRC-Verbindungsneukonfigurationsnachricht, und Erlangen der Steuerinformationen aus der RRC-Verbindungsneukonfigurationsnachricht, wobei die Steuerinformationen Steuerinformationen sind, die der voreingestellten Typanzeige entsprechen, und wobei die voreingestellte Typanzeige verwendet wird, um mindestens eine der folgenden Anzeigen anzuzeigen: ein Endgerätetyp ist ein voreingestellter Endgerätetyp, und ein Diensttyp ist ein voreingestellter Diensttyp.

19. Basisstation, **dadurch gekennzeichnet, dass** sie umfasst: einen Sender (101), einen Speicher (102) und einen Prozessor (103), der mit dem Speicher (102) verbunden ist, wobei in dem Speicher (102) eine Gruppe von Programmcodes gespeichert wird, und wobei der Prozessor (103) konfiguriert ist, um den in dem Speicher (102) gespeicherten Programmcode aufzurufen zum
Konfigurieren von Steuerinformationen für eine Benutzervorrichtung (User Equipment, UE), wobei die Steuerinformationen verwendet werden, um eine Anweisung zu geben, eine Verarbeitungshäufigkeit einer Anfrage für eine Uplink-Autorisierungsressource zu verringern, und wobei die Anfrage für eine Uplink-Autorisierungsressource eine Anfrage für eine Uplink-Autorisierungsressource umfasst, die durch ein Senden einer Planungsanfrage (Schedule Request, SR) umgesetzt wird; und
wobei der Sender (101) konfiguriert ist zum Senden der Steuerinformationen an die UE, sodass die UE eine Zeitsteuerung gemäß dem geplanten Zeitpunkt startet, wenn die UE ermittelt, dass die UE zu übertragende Uplink-Daten aufweist, oder wenn die UE ermittelt, dass ein Logikkanal der UE zu übertragende Uplink-Daten aufweist, wobei der Logikkanal ein Logikkanal ist, der mit den Steuerinformationen konfiguriert ist, oder ein Logikkanal in einer Logikkanalgruppe ist, die mit den Steuerinformationen konfiguriert ist; und
wenn die Zeitsteuerung abgelaufen ist, die UE die Anfrage für eine Uplink-Autorisierungsressource triggert; oder wenn die Zeitsteuerung nicht abgelaufen ist, die UE das Triggern der Anfrage für eine Uplink-Autorisierungsressource überspringt.

20. Basisstation nach Anspruch 19, wobei der Sender 101, außerdem konfiguriert ist zum Senden der Steuerinformationen an die UE, umfasst:
den Sender, der außerdem konfiguriert ist zum Senden einer Funkressourcensteuerung(Radio Resource Control, RRC)-Verbindungsneukonfigurationsnachricht an die UE, wobei die RRC-Verbindungsneukonfigurationsnachricht die Steuerinformationen mitführt.

21. Basisstation nach einem der Ansprüche 19 bis 20, umfassend:
einen Empfänger, der konfiguriert ist zum: bevor der Prozessor die Steuerinformationen für die UE konfiguriert, Empfangen einer von einer Mobilitätsverwaltungseinheit (Mobile Management Entity, MME) gesendeten Typanzeige, wobei die voreingestellte Typanzeige verwendet wird, um mindestens eine der folgenden Anzeigen anzuzeigen: ein Endgerätetyp ist ein voreingestellter Endgerätetyp, und ein Diensttyp ist ein voreingestellter Diensttyp; wobei der Prozessor (103) außerdem konfiguriert ist zum Konfigurieren der Steuerinformationen für die UE, die der voreingestellten Typanzeige entsprechen.

22. Basisstation nach einem der Ansprüche 19 bis 20, wobei die für die UE konfigurierten Steuerinformationen Konfigurationsinformationen von mindestens einer aus einer UE-Ebene, einer Logikkanalebene und einer Logikkanalgruppenebene sind.

23. Basisstation nach Anspruch 22, wobei der Sender (101) außerdem konfiguriert sein kann zum:
wenn die Steuerinformationen Steuerinformationen auf der UE-Ebene sind, Senden einer RRC-Verbindungsneukonfigurationsnachricht, in der die Steuerinformationen in ein Konfigurationsinformationselement einer Zeitabfolgeanordnungsanfrage eingebettet sind.

24. Basisstation nach einem der Ansprüche 19 bis 20, wobei die für die UE konfigurierten Steuerinformationen mindestens eine aus einem geplanten Zeitpunkt und einer Anzeige zum Verringern einer Verarbeitungshäufigkeit der Anfrage für eine Uplink-Autorisierungsressource umfassen.

## Revendications

1. Procédé de commande d'une requête de ressource d'attribution de liaison montante, le procédé étant **caractérisé en ce qu'**il comprend les étapes suivantes :
acquisition (11), par un équipement utilisateur, dit UE, d'informations de commande, les informations de commande servant à donner pour instruction de réduire un nombre de traitements d'une requête de ressource d'attribution de liaison montante, et la requête de ressource d'attribution de liaison montante constituant une requête de ressource d'attribution de liaison montante qui est mise en oeuvre par envoi d'une requête d'ordonnancement, dite SR, et les informations de commande comportant un temps ordonnancé ; et
déclenchement, par l'UE, d'un temporisateur selon le temps ordonnancé, lorsque l'UE détermine que l'UE possède des données de liaison montante à transmettre, ou lorsque l'UE détermine qu'un canal logique de l'UE possède des données de liaison montante à transmettre,
le canal logique constituant un canal logique configuré à l'aide des informations de commande ou un canal logique dans un groupe de canaux logiques configuré à l'aide des informations de commande ; et
lorsque le temporisateur arrive à échéance, lancement de la requête de ressource d'attribution de liaison montante, ou, lorsque le temporisateur n'arrive pas à échéance, omission du lancement de la requête de ressource d'attribution de liaison montante.

2. Procédé selon la revendication 1, dans lequel
l'étape de lancement de la requête de ressource d'attribution de liaison montante fait partie d'une procédure d'un processus de traitement de rapport d'état de tampon, dit BSR.

3. Procédé selon l'une des revendications 1 à 2, dans lequel
les informations de commande constituent :
des informations de commande configurées pour le niveau d'UE, ou
des informations de commande configurées pour un niveau de canal logique de l'UE, ou
des informations de commande configurées pour un niveau de groupe de canaux logiques de l'UE, ou
les informations de commande acquises par l'UE, au niveau de canal logique à partir d'un élément d'informations de configuration de canal logique dans le message de reconfiguration de connexion RRC envoyé par la station de base.

4. Procédé selon l'une des revendications 1 à 2, dans lequel
les informations de commande constituent : un temps ordonnancé et/ou une indication de réduire un nombre de traitements de la requête de ressource d'attribution de liaison montante.

5. Procédé selon l'une quelconque des revendications 1 à 2, dans lequel l'étape d'acquisition, par l'UE, d'informations de commande comprend les étapes suivantes : réception, par l'UE, d'un message de reconfiguration de connexion de commande des ressources radio, dite RRC, en provenance de la station de base, et acquisition des informations de commande à partir du message de reconfiguration de connexion RRC.

6. Procédé selon la revendication 5, dans lequel les étapes de réception, par l'UE, d'un message de reconfiguration de connexion de commande des ressources radio, dite RRC, en provenance de la station de base, et d'acquisition des informations de commande à partir du message de reconfiguration de connexion RRC comprend les étapes suivantes :
envoi, par l'UE, d'un message de requête de connexion RRC ou d'un message d'achèvement d'établissement de connexion RRC à la station de base, le message de requête de connexion RRC ou le message d'achèvement d'établissement de connexion RRC véhiculant une indication de type préétabli ; et réception, par l'UE, du message de reconfiguration de connexion RRC envoyé par la station de base, et acquisition des informations de commande à partir du message de reconfiguration de connexion RRC, les informations de commande constituant des informations de commande correspondant à l'indication de type préétabli, et l'indication de type préétabli servant à indiquer : qu'un type de terminal est un type de terminal préétabli et/ou qu'un type de service est un type de service préétabli.

7. Procédé de commande d'une requête de ressource d'attribution de liaison montante, le procédé étant **caractérisé en ce qu'**il comprend les étapes suivantes :
configuration (21), par une station de base, d'informations de commande pour un équipement utilisateur, dit UE, les informations de commande servant à donner pour instruction de réduire un nombre de traitements d'une requête de ressource d'attribution de liaison montante, et la requête de ressource d'attribution de liaison montante comportant une requête de ressource d'attribution de liaison montante qui est mise en oeuvre par envoi d'une requête d'ordonnancement, dite SR, et les informations de commande comportant un temps ordonnancé ; et
envoi, par la station de base, des informations de commande à l'UE de sorte que l'UE déclenche un temporisateur selon le temps ordonnancé, lorsque l'UE détermine que l'UE possède des données de liaison montante à transmettre, ou lorsque l'UE détermine qu'un canal logique de l'UE possède des données de liaison montante à transmettre,
le canal logique constituant un canal logique configuré à l'aide des informations de commande ou un canal logique dans un groupe de canaux logiques configuré à l'aide des informations de commande ; et
lorsque le temporisateur arrive à échéance, l'UE lance la requête de ressource d'attribution de liaison montante, ou, lorsque le temporisateur n'arrive pas à échéance, l'UE omet de lancer la requête de ressource d'attribution de liaison montante.

8. Procédé selon la revendication 7, dans lequel l'étape d'envoi, par la station de base, des informations de commande à l'UE comprend l'étape suivante :
envoi, par la station de base, d'un message de reconfiguration de connexion de commande des ressources radio, dite RRC, à l'UE, le message de reconfiguration de connexion RRC véhiculant les informations de commande.

9. Procédé selon l'une des revendications 7 à 8, le procédé comprenant en outre, préalablement à l'étape de configuration, par une station de base, d'informations de commande pour l'UE, l'étape suivante :
réception, par la station de base, d'une indication de type préétabli envoyée par une entité de gestion de la mobilité, dite MME, l'indication de type préétabli servant à indiquer : qu'un type de terminal est un type de terminal préétabli et/ou qu'un type de service est un type de service préétabli ; et
l'étape de configuration, par une station de base, d'informations de commande pour un UE comprenant l'étape suivante : configuration, par la station de base, pour l'UE, des informations de commande correspondant à l'indication de type préétabli.

10. Procédé selon l'une des revendications 7 à 8, dans lequel les informations de commande configurées par la station de base pour l'UE constituent des informations de configuration d'un niveau d'UE et/ou d'un niveau de canal logique et/ou d'un niveau de groupe de canaux logiques.

11. Procédé selon la revendication 10, dans lequel l'étape d'envoi, par la station de base, des informations de commande à l'UE, comprend l'étape suivante :
lorsque les informations de commande constituent des informations de commande au niveau d'UE, envoi, par la station de base à l'UE, d'un message de reconfiguration de connexion RRC dans lequel les informations de commande sont remplies dans un élément d'informations de configuration de requête d'agencement en séquence temporelle.

12. Procédé selon l'une quelconque des revendications 7 à 8, dans lequel les informations de commande configurées par la station de base pour l'UE constituent un temps ordonnancé et/ou une indication de réduire un nombre de traitements de la requête de ressource d'affectation de liaison montante.

13. Equipement utilisateur, l'équipement utilisateur étant **caractérisé en ce qu'**il comporte
une mémoire (91) et un processeur (92) relié à la mémoire, un groupe de code de programme étant enregistré dans la mémoire (91) et le processeur (92) étant configuré pour appeler le code de programme enregistré dans la mémoire (91) pour : acquérir des informations de commande, les informations de commande servant à donner pour instruction de réduire un nombre de traitements d'une requête de ressource d'attribution de liaison montante, et la requête de ressource d'attribution de liaison montante constituant une requête de ressource d'attribution de liaison montante qui est mise en oeuvre par envoi d'une requête d'ordonnancement, dite SR, et les informations de commande comportant un temps ordonnancé ; et
déclencher un temporisateur selon le temps ordonnancé, lorsqu'il est déterminé qu'il existe des données de liaison montante à transmettre, ou lorsqu'il est déterminé qu'un canal logique possède des données de liaison montante à transmettre, le canal logique constituant un canal logique configuré à l'aide des informations de commande ou un canal logique dans un groupe de canaux logiques configuré à l'aide des informations de commande ; et
lancer la requête de ressource d'attribution de liaison montante lorsque le temporisateur arrive à échéance, ou omettre de lancer la requête de ressource d'attribution de liaison montante lorsque le temporisateur n'arrive pas à échéance.

14. Equipement utilisateur selon la revendication 13, dans lequel le lancement de la requête de ressource d'attribution de liaison montante fait partie d'une procédure d'un processus de traitement de rapport d'état de tampon (rapport d'état de tampon, dit BSR).

15. Equipement utilisateur selon l'une des revendications 13 à 14, dans lequel les informations de commande constituent :
des informations de commande configurées pour le niveau d'UE, ou
des informations de commande configurées pour un niveau de canal logique de l'UE, ou
des informations de commande configurées pour un niveau de groupe de canaux logiques de l'UE, ou
les informations de commande acquises au niveau de canal logique à partir d'un élément d'informations de configuration de canal logique dans le message de reconfiguration de connexion RRC envoyé par la station de base.

16. Equipement utilisateur selon l'une des revendications 13 à 14, dans lequel les informations de commande constituent : un temps ordonnancé et/ou une indication de réduire un nombre de traitements de la requête de ressource d'attribution de liaison montante.

17. Equipement utilisateur selon l'une quelconque des revendications 13 à 14, dans lequel le processeur (92) est configuré pour acquérir des informations de commande comprend :
le processeur (92) est configuré pour recevoir un message de reconfiguration de connexion de commande des ressources radio, dite RRC, en provenance de la station de base, et acquérir les informations de commande à partir du message de reconfiguration de connexion RRC.

18. Equipement utilisateur selon la revendication 17, comprenant :
une émetteur, configuré pour envoyer un message de requête de connexion RRC ou un message d'achèvement d'établissement de connexion RRC à la station de base, le message de requête de connexion RRC ou le message d'achèvement d'établissement de connexion RRC véhiculant une indication de type préétabli ; et recevoir le message de reconfiguration de connexion RRC envoyé par la station de base, et acquérir les informations de commande à partir du message de reconfiguration de connexion RRC, les informations de commande constituant des informations de commande correspondant à l'indication de type préétabli, et l'indication de type préétabli servant à indiquer : qu'un type de terminal est un type de terminal préétabli et/ou qu'un type de service est un type de service préétabli.

19. Station de base, **caractérisée en ce qu'**elle comprend : un émetteur (101), une mémoire (102) et un processeur (103) relié à la mémoire (102), un groupe de code de programme étant enregistré dans la mémoire (102) et le processeur (103) étant configuré pour appeler le code de programme enregistré dans la mémoire (102) pour
configurer des informations de commande pour un équipement utilisateur, dit UE, les informations de commande servant à donner pour instruction de réduire un nombre de traitements d'une requête de ressource d'attribution de liaison montante, et la requête de ressource d'attribution de liaison montante comportant une requête de ressource d'attribution de liaison montante qui est mise en oeuvre par envoi d'une requête d'ordonnancement, dite SR ; et
l'émetteur (101) est configuré pour envoyer les informations de commande à l'UE de sorte que l'UE déclenche un temporisateur selon le temps ordonnancé, lorsque l'UE détermine que l'UE possède des données de liaison montante à transmettre, ou lorsque l'UE détermine qu'un canal logique de l'UE possède des données de liaison montante à transmettre,
le canal logique constituant un canal logique configuré à l'aide des informations de commande ou un canal logique dans un groupe de canaux logiques configuré à l'aide des informations de commande ; et
lorsque le temporisateur arrive à échéance, l'UE lance la requête de ressource d'attribution de liaison montante, ou, lorsque le temporisateur n'arrive pas à échéance, l'UE omet de lancer la requête de ressource d'attribution de liaison montante.

20. Station de base selon la revendication 19, dans laquelle l'émetteur (101) est configuré en outre pour envoyer les informations de commande à l'UE comprend :
l'émetteur est configuré en outre pour envoyer un message de reconfiguration de connexion de commande des ressources radio, dite RRC, à l'UE, le message de reconfiguration de connexion RRC véhiculant les informations de commande.

21. Station de base selon l'une des revendications 19 à 20, comprenant :
un récepteur, configuré pour : avant que le processeur ne configure les informations de commande pour l'UE, recevoir une indication de type préétabli envoyée par une entité de gestion de la mobilité, dite MME, l'indication de type préétabli servant à indiquer : qu'un type de terminal est un type de terminal préétabli et/ou qu'un type de service est un type de service préétabli,
le processeur (103) étant configuré en outre pour configurer, pour l'UE, les informations de commande correspondant à l'indication de type préétabli.

22. Station de base selon l'une des revendications 19 à 20, dans laquelle les informations de commande configurées pour l'UE constituent des informations de configuration d'un niveau d'UE et/ou d'un niveau de canal logique et/ou d'un niveau de groupe de canaux logiques.

23. Station de base selon la revendication 22, l'émetteur (101) pouvant être configuré en outre pour :
envoyer un message de reconfiguration de connexion RRC dans lequel les informations de commande sont remplies dans un élément d'informations de configuration de requête d'agencement en séquence temporelle, lorsque les informations de commande constituent des informations de commande au niveau d'UE.

24. Station de base selon l'une quelconque des revendications 19 à 20, dans laquelle les informations de commande configurées pour l'UE constituent un temps ordonnancé et/ou une indication de réduire un nombre de traitements de la requête de ressource d'affectation de liaison montante.
